# EUROPÄISCHE PATENTSCHRIFT

(11) **EP 1 420 057 B1**
(45) Veröffentlichungstag und Bekanntmachung des Hinweises auf die Patenterteilung: **16.05.2007**
(21) Anmeldenummer: 03021623.8
(22) Anmeldetag: 25.09.2003
(51) Int. Cl.: C09K 19/42, C09K 19/30

(54) **Flüssigkristallines Medium**
Liquid crystalline medium
Milieu liquide cristallin

(30) Priorität: 30.09.2002 DE 10245849
(43) Veröffentlichungstag der Anmeldung: 19.05.2004
(73) Patentinhaber: Merck Patent GmbH, 64293 Darmstadt (DE)
(72) Erfinder: Heckmeier, Michael, Dr., 69502 Hemsbach (DE); Schoen, Sabine, Dr., 45701 Herten (DE); Kirsch, Peer, Dr., 64342 Seeheim-Jugenheim (DE)

(56) Entgegenhaltungen:
- EP-A- 0 949 232
- EP-A- 1 043 299
- EP-A- 1 046 694
- EP-A- 1 081 123
- EP-A- 1 096 001
- EP-A- 1 335 014
- WO-A-01/46336
- DE-A- 10 124 480
- DE-A- 10 151 300
- DE-A- 19 531 165

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)
- kleine optische Doppelbrechung (Δn) für reflektive Anzeigen

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr niedrige Schwellenspannungen und gleichzeitig hohe Werte für die Voltage Holding Ratio (VHR) aufweisen.

Es wurde nun gefunden, dass diese Aufgabe gelöst werden kann, wenn man in Anzeigen erfindungsgemässe Medien verwendet.

Gegenstand der Erfindung ist somit ein flüssigkristallines Medium auf der Basis eines Gemisches von polaren Verbindungen mit positiver dielektrischer Anisotropie, dadurch gekennzeichnet, dass es eine oder mehrere Verbindungen der Formel I, 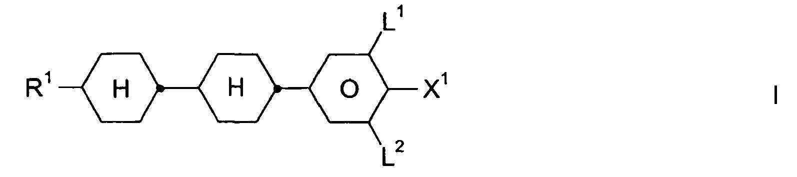 eine oder mehrere Verbindungen der Formel IA, 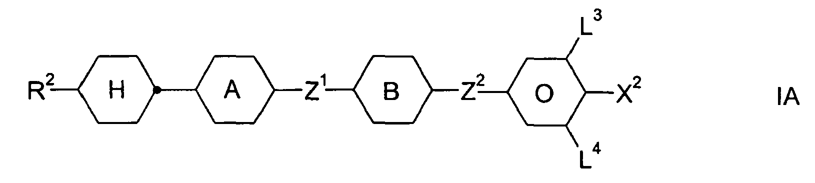 worin die einzelnen Reste folgende Bedeutungen besitzen:
- R¹ und R²: jeweils unabhängig voneinander H, einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -O-, 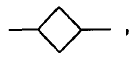 -CO-O- oder -O-CO- so ersetzt sein können, dass O-Atome nicht direkt miteinander verknüpft sind,
- X¹: CN, SF₅, SCN, NCS, OCN, halogenierter Alkylrest, halogenierter Alkenylrest, halogenierter Alkoxyrest oder halogenierter Alkenyloxyrest mit jeweils bis zu 6 C-Atomen,
- X²: jeweils unabhängig voneinander F, Cl, CN, SF₅, SCN, NCS, OCN, halogenierter Alkylrest, halogenierter Alkenylrest, halogenierter Alkoxyrest oder halogenierter Alkenyloxyrest mit jeweils bis zu 6 C-Atomen,
- Z¹ und Z²: jeweils unabhängig voneinander -CF₂O-, -OCF₂- oder eine Einfachbindung, wobei Z¹ ≠ Z² ist, 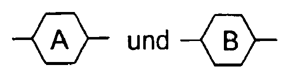 jeweils unabhängig voneinander 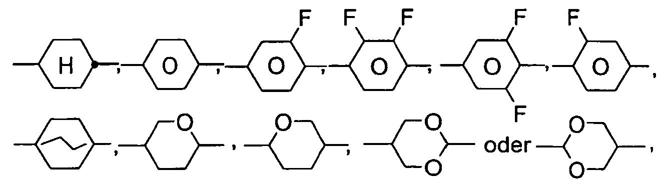
- L¹⁻⁴: jeweils unabhängig voneinander H oder F,
und
eine oder mehrere Verbindungen ausgewählt aus der Gruppe bestehend aus den allgemeinen Formeln II bis VI enthält, 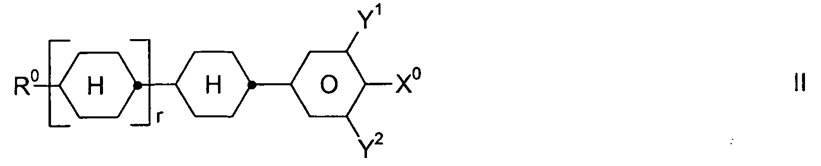 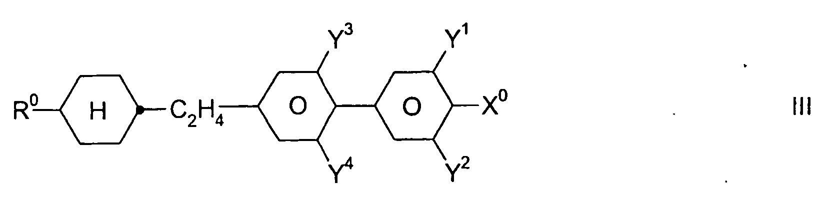 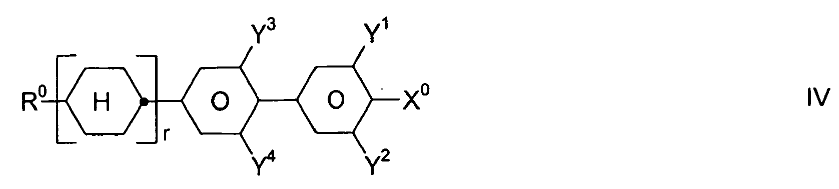 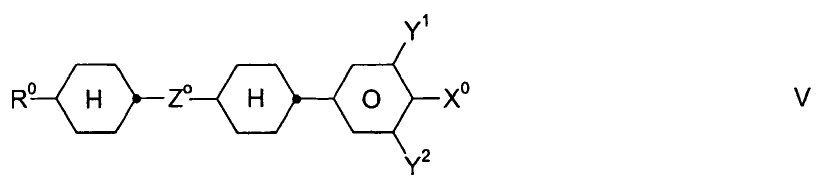 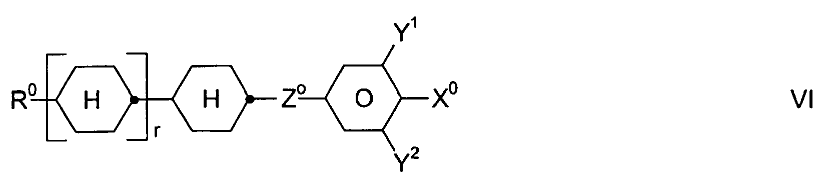 worin die einzelnen Reste die folgenden Bedeutungen haben:
- R⁰: n-Alkyl, Alkoxy, Oxaalkyl, Fluoralkyl oder Alkenyl mit jeweils bis zu 9 C-Atomen,
- X⁰: F, Cl, halogeniertes Alkyl, Alkenyl, Alkenyloxy oder Alkoxy mit bis zu 6 C-Atomen,
- Z⁰: -C₂F₄-, -CF=CF-, -CH=CF-, -CF=CH-, -C₂H₄-, -(CH₂)₄-, -CF₂O-, -OCF₂-, -OCH₂- oder -CH₂O-,
- Y¹ und Y²: jeweils unabhängig voneinander H oder F,
- r: 0 oder 1,
wobei die Verbindung der Formel II nicht mit der Formel I identisch ist, und dass der Anteil an Verbindungen der Formeln IA und I bis VI zusammen im Gesamtgemisch mindestens 50 Gew.% beträgt.

Die Verbindungen der Formeln I und IA besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I und IA flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren. Das erfindungsgemäße Mischungskonzept führt zu Mischungen, die sich gegenüber dem Stand der Technik durch ihre sehr gute Reliability und ihr Vₜₕ/γ₁-Verhältnis, insbesondere bei 2,5 V- und 3,3 V-Mischungen, auszeichnen.

Die Verbindungen der Formeln I und IA sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R¹ und/oder R² einen Alkylrest und/oder einen Alkoxyrest bedeuten, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2-(= Ethoxymethyl) oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxyoctyl, 2-, 3-, 4-, 5-, 6-, 7- oder 8-Oxanonyl, 2-, 3-, -4-, 5-, 6-, 7-, 8- oder 9-Oxadexyl.

Falls R¹ und/oder R² einen Alkylrest bedeuten, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R¹ und/oder R² einen Alkylrest bedeuten, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxycarbonyl)-propyl oder 4-(Methoxycarbonyl)-butyl.

Falls R¹ und/oder R² einen Alkylrest bedeuten, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyloxyethyl, 3-Acryloyloxypropyl, 4-Acryoyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl, 8-Methacryloyloxyoctyl, 9-Methacryloyloxynonyl.

Falls R¹ und/oder R² einen einfach durch CN oder CF₃ substituerten Alkyl- oder Alkenylrest bedeuten, so ist dieser Rest vorzugsweise geradkettig.
Die Substitution durch CN oder CF₃ ist in beliebiger Position.

Falls R¹ und/oder R² einen mindestens einfach durch Halogen substituierten Alkyl- oder Alkenylrest bedeuten, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R¹ und/oder R² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹ und/oder R² einen Alkylrest darstellen, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy-carbonyl)-pentyl, 6,6-Bis-(methoxycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-pentyl.

Die Verbindungen der Formeln I und IA werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel IA sind z. B. aus der EP 1 046 693 A1 und EP 1 046 694 A1 bekannt. Die Verbindungen der Formel I sind beispielsweise beschrieben in EP 0 334 911 B1.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Das Dokument EP 1 335 014 A1 offenbart, ähnlich wie die vorliegende Erfindung, flüssigkristalline Medien auf der Basis eines Gemisches von polaren Verbindungen mit positiver elektrischer Anisotropie für die Anwendung in elektrooptischen Anzeigen.

Gegenüber den aus der EP 1 046 693 A1 offenbarten Mischungen besitzen die erfindungsgemäßen Mischungen einen höheren Klärpunkt, niedrige γ₁-Werte und sehr hohe Werte für die VHR bei 100 °C. Die erfindungsgemäßen Mischungen sind bevorzugt als TN-TFT-Mischungen für Note-PC-Anwendungen mit 3,3 und 2,5 V-Treibern geeignet.

Die erfindungsgemäßen Flüssigkristallmischungen ermöglichen es bei Beibehaltung der nematischen Phase bis -30 °C, besonders bevorzugt bis -40 °C, Klärpunkt oberhalb 70 °C, vorzugsweise oberhalb 75 °C, besonders bevorzugt oberhalb 80 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb 1,8 V, vorzugsweise unterhalb 1,5 V, besonders bevorzugt < 1,3 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität V₂₀ bei 20 °C ist vorzugsweise < 60 mm²·s⁻¹, besonders bevorzugt < 50 mm²·s⁻¹. Die Rotationsviskosität γ¹ der erfindungsgemäßen Mischungen bei 20 °C ist vorzugsweise < 140 mPa·s, besonders bevorzugt < 120 mPa·s. Der nematische Phasenbereich ist vorzugsweise mindestens 100°, insbesondere mindestens 110°. Vorzugsweise erstreckt sich dieser Bereich mindestens von -40° bis +80° C.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 16 ms benötigt. Die Obergrenze der Schaltzeit wird durch die Bildwiederholfrequenz bestimmt.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I und IA eine deutlich kleinere Abnahme des HR mit steigender Temperatur aufweisen als analoge Mischungen enthaltend anstelle den Verbindungen der Formel IA Cyanophenylcyclohexane der Formel 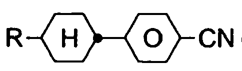 oder Ester der Formel

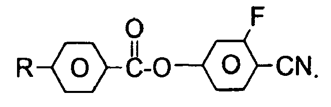

Auch die UV-Stabilität der erfindungsgemäßen Mischungen ist erheblich besser, d.h. sie zeigen eine deutlich kleinere Abnahme des HR unter UV-Belastung.

Formel I umfasst vorzugsweise Verbindungen der Formeln I-1 bis I-15 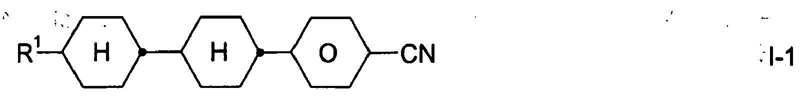 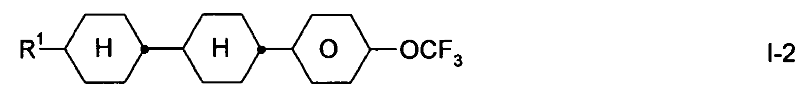 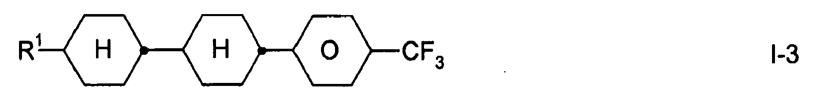 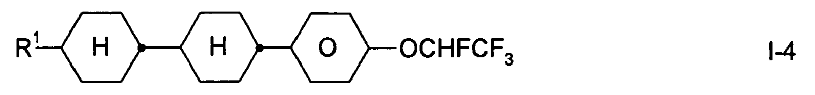 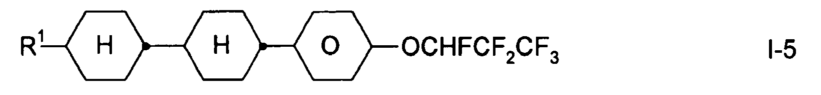 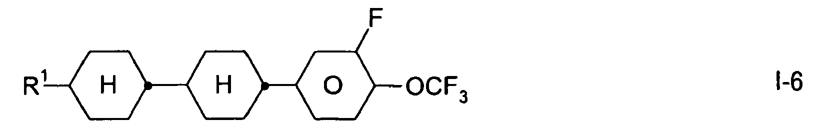 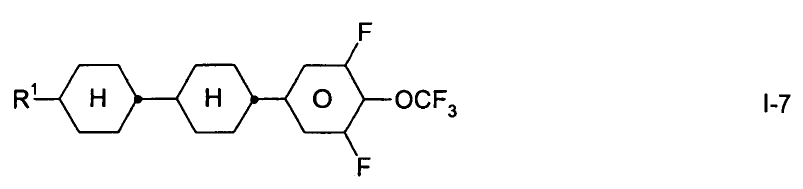 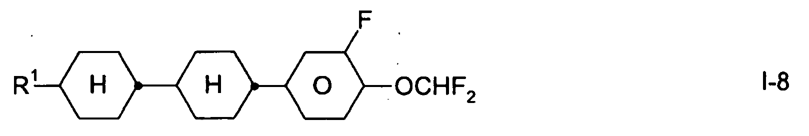 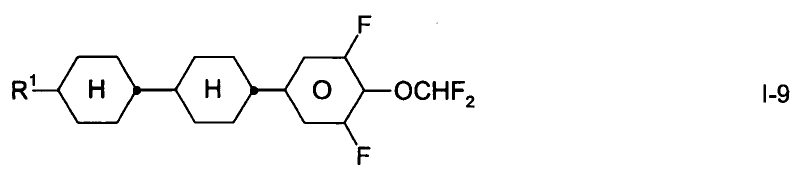 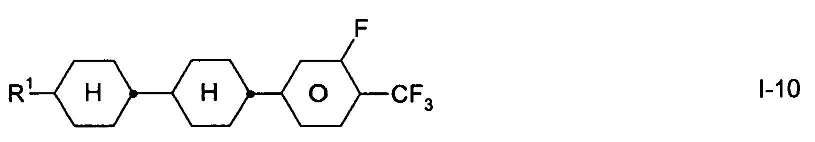 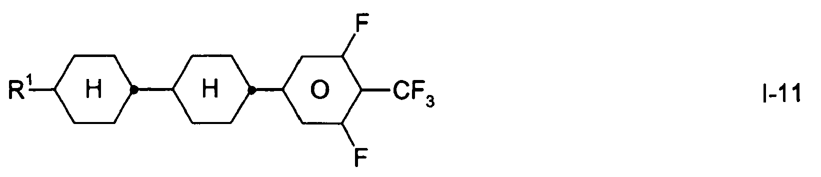 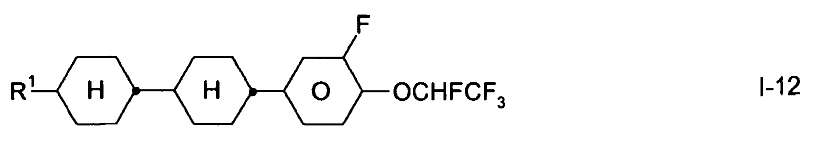 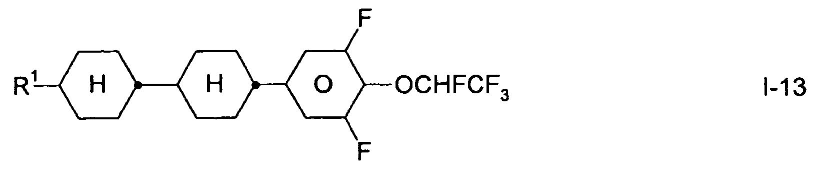 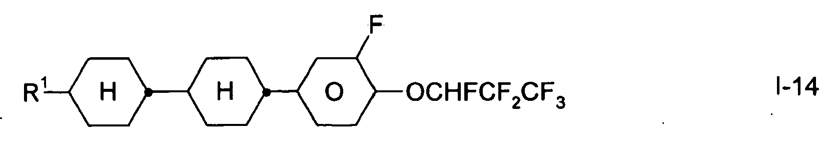 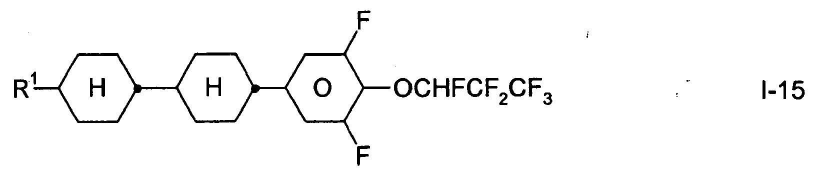 worin R¹ die in Anspruch 1 angegebenen Bedeutungen besitzt. Vorzugsweise bedeutet R¹ H, CH₃, C₂H₅, n-C₃H₇, n-C₄H₉, n-C₅H₁₁, n-C₆H₁₃, CH₂=CH, CH₃CH=CH, CH₃CH=CHCH₂CH₂ oder CH₂=CHCH₂CH₂.

Bevorzugt sind erfindungsgemäße Medien, die wenigstens eine Verbindung der Formel I-2, I-6, I-7 und/oder I-9 besonders bevorzugt jeweils wenigstens eine Verbindung der Formel I-2, enthalten.

Besonders bevorzugte Verbindungen der Formel IA sind Verbindungen der Formeln IA-1 bis IA-24: 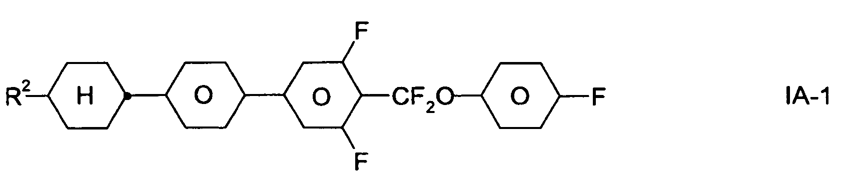 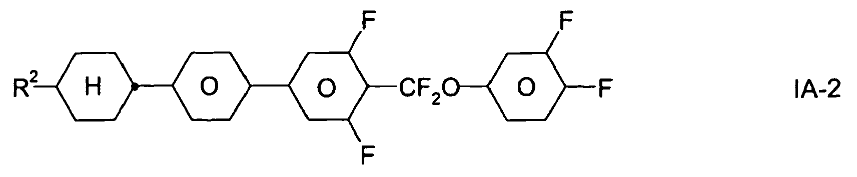 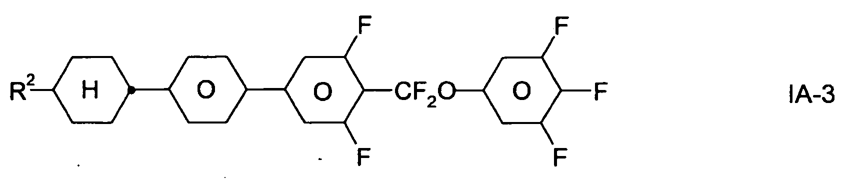 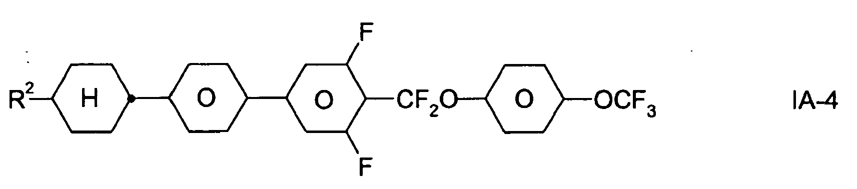 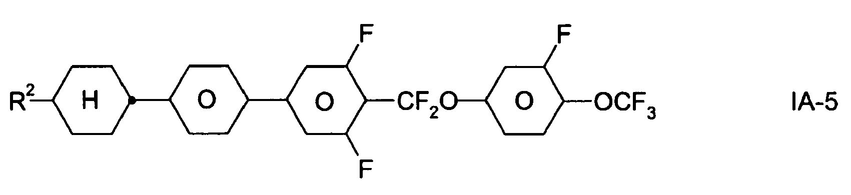 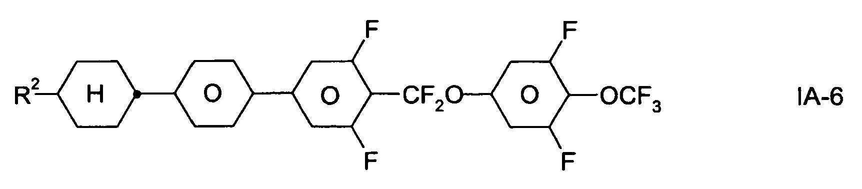 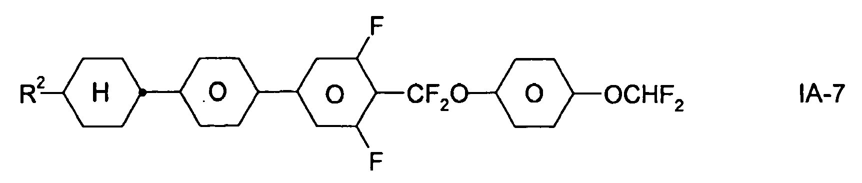 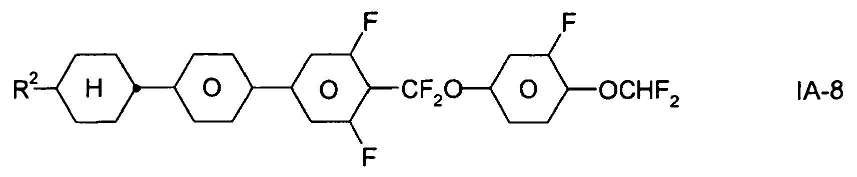 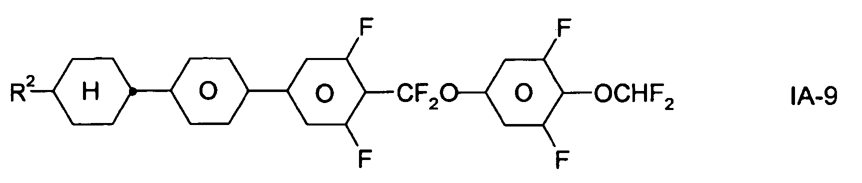 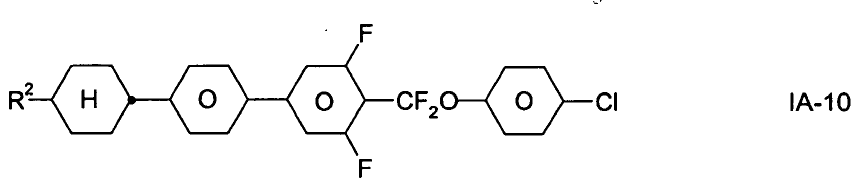 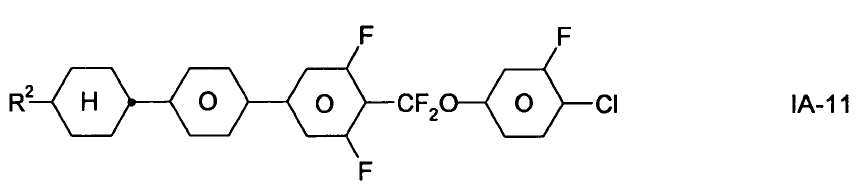 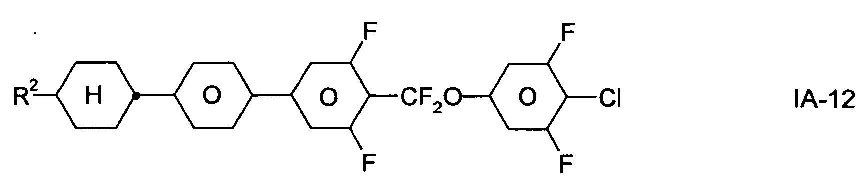 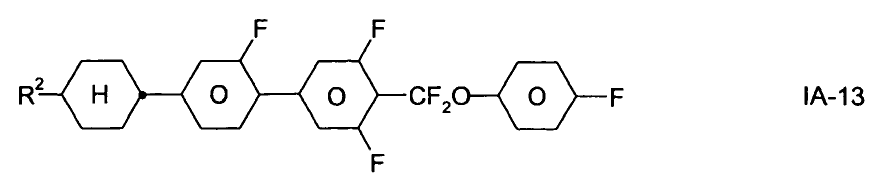 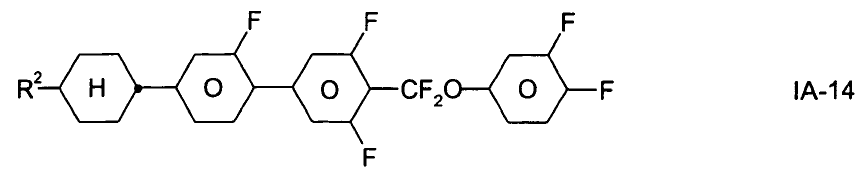 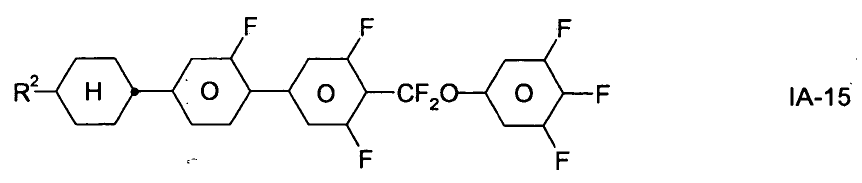 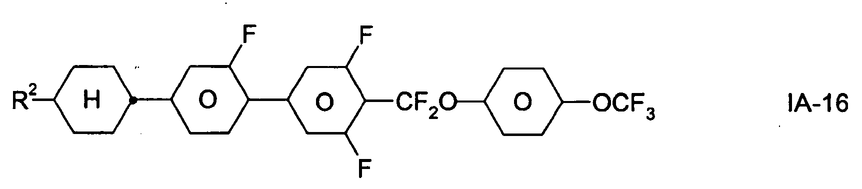 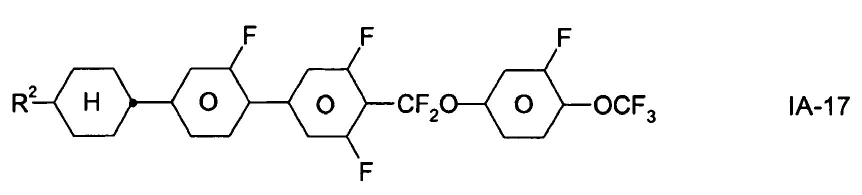 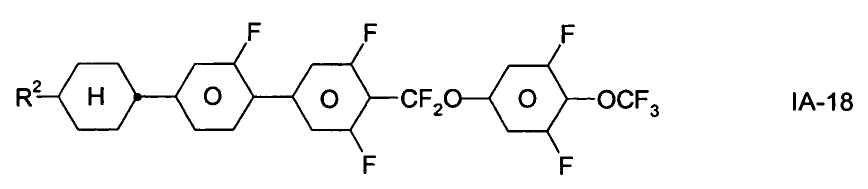 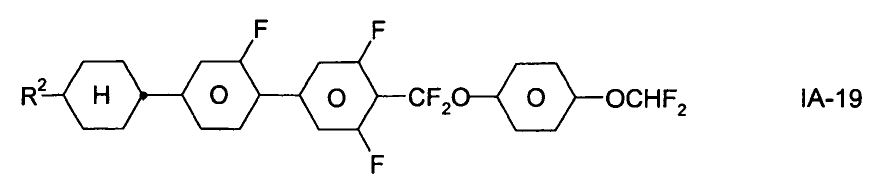 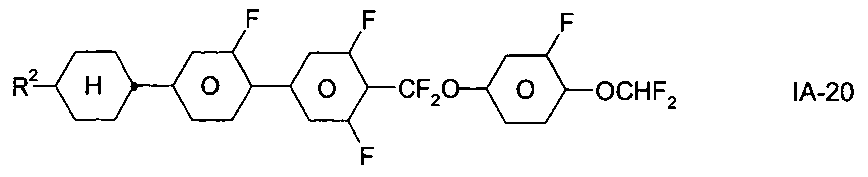 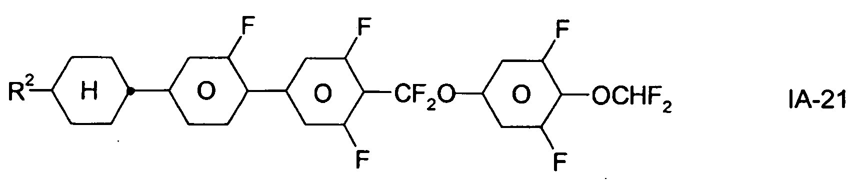 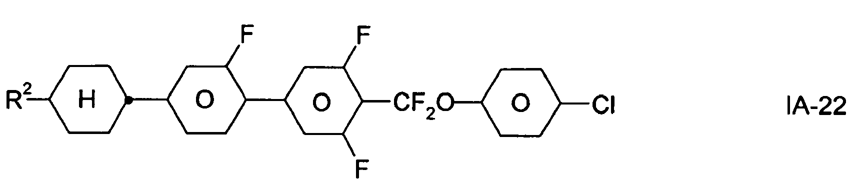 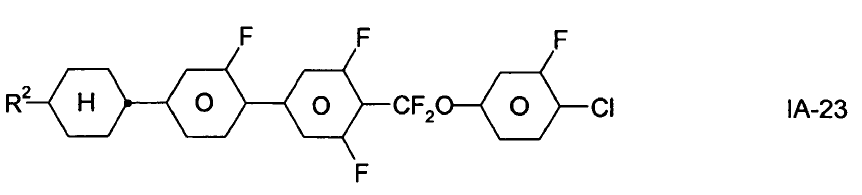 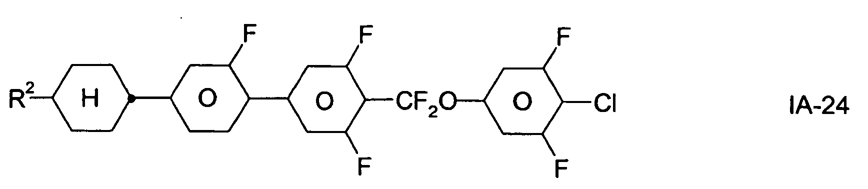 worin R² die oben angegebenen Bedeutungen hat.

Von diesen bevorzugten Verbindungen sind besonders bevorzugt solche der Formeln IA-2, IA-3, IA-5, IA-6 und IA-14, IA-15 und IA-18, insbesondere die der Formeln IA-3 und IA-15.

R² bedeutet vorzugsweise in den Verbindungen der Formeln IA und IA1 bis IA-24 H, geradkettiges Alkyl mit 1 bis 7 C-Atomen, insbesondere CH₃, C₂H₅, n-C₃H₇, n-C₄H₉, n-C₅H₁₁, n-C₆H₁₃, n-C₇H₁₅, ferner 1E- oder 3-Alkenyl, insbesondere CH₂=CH, CH₃CH=CH, CH₂=CHCH₂CH₂, CH₃CH=CH-CH₂CH₂.

Bevorzugte Ausführungsformen sind im folgenden angegeben:
- Das Medium enthält ein, zwei oder mehr Verbindungen ausgewählt aus der Gruppe der Formeln IA-1 bis IA-24;
- Das Medium enthält vorzugsweise jeweils eine oder mehrere, vorzugsweise zwei oder drei, Verbindungen (Homologen) der Formeln I-1 und IA-15;
- Das Medium enthält vorzugsweise jeweils eine oder mehrere, vorzugsweise zwei oder drei, Verbindungen (Homologen) der Formeln I-1 und IA-3;

Die Verbindung der Formel IV ist vorzugsweise 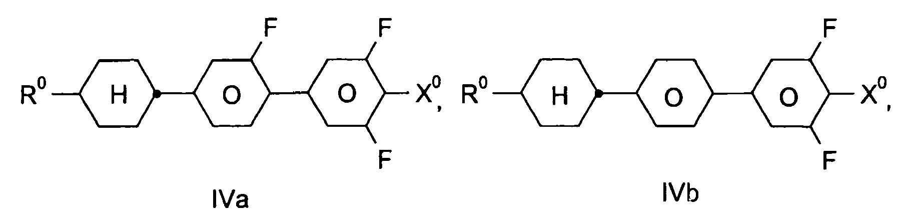 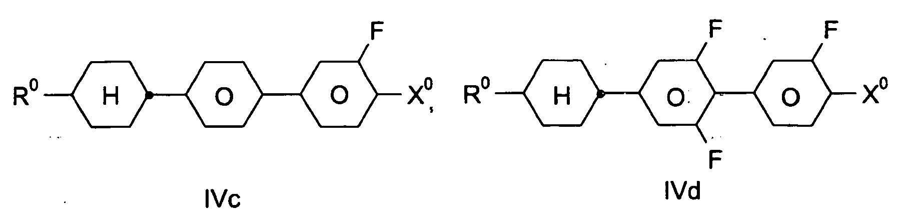 oder 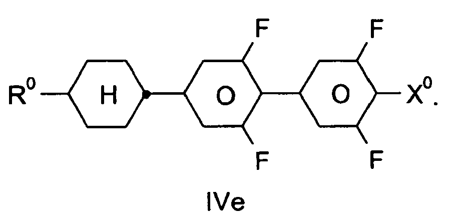
- Das Medium enthält zusätzlich eine oder mehrere Verbindungen ausgewählt aus der Gruppe bestehend aus den allgemeinen Formeln VII bis XIII: 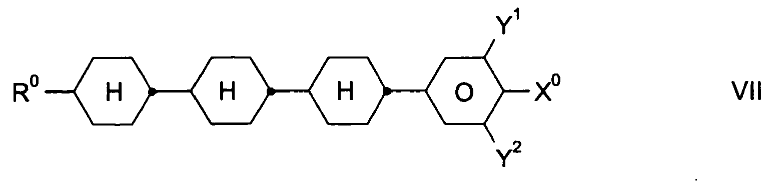 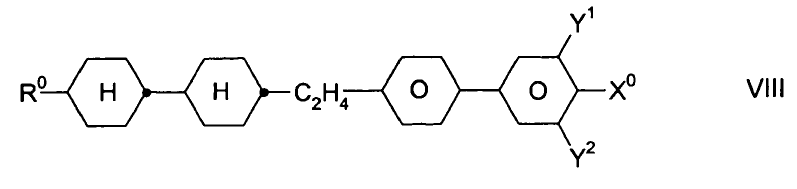 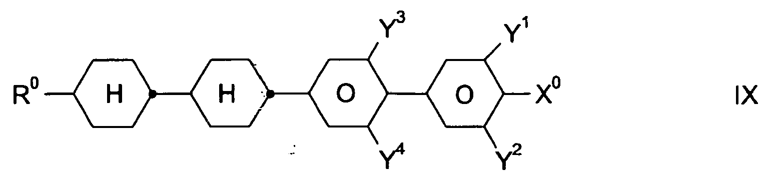 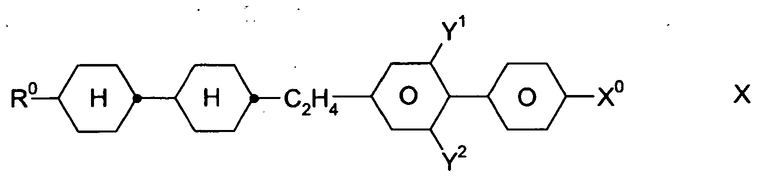 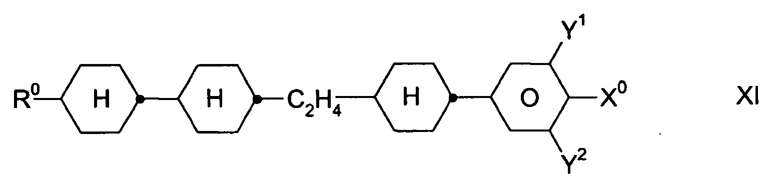 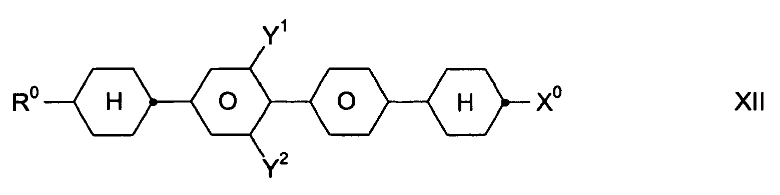 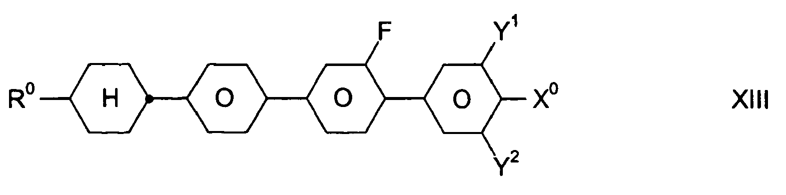 worin R⁰, X⁰, Y¹ und Y² jeweils unabhängig voneinander eine der in Anspruch 4 angegebenen Bedeutung haben. Y³ und Y⁴ bedeuten H oder F. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 6 C-Atomen.
- Das Medium enthält zusätzlich eine oder mehrere Ester-Verbindungen der Formeln Ea bis Ee, 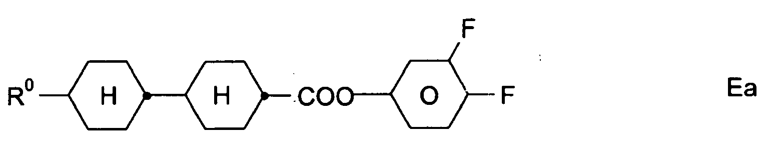 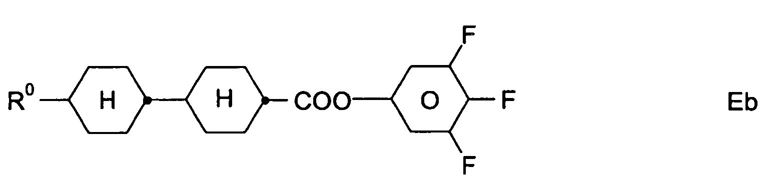 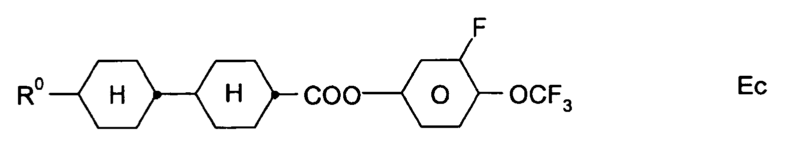 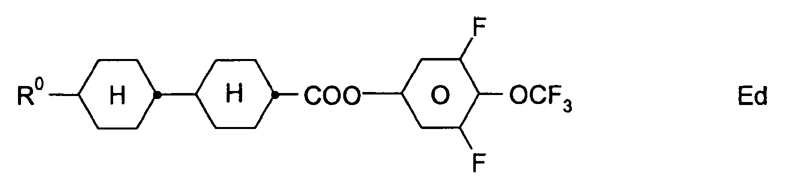 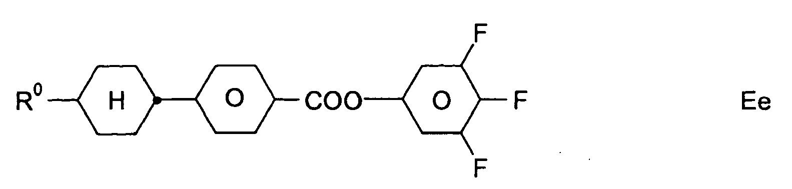 worin R⁰ die in Anspruch 4 angegebene Bedeutung hat;
- Der Anteil der Verbindung der Formeln Ea bis Ee ist vorzugsweise 10-30 Gew.%, insbesondere 15-25 Gew.%;
- Der Anteil an Verbindungen der Formel I beträgt im Gesamtgemisch 5 bis 40, besonders bevorzugt 10 bis 30 Gew.%;
- Der Anteil an Verbindungen der Formel IA beträgt im Gesamtgemisch 5 bis 40, besonders bevorzugt 10 bis 30 Gew.%;
- Der Anteil an Verbindungen der Formeln II bis VI im Gesamtgemisch beträgt 30 bis 80 Gew.%;
- 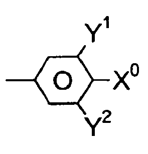 ist vorzugsweise 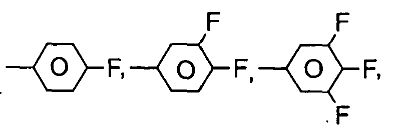 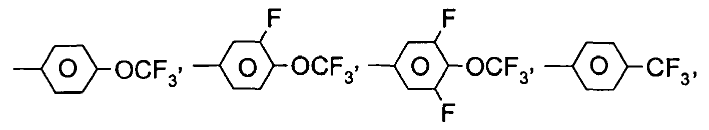 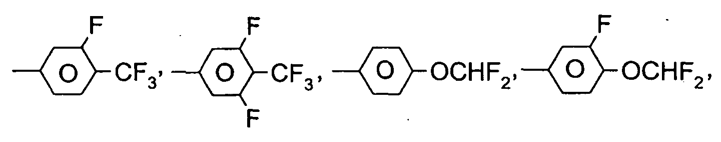 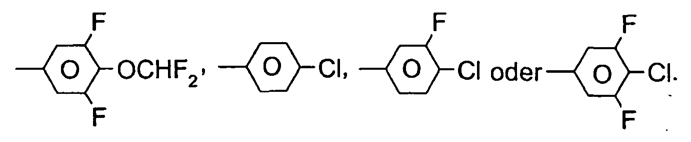
- Das Medium enthält Verbindungen der Formeln II, III, IV, V oder VI;
- R⁰ ist geradkettiges Alkyl oder Alkenyl mit 2 bis 7 C-Atomen;
- Das Medium besteht im wesentlichen aus Verbindungen der Formeln IA und , I bis VI;
- Das Medium enthält weitere Verbindungen, vorzugsweise ausgewählt aus der folgenden Gruppe bestehend aus den allgemeinen Formeln XIV bis XVII: 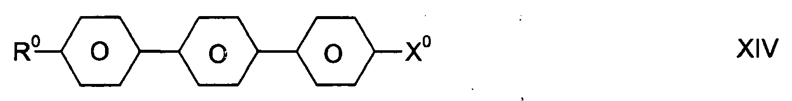 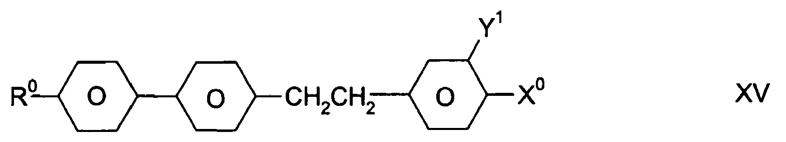 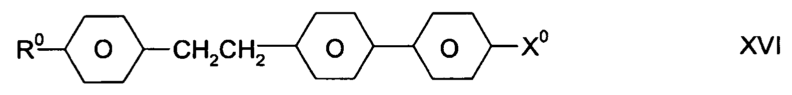 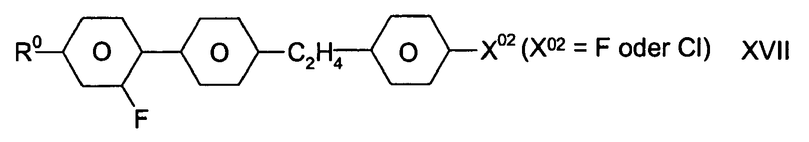 worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält zusätzlich ein oder mehrere Verbindungen der Formeln XVIII und/oder XIX, 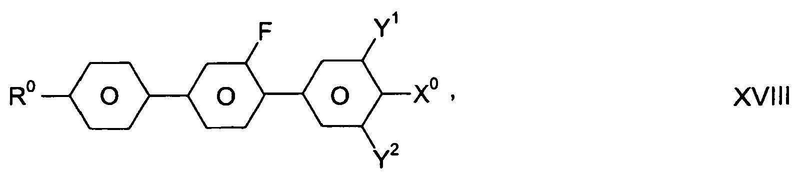 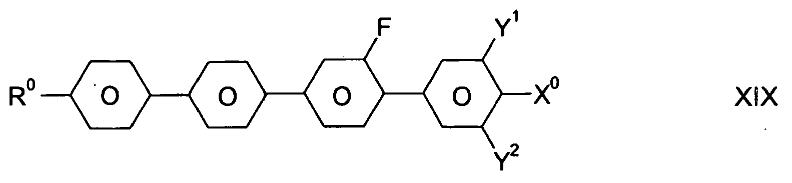 worin R⁰, X⁰, Y¹, Y² die oben angegebenen Bedeutungen haben.
- Das Medium enthält zusätzlich ein, zwei, drei oder mehr, vorzugsweise zwei oder drei, Verbindungen der Formel 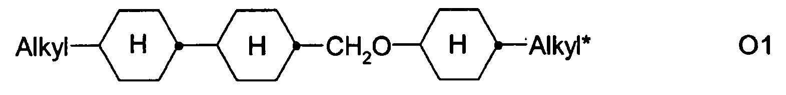 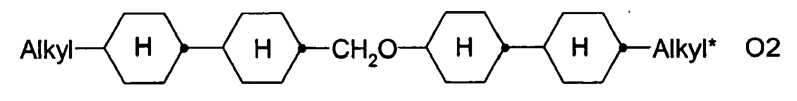 worin "Alkyl" und "Alkyl*" jeweils unabhängig voneinander ein geradkettiger oder verzweigter Alkylrest mit 1-9 C-Atomen bedeutet.
   Der Anteil der Verbindungen der Formeln O1 und/oder O2 in den erfindungsgemäßen Mischungen beträgt vorzugsweise 5-10 Gew.%.
- Das Medium enthält vorzugsweise 5-35 Gew.% der Verbindung IVa.
- Das Medium enthält vorzugsweise eine, zwei oder drei Verbindungen der Formel IVa, worin X⁰ F oder OCF₃ bedeutet.
- Das Medium enthält vorzugsweise ein oder mehrere Verbindungen der Formeln IIa bis IIg, 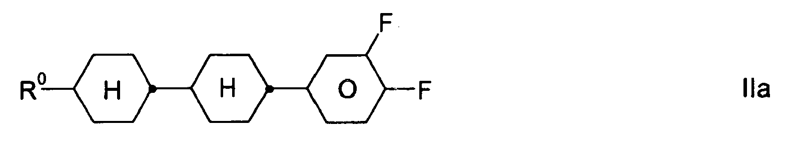 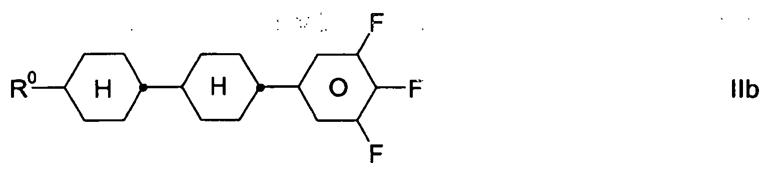 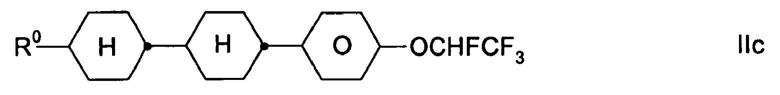 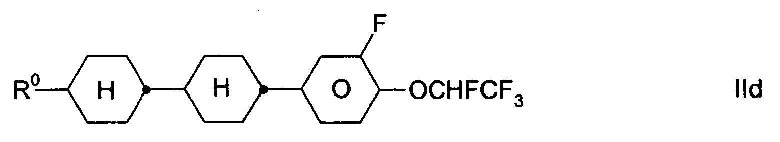 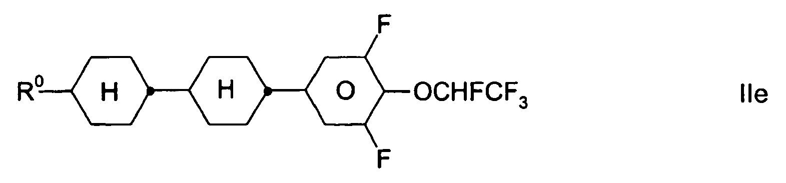 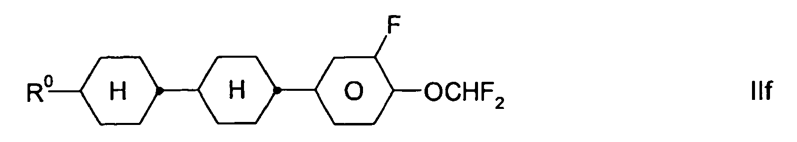 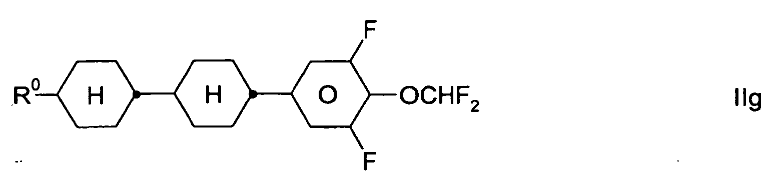 worin R⁰ die oben angegebenen Bedeutungen hat. In den Verbindungen der Formeln IIa-IIg bedeutet R⁰ vorzugsweise H, Methyl, Ethyl, n-Propyl, n-Butyl oder n-Pentyl, ferner n-Hexyl oder n-Heptyl.
- Das Gewichtsverhältnis (I + IA) : (II + III + IV + V + VI) ist vorzugsweise 1 : 10 bis 10 : 1.
- Das Medium besteht im wesentlichen aus Verbindungen ausgewählt aus der Gruppe bestehend aus den allgemeinen Formeln IA und I bis XIII.
- Der Anteil der Verbindungen der Formel IVb und/oder IVc, worin X⁰ Fluor und R⁰ C₂H₅, n-C₃H₇, n-C₄H₉ oder n-C₅H₁₁ bedeutet, beträgt im Gesamtgemisch 2 bis 20 Gew.%, insbesondere 2 bis 15 Gew.%;
- Das Medium enthält vorzugsweise ein, zwei oder drei, ferner vier, Homologe der Verbindungen ausgewählt aus der Gruppe H1 bis H19 (n = 1-12): 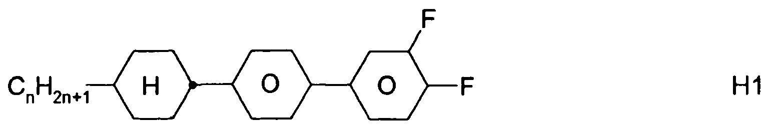 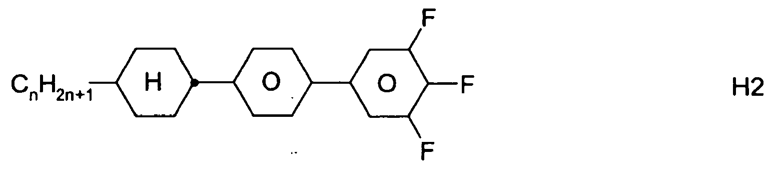 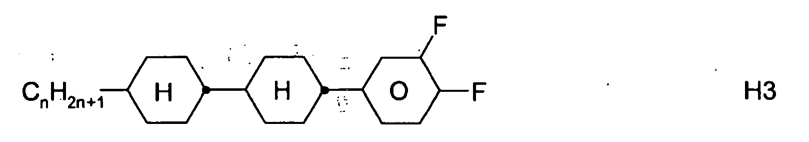 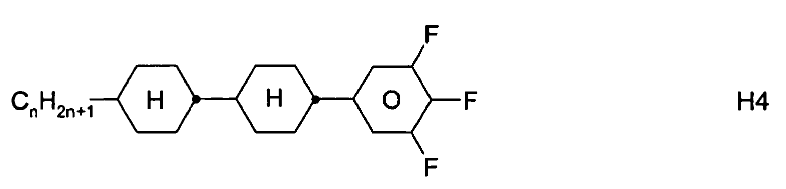 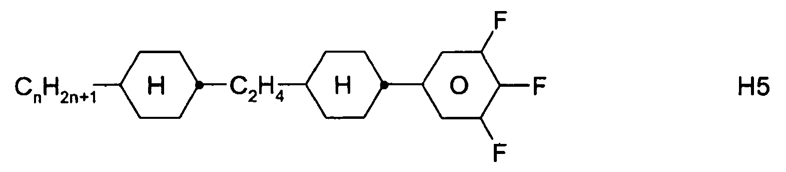 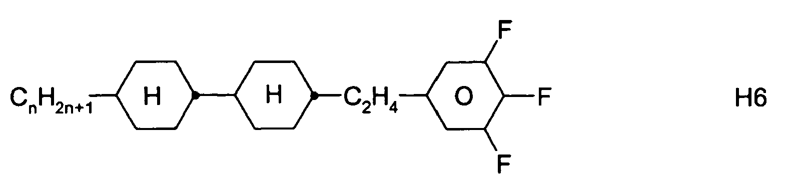 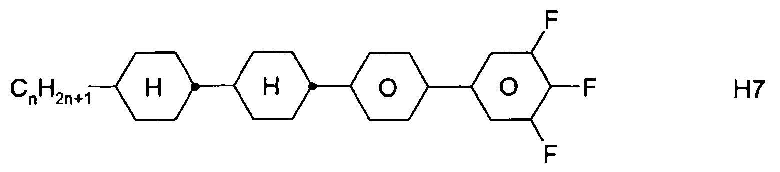 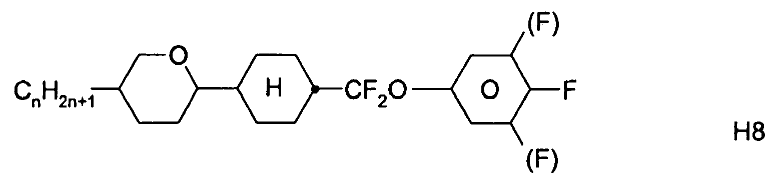 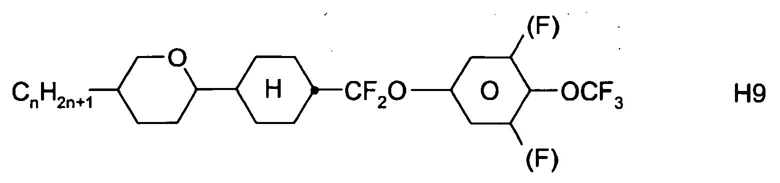 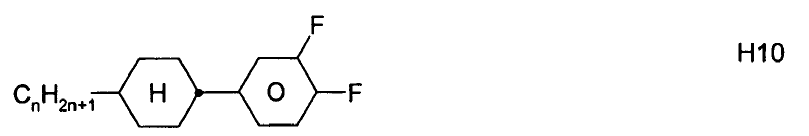 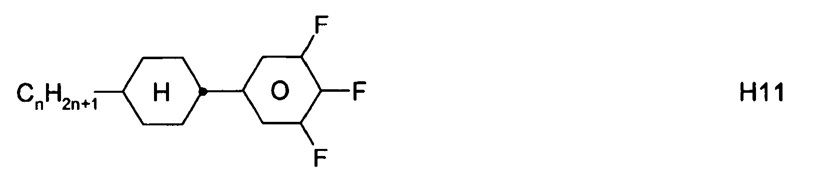 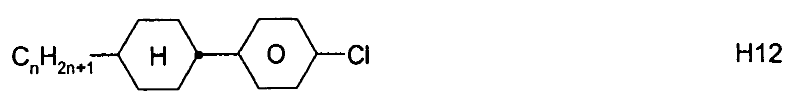 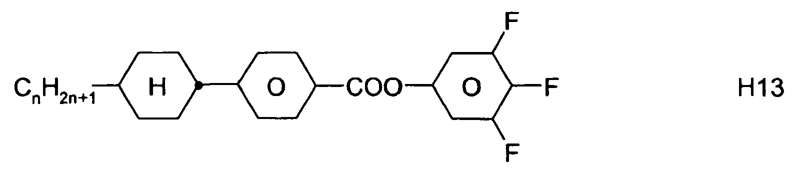 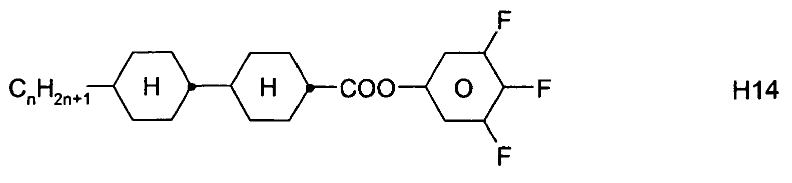 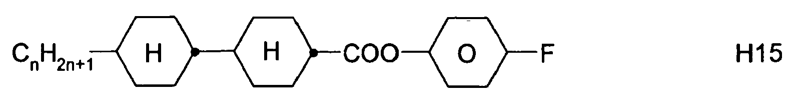 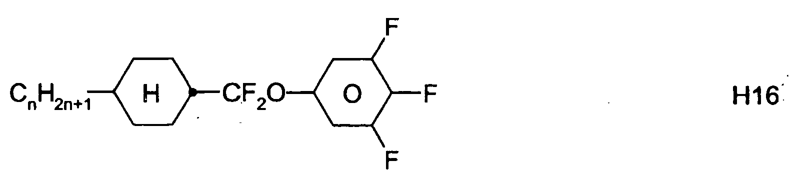 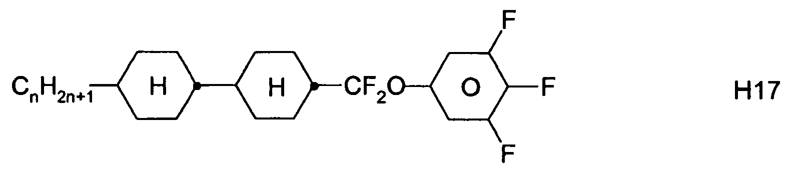 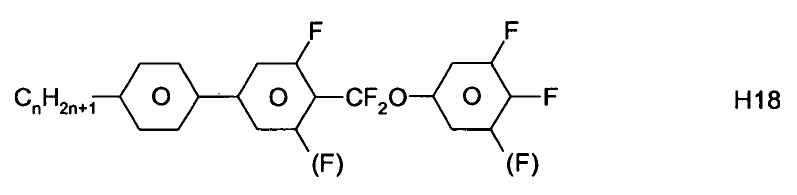 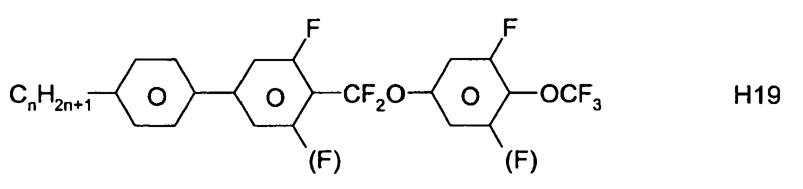
- Das Medium enthält vorzugsweise die Verbindung IIb, worin R⁰ Methyl bedeutet;
- Das Medium enthält weitere Verbindungen, vorzugsweise ausgewählt aus der folgenden Gruppe bestehend aus den Formeln RI bis RVIII, 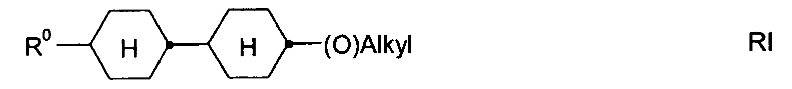 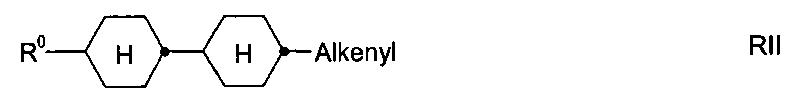 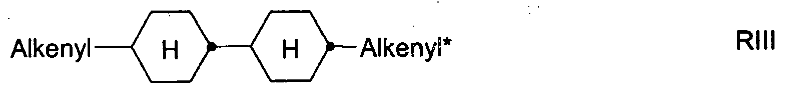 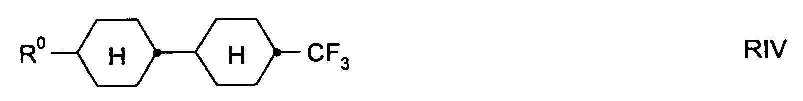 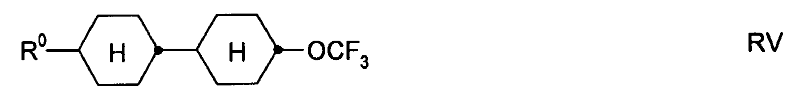 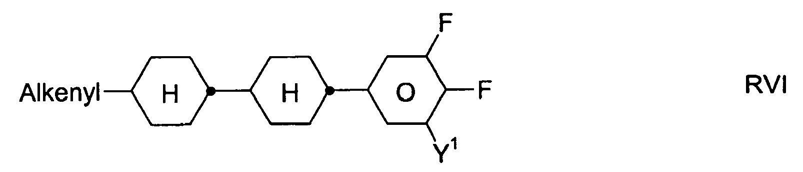 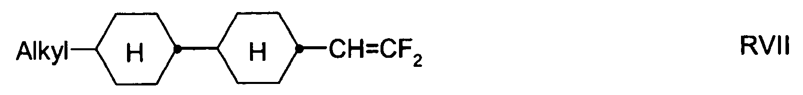 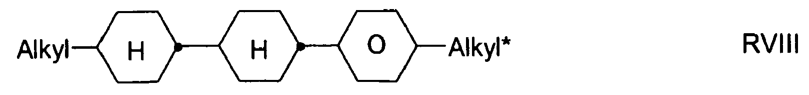 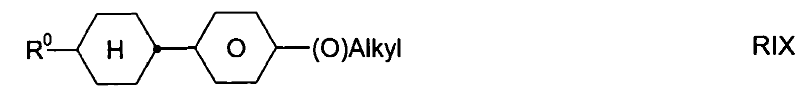 worin
   - R⁰: n-Alkyl, Alkoxy, Oxaalkyl, Fluoralkyl, Alkenyloxy oder Alkenyl mit jeweils bis zu 9 C-Atomen,
   - Y¹: H oder F,
   - Alkyl oder Alkyl*: jeweils unabhängig voneinander ein geradkettiger oder verzweigter Alkylrest mit 1-9 C-Atomen,
   - Alkenyl oder Alkenyl*: jeweils unabhängig voneinander einen geradkettigen oder verzweigten Alkenylrest mit bis zu 9 C-Atomen
   bedeuten.
- Das Medium enthält vorzugsweise ein oder mehrere Verbindungen der Formeln 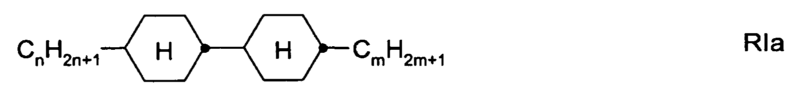 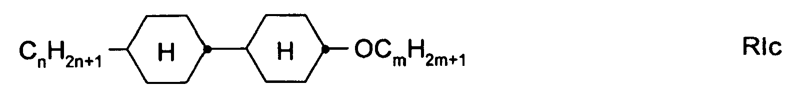 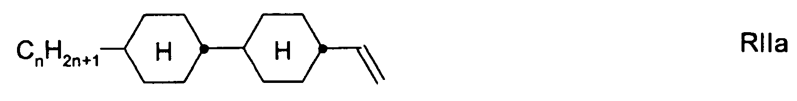 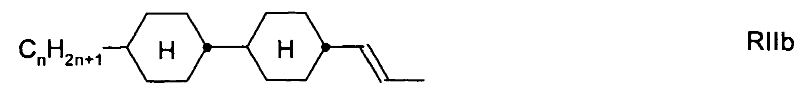 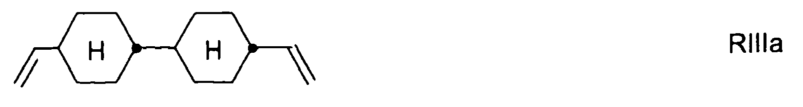 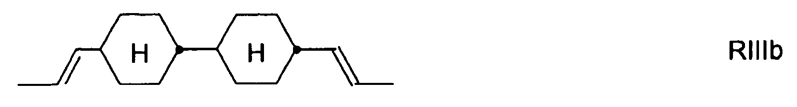 worin
   n und m jeweils 1, 2, 3, 4, 5, 6, 7, 8, 9, 10, 11 oder 12 bedeuten.
   Vorzugsweise ist n bis m 1, 2, 3, 4, 5 oder 6.
- Das Medium enthält zusätzlich ein, zwei oder mehr Verbindungen mit annellierten Ringen der Formeln AN1 bis AN11: 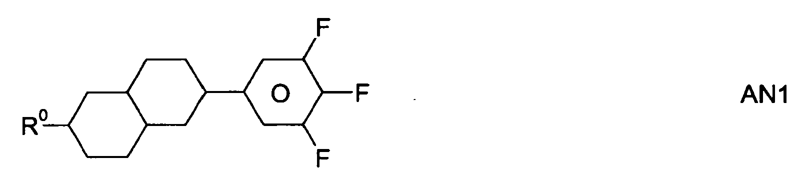 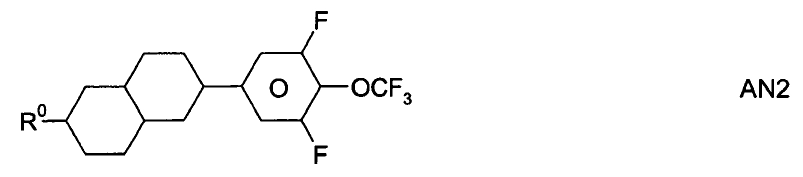 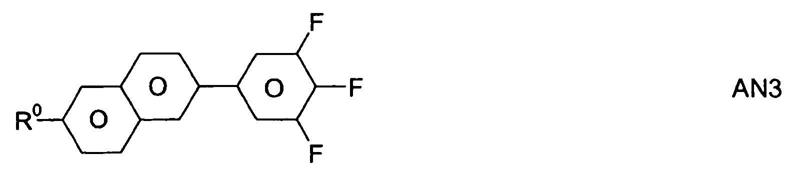 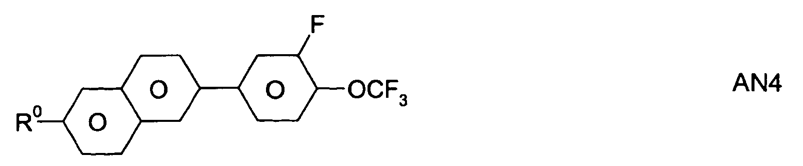 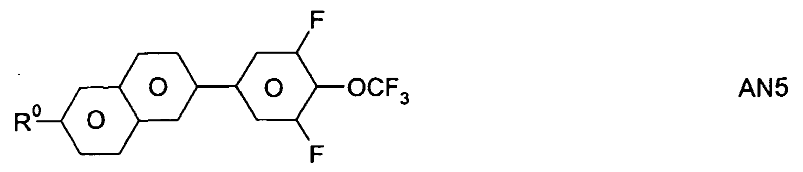 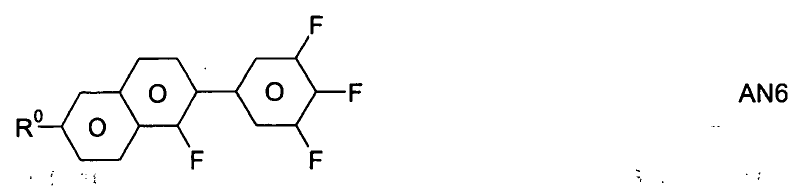 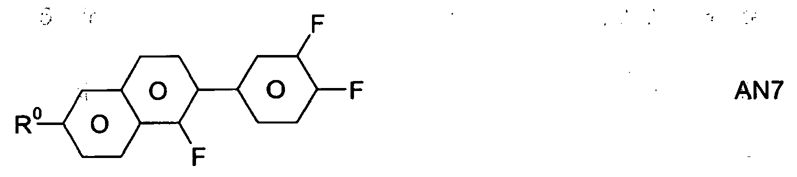 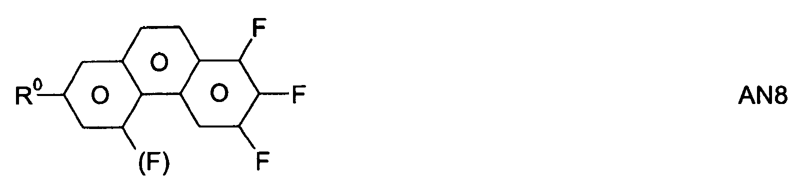 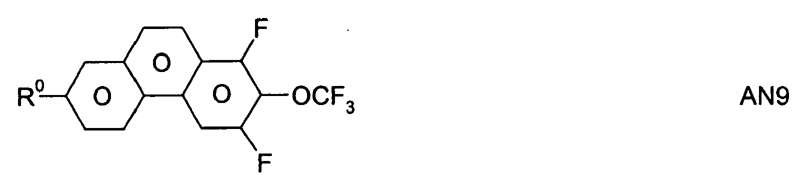 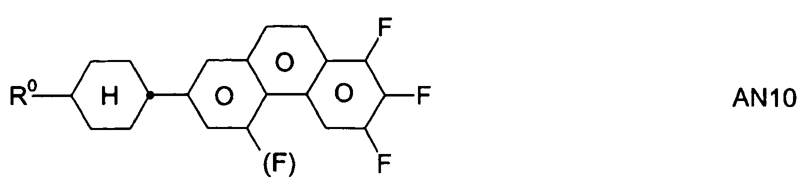 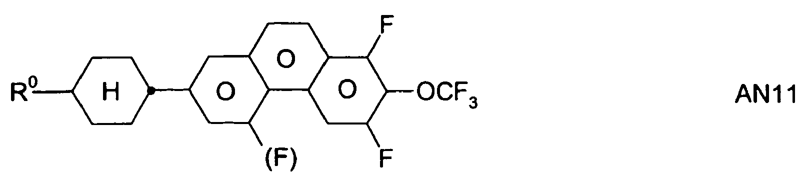 worin R⁰ die oben angegebenen Bedeutungen hat;

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenastoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n 1 bis 6 bedeutet und m 0 bis 6 bedeutet. Vorzugsweise ist n = 1 oder 2 und m 0 bis 6.

Es wurde gefunden, dass bereits ein relativ geringer Anteil an Verbindungen der Formeln I und IA im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu hohen Werten für die VHR (100 °C) führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I und IA ein oder mehrere Verbindungen der Formel IV enthalten, insbesondere Verbindungen der Formel IVa, worin X⁰ F oder OCF₃ bedeutet. Die Verbindungen der Formeln IA, I bis VI sind farblos, stabil und untereinander und mit anderen Flüssigkristallmaterialien gut mischbar.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I, IA und II + III + IV + V + VI hängt weitgehend von den gewünschten Eigenschaften, von der Wahl der Komponenten der Formeln I, IA, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln IA und bis XIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln IA und I bis XIII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formeln I und IA führt zu besonders vorteilhaften Eigenschaften. Insbesondere Mischungen enthaltend Verbindungen der Formel I, IA und der Formel IVa zeichnen sich durch ihre niedrige Schwellenspannung aus.

Die einzelnen Verbindungen der Formeln IA und I bis XVIII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. Stabilisatoren, UV-Filter, Antioxidantien, enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*}, L^{2*} und L^{3*}:

| Code für R^{1*}, R^{2*} , L^{1*}, L^{2*}, L^{3*} | R^{1*} | R^{2*} | L^{1*} | L^{2*} | L^{3*} |
|---|---|---|---|---|---|
| nm | CₙH₂ₙ₊₁ | CₘH₂ₘ₊₁ | H | H | H |
| nOm | OCₙH₂ₙ₊₁ | CₘH₂ₘ₊₁ | H | H | H |
| nO.m | CₙH₂ₙ₊₁ | OCₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CₙH₂ₙ₊₁ | CₘH₂ₘ₊₁ | F | H | H |
| nOCF₃ | CₙH₂ₙ₊₁ | OCF₃ | H | H | H |
| nOCF₃.F | CₙH₂ₙ₊₁ | OCF₃ | F | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

Bevorzugte Mischungskomponenten finden sich in den Tabellen A und B.

**Tabelle A:**

| |
|---|
| 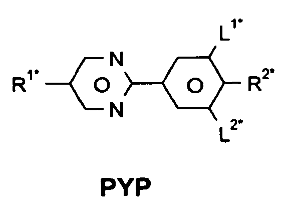 |
| 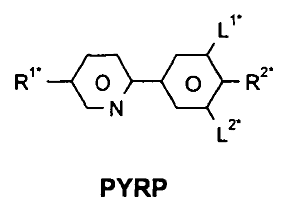 |
| 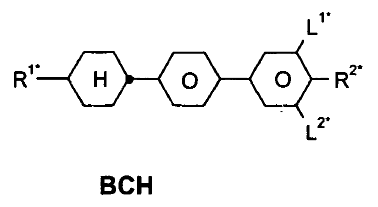 |
| 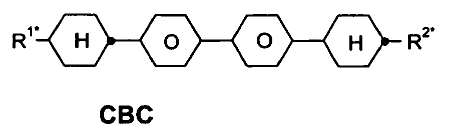 |
| 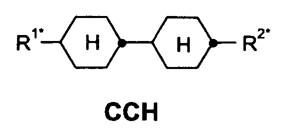 |
| 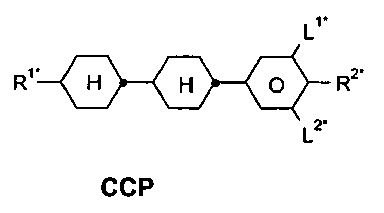 |
| 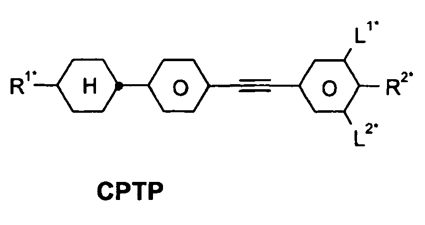 |

| |
|---|
| 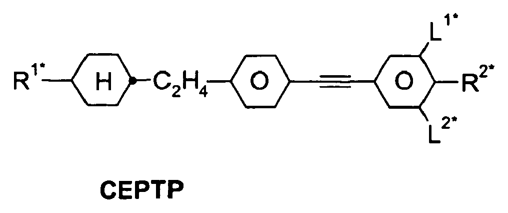 |
| 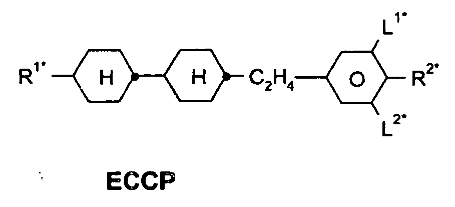 |
| 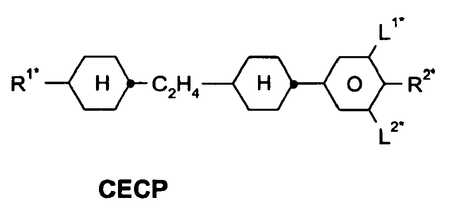 |
| 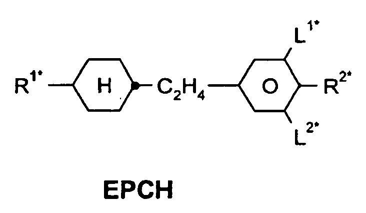 |
| 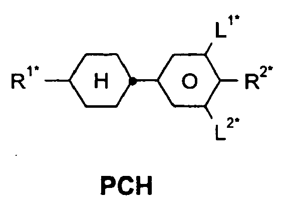 |

| |
|---|
| 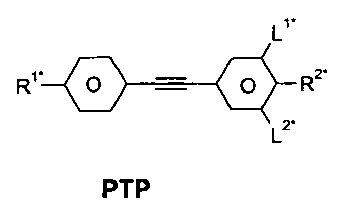 |
| 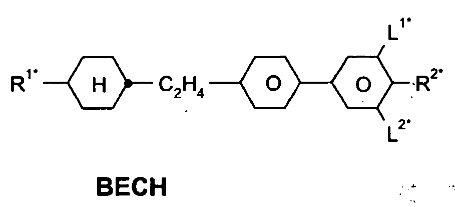 |
| 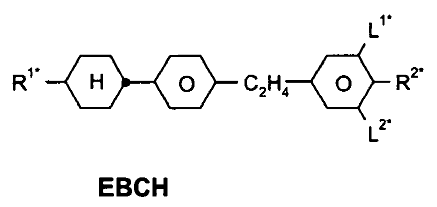 |
| 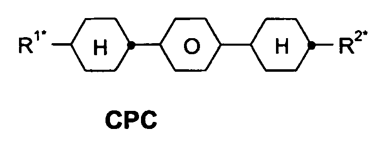 |
| 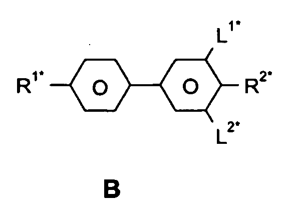 |
| 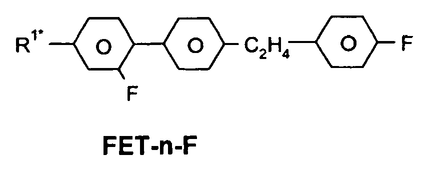 |

| |
|---|
| 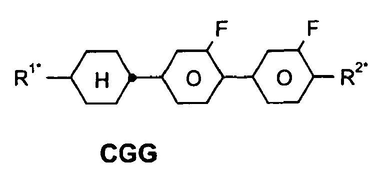 |
| 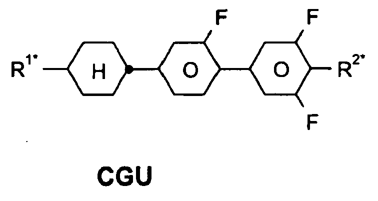 |
| 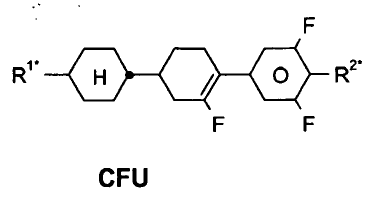 |

**Tabelle B:**

| |
|---|
| 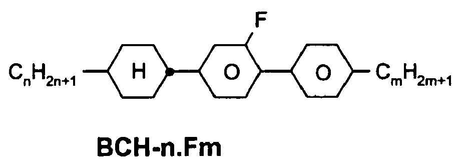 |
| 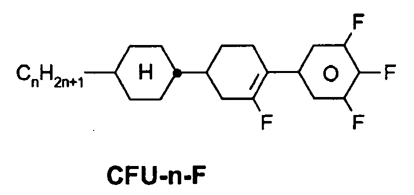 |
| 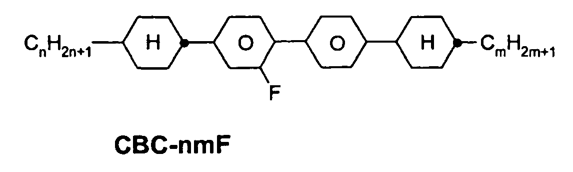 |
| 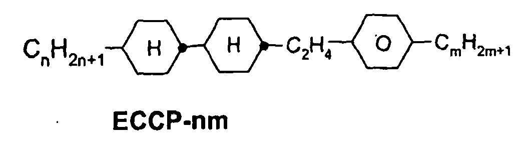 |
| 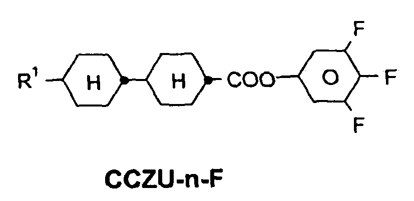 |
| 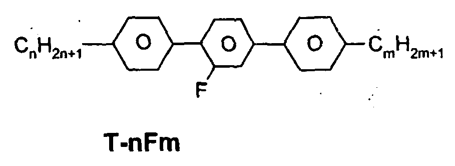 |
| 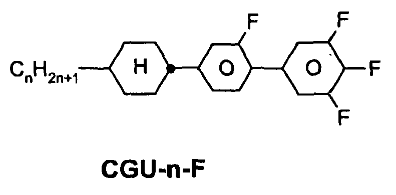 |
| 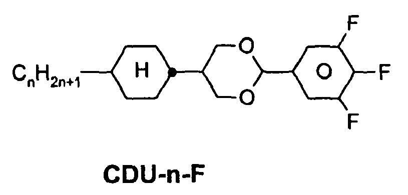 |
| 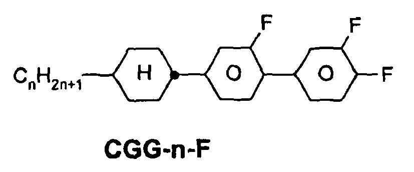 |
| 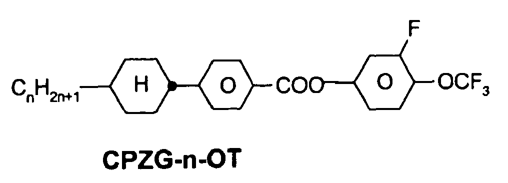 |
| 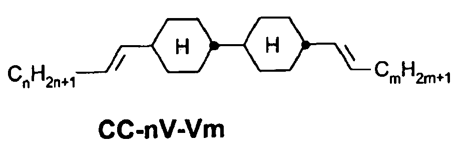 |
| 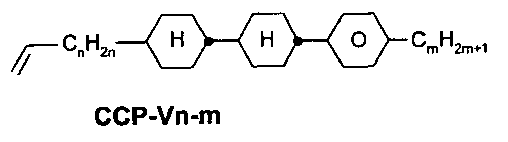 |
| 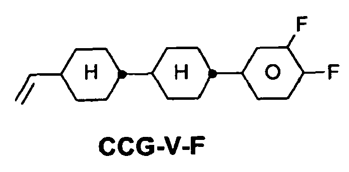 |
| 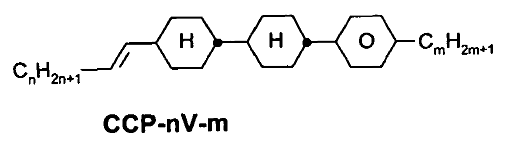 |
| 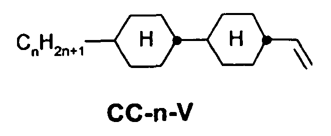 |
| 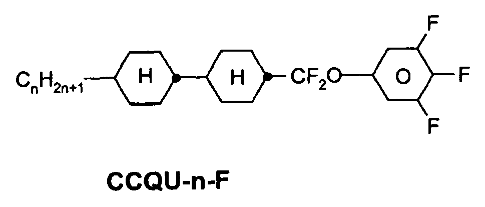 |
| 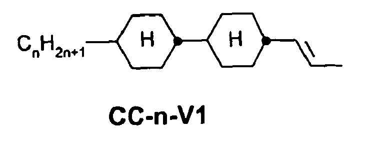 |
| 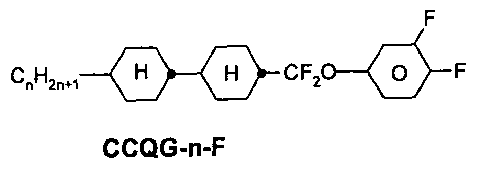 |
| 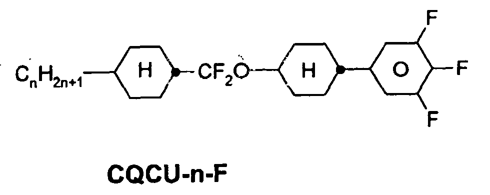 |
| 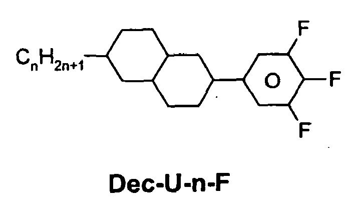 |
| 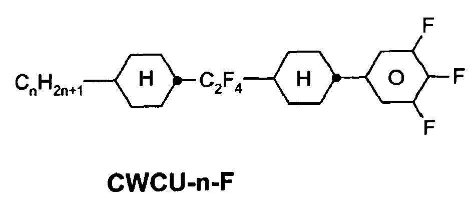 |
| 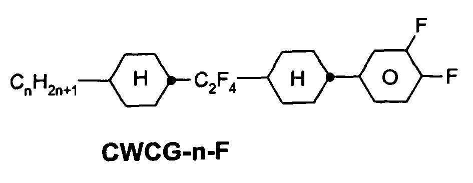 |
| 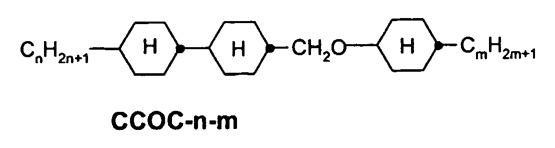 |
| 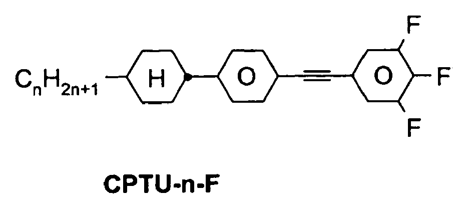 |
| 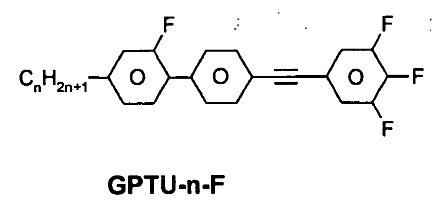 |
| 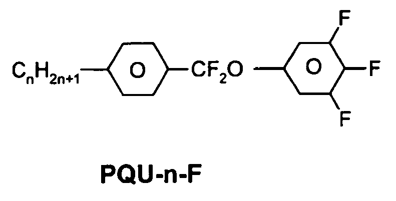 |
| 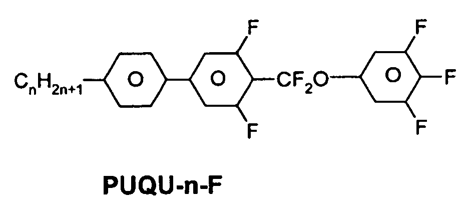 |
| 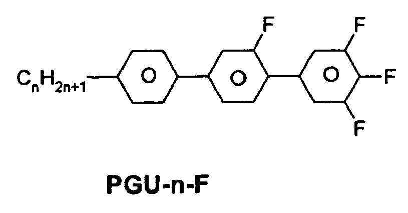 |
| 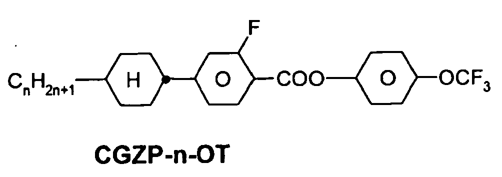 |
| 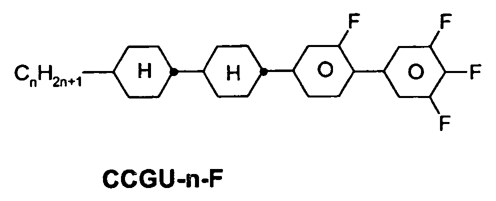 |
| 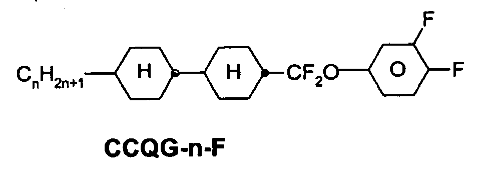 |
| 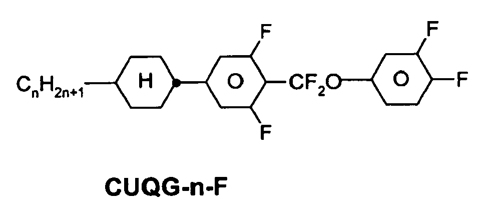 |
| 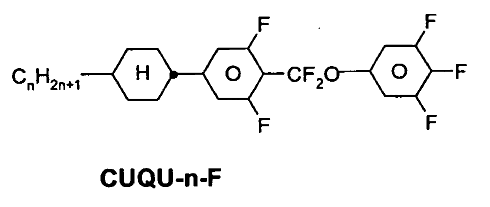 |
| 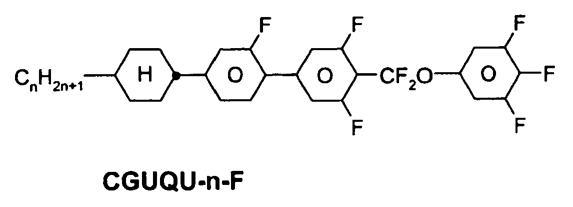 |
| 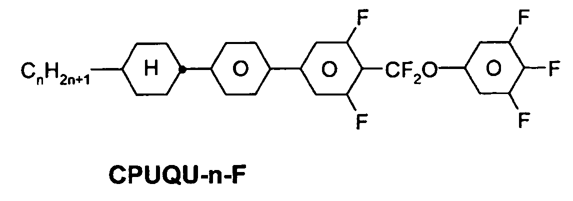 |

Besonders bevorzugt sind flüsigkristalline Mischungen, die neben den Verbindungen der Formeln I und IA mindestens ein, zwei, drei oder vier Verbindungen aus der Tabelle B enthalten.

**Tabelle C:**

| |
|---|
| In der Tabelle C werden mögliche Dotierstoffe angegeben, die in der Regel den erfindungsgemäßen Mischungen zugesetzt werden. |
| 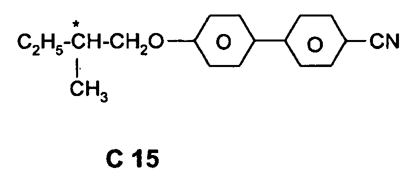 |
| 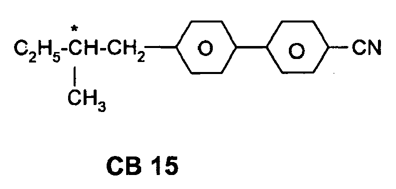 |
| 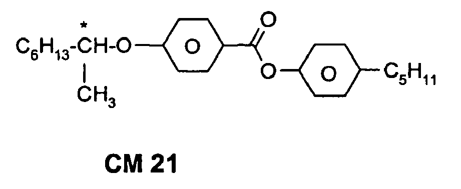 |
| 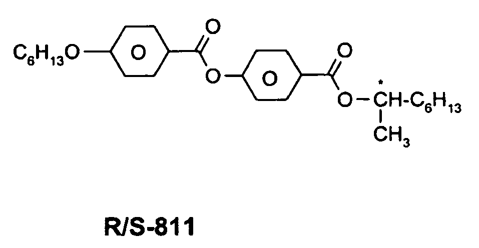 |
| 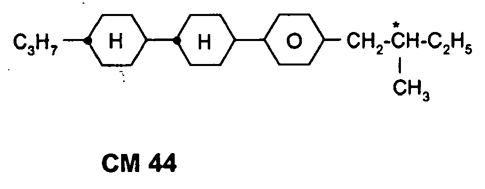 |
| 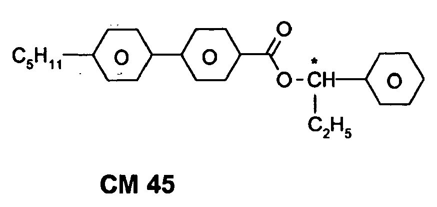 |
| 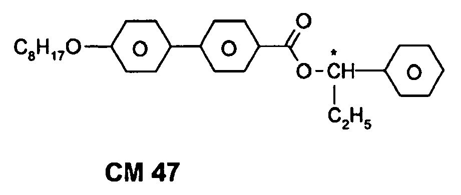 |
| 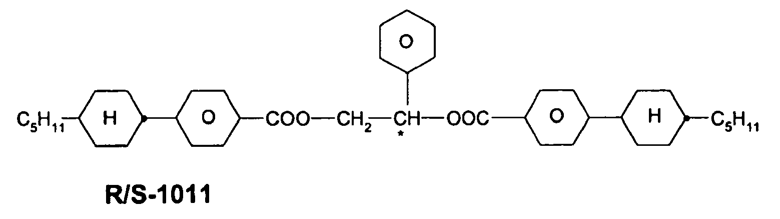 |
| 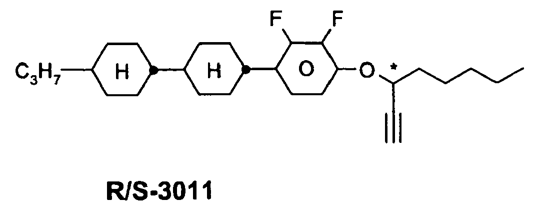 |
| 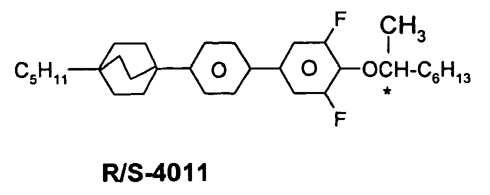 |
| 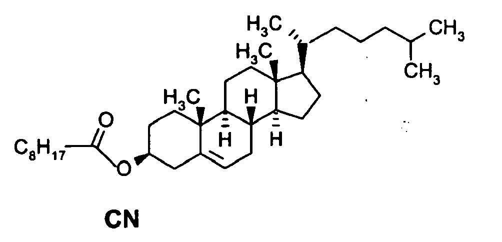 |
| 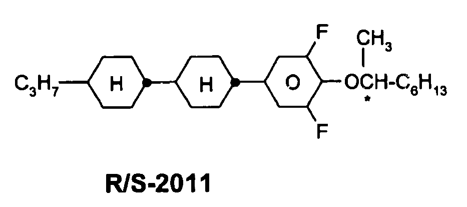 |

**Tabelle D**

| | |
|---|---|
| Stabilisatoren, die beispielsweise den erfindungsgemäßen Mischungen zugesetzt werden können, werden nachfolgend genannt. | |
| 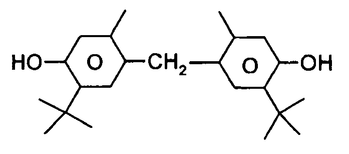 | 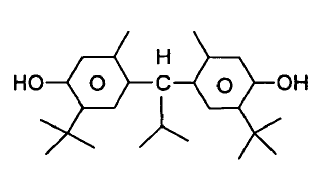 |
| 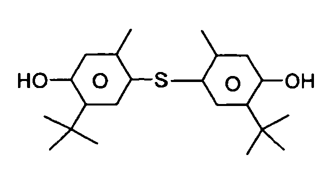 | 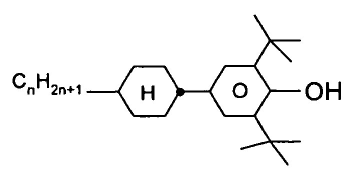 |
| 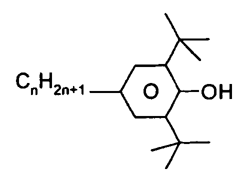 | 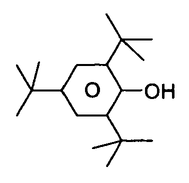 |
| 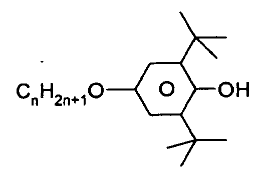 | 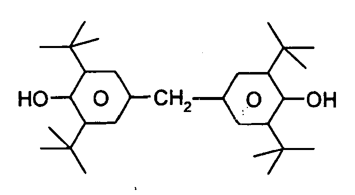 |
| 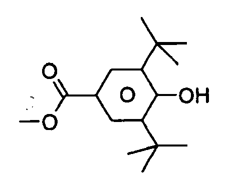 | 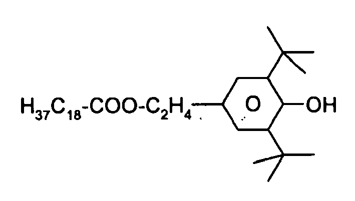 |
| 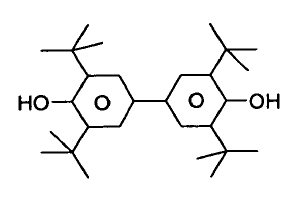 | 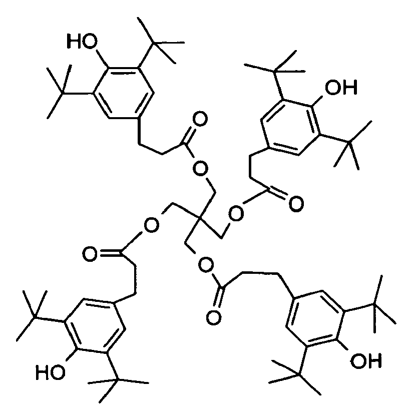 |
| 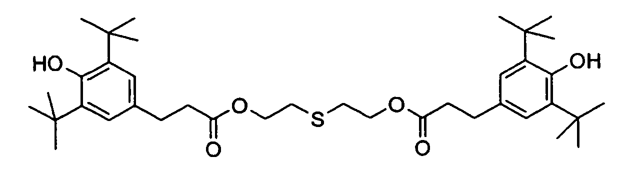 | |
| 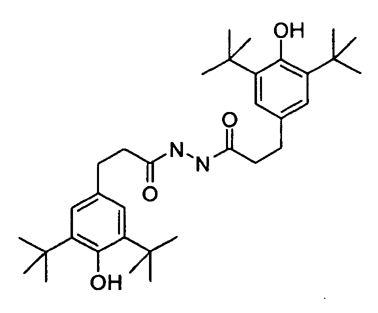 | 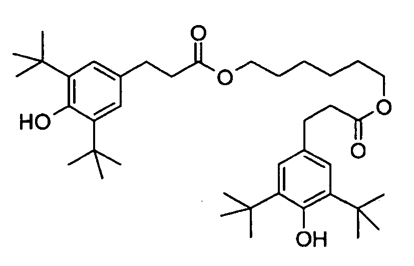 |
| 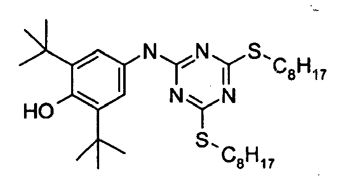 | 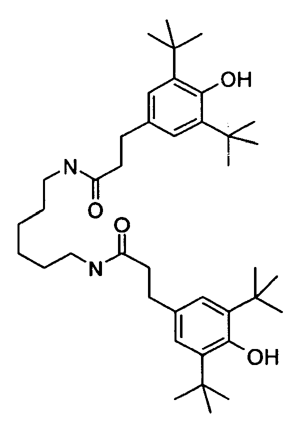 |
| 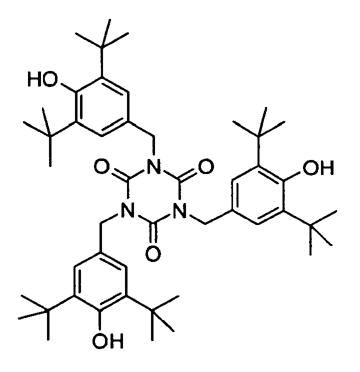 | 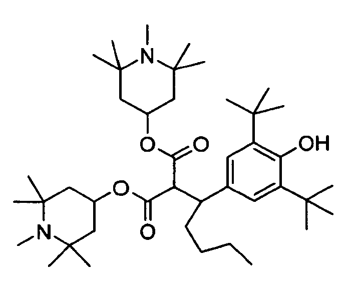 |
| 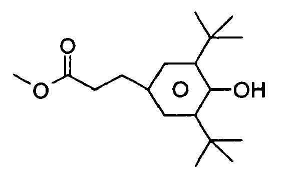 | 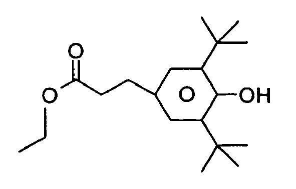 |
| 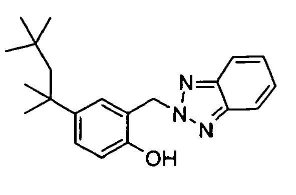 | 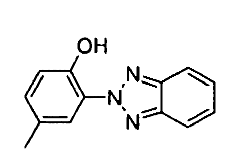 |
| 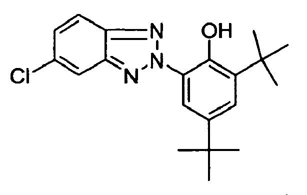 | 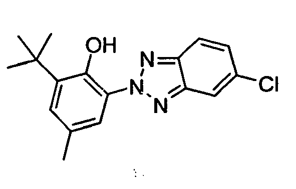 |
| 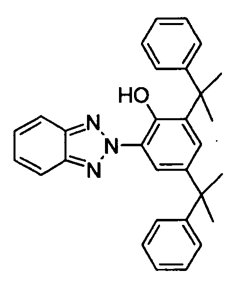 | 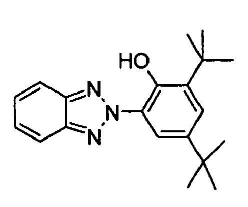 |
| 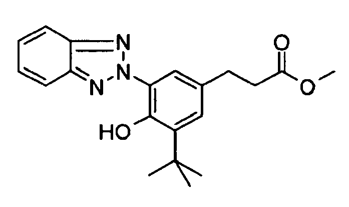 | 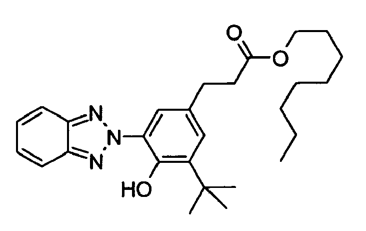 |
| 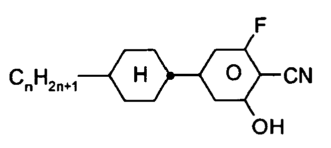 | |
| 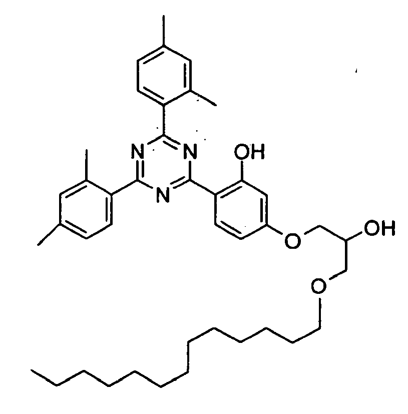 | 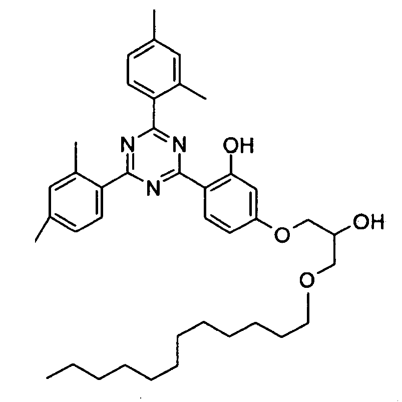 |
| 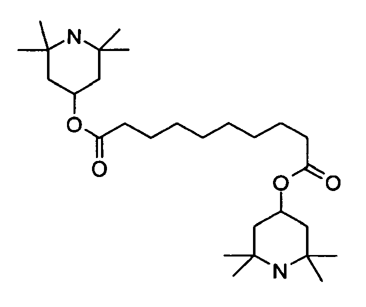 | 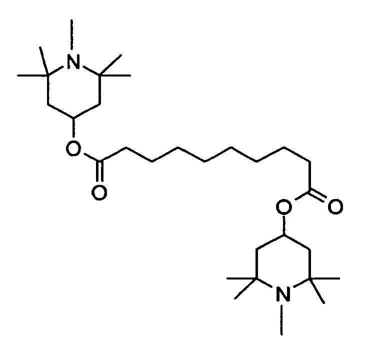 |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1 kHz, 20 °C). Die Fließviskosität ν₂₀ (mm2/sec) wird bei 20 °C bestimmt. Die Rotationsviskosität γ₁ (mPa·s) wird ebenfalls bei 20 °C bestimmt.

### Beispiel M1

| | | | |
|---|---|---|---|
| CCP-1F.F.F | 10,00 % | S → N [°C]: | < -40,0 |
| CCP-2F.F.F | 10,00 % | Klärpunkt [°C]: | +84,0 |
| CCP-20CF₃ | 7,00 % | Δn [589 nm; 20 °C]: | +0,0944 |
| CCP-30CF₃ | 8,00 % | γ₁ [mPa.s; 20 °C]: | 113 |
| CCP-40CF₃ | 6,00 % | d · Δn [20 °C; µm]: | 0,50 |
| CCP-50CF₃ | 3,00 % | Verdrillung [°]: | 90 |
| PGU-2-F | 5,00 % | V₁₀ [V]: | 1,28 |
| PGU-3-F | 2,00 % | | |
| CGUQU-2-F | 10,00 % | | |
| CGUQU-3-F | 10,00 % | | |
| CCG-V-F | 4,00 % | | |
| CCH-35 | 5,00 % | | |
| CC-3-V1 | 11,00 % | | |
| CC-5-V | 9,00 % | | |

### Beispiel M2

| | | | |
|---|---|---|---|
| CCP-1F.F.F | 10,00 % | S → N [°C]: | < -40,0 |
| CCP-2F.F.F | 10,00 % | Klärpunkt [°C]: | +84,0 |
| CCP-3F.F.F | 4,00 % | Δn [589 nm; 20 °C]: | +0,0944 |
| CCP-20CF₃ | 6,00 % | γ₁ [mPa·s; 20 °C]: | 116 |
| CCP-30CF₃ | 8,00 % | d · Δn [20 °C; µm]: | 0,50 |
| CCP-40CF₃ | 6,00 % | Verdrillung [°]: | 90 |
| CCP-50CF₃ | 4,00 % | V₁₀ [V]: | 1,27 |
| PGU-2-F | 5,00 % | | |
| PGU-3-F | 12,00 % | | |
| CGUQU-2-F | 10,00 % | | |
| CGUQU-3-F | 10,00 % | | |
| CCH-35 | 5,00 % | | |
| CC-3-V1 | 11,00 % | | |
| CC-5-V | 9,00 % | | |

### Beispiel M3

| | | | |
|---|---|---|---|
| CCP-2F.F.F | 7,00 % | S → N [°C]: | < -40,0 |
| CCP-20CF₃ | 8,00 % | Klärpunkt [°C]: | +84,0 |
| CCP-30CF₃ | 8,00 % | Δn [589 nm; 20 °C]: | +0,0925 |
| CCP-40CF₃ | 6,00 % | γ₁ [mPa·s; 20 °C]: | 115 |
| CCP-50CF₃ | 4,00 % | d · Δn [20 °C; µm]: | 0,50 |
| PGU-2-F | 7,00 % | Verdrillung [°]: | 90 |
| CDU-2-F | 10,00 % | V₁₀ [V]: | 1,25 |
| CDU-3-F | 7,00 % | | |
| CGUQU-2-F | 8,00 % | | |
| CGUQU-3-F | 10,00 % | | |
| CCH-35 | 5,00 % | | |
| CC-3-V1 | 10,00 % | | |
| CC-5-V | 10,00 % | | |

### Beispiel M4

| | | | |
|---|---|---|---|
| CCP-1F.F.F | 11,00 % | S → N [°C]: | < -40,0 |
| CCP-2F.F.F | 10,00 % | Klärpunkt [°C]: | +83,5 |
| CCP-20CF₃.F | 10,50 % | Δn [589 nm; 20 °C]: | +0,0937 |
| CCP-20CF₃ | 8,00 % | γ₁ [mPa·s; 20 °C]: | 133 |
| CCP-30CF₃ | 8,00 % | d · Δn [20°C; µm]: | 0,50 |
| CCP-40CF₃ | 6,00 % | Verdrillung [°]: | 90 |
| CGU-2-F | 10,00 % | V₁₀ [V]: | 1,21 |
| CCGU-3-F | 2,00 % | | |
| PGU-2-F | 1,00 % | | |
| CPUQU-2-F | 9,00 % | | |
| CPUQU-3-F | 9,00 % | | |
| CCH-35 | 5,00 % | | |
| CC-3-V1 | 10,50 % | | |

### Beispiel M5

| | | | |
|---|---|---|---|
| CCP-1F.F.F | 10,00 % | S → N [°C]: | < -40,0 |
| CCP-2F.F.F | 8,00 % | Klärpunkt [°C]: | +85,5 |
| CCP-20CF₃.F | 12,00 % | Δn [589 nm; 20 °C]: | +0,0930 |
| CCP-30CF₃.F | 8,00 % | γ₁ [mPa.s; 20 °C]: | 138 |
| CCP-20CF₃ | 8,00 % | d · Δn [20 °C; µm]: | 0,50 |
| CCP-30CF₃ | 8,00 % | Verdrillung [°]: | 90 |
| CCP-40CF₃ | 6,00 % | V₁₀ [V]: | 1,23 |
| PGU-2-F | 5,00 % | | |
| CGUQU-2-F | 10.00 % | | |
| CGUQU-3-F | 10,00 % | | |
| CCH-35 | 5,00 % | | |
| CC-3-V1 | 10,00 % | | |

## Patentansprüche

1. Flüssigkristallines Medium auf der Basis eines Gemisches von polaren Verbindungen mit positiver dielektrischer Anisotropie, **dadurch gekennzeichnet, dass** es eine oder mehrere Verbindungen der Formel I, 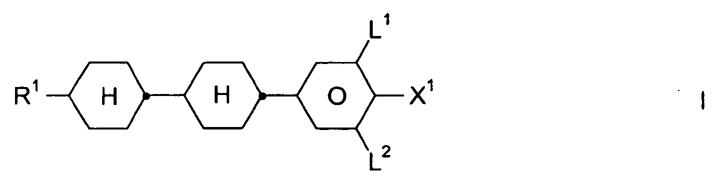 eine oder mehrere Verbindungen der Formel IA, 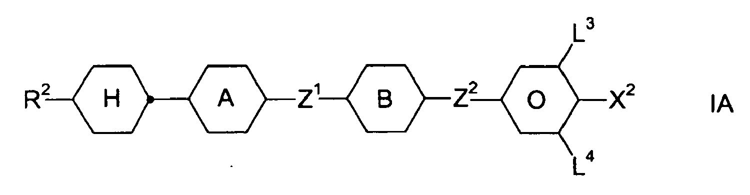 worin die einzelnen Reste folgende Bedeutungen besitzen:
R¹ und R² jeweils unabhängig voneinander H, einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -O-, 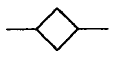 -CO-O- oder -O-CO- so ersetzt sein können, dass O-Atome nicht direkt miteinander verknüpft sind,
X¹ jeweils unabhängig voneinander CN, SF₅, SCN, NCS, OCN, halogenierter Alkylrest, halogenierter Alkenylrest, halogenierter Alkoxyrest oder halogenierter Alkenyloxyrest mit jeweils bis zu 6 C-Atomen,
X² jeweils unabhängig voneinander F, Cl, CN, SF₅, SCN, OCN, NCS, halogenierter Alkylrest, halogenierter Alkenylrest, halogenierter Alkoxyrest oder halogenierter Alkenyloxyrest mit jeweils bis zu 6 C-Atomen,
Z¹ und Z² jeweils unabhängig voneinander -CF₂O-, -OCF₂- oder eine Einfachbindung, wobei Z¹ ≠ Z² ist, 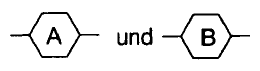 jeweils unabhängig voneinander 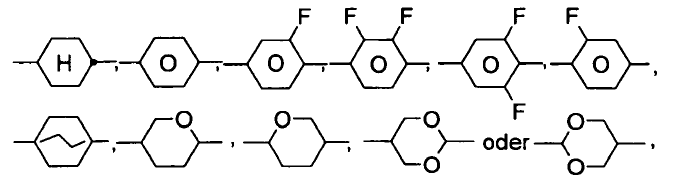
L¹⁻⁴ jeweils unabhängig voneinander H oder F,
und
eine oder mehrere Verbindungen ausgewählt aus der Gruppe bestehend aus den allgemeinen Formeln II, III, IV, V und VI enthält, 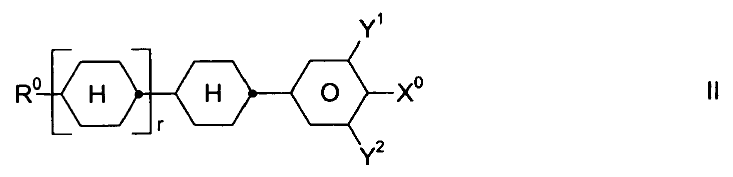 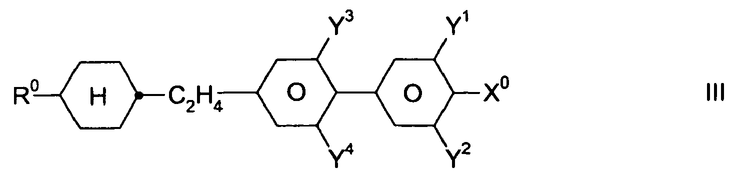 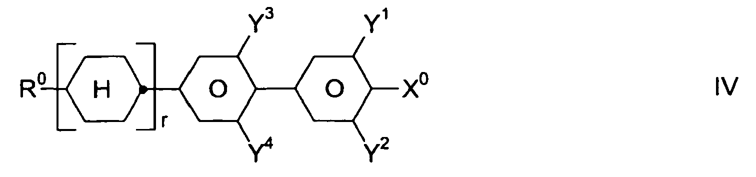 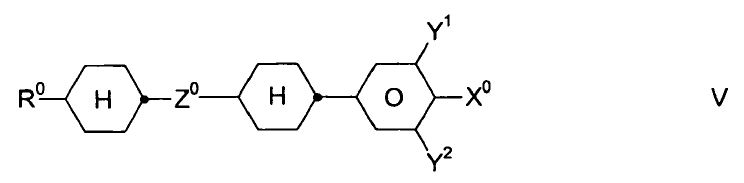 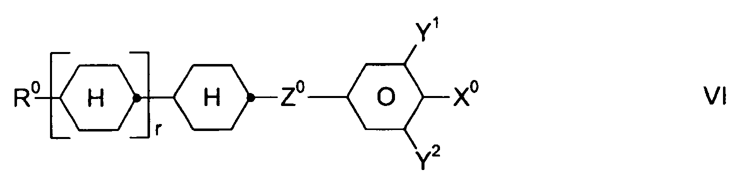 worin die einzelnen Reste die folgenden Bedeutungen haben:
R⁰ H, n-Alkyl, Alkoxy, Oxaalkyl, Fluoralkyl oder Alkenyl mit jeweils bis zu 9 C-Atomen,
X⁰ F, Cl, halogeniertes Alkyl, Alkenyl oder Alkoxy mit bis zu 6 C-Atomen,
Z⁰ -C₂F₄-, -CF=CF-, -CH=CF-, -CF=CH-, -C₂H₄-, -(CH₂)₄-, -CF₂O-, -OCF₂-, -OCH₂- oder -CH₂O-,
Y¹ und Y² jeweils unabhängig voneinander H oder F,
r 0 oder 1, und
die Verbindung der Formel II nicht identisch ist mit der Verbindung der Formel 1, und
**dass** der Anteil an Verbindungen der Formeln IA und I bis VI zusammen im Gesamtgemisch mindestens 50 Gew.-% beträgt.

2. Flüssigkristallines Medium nach Anspruch 1, **dadurch gekennzeichnet, dass** es ein, zwei oder mehr Verbindungen der Formeln IA1-IA24, 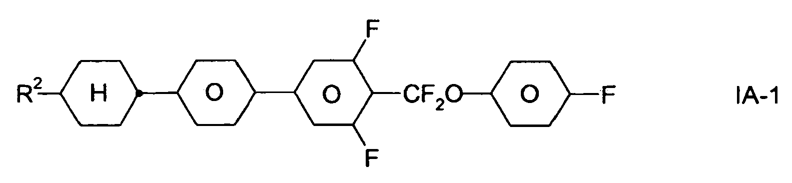 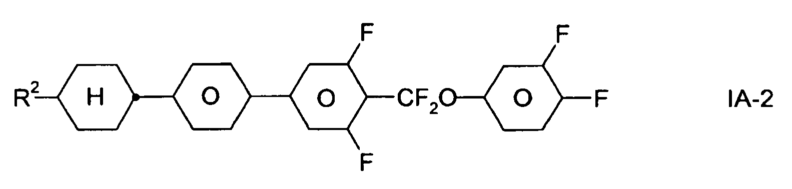 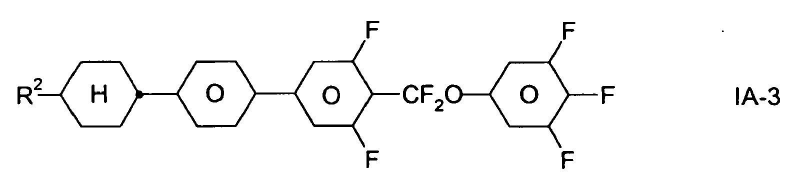 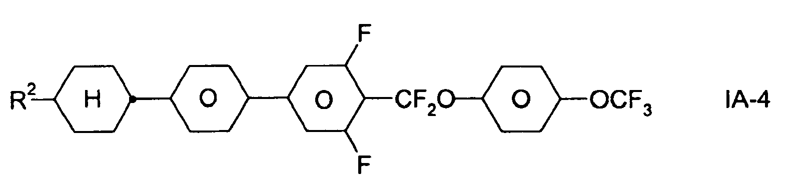 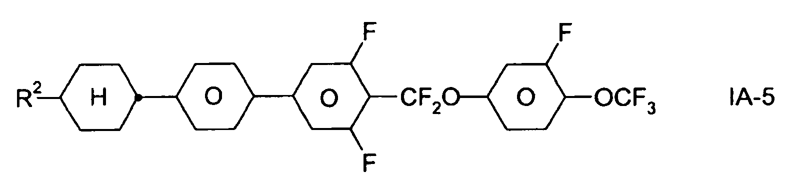 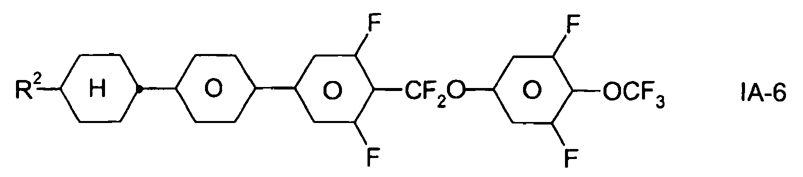 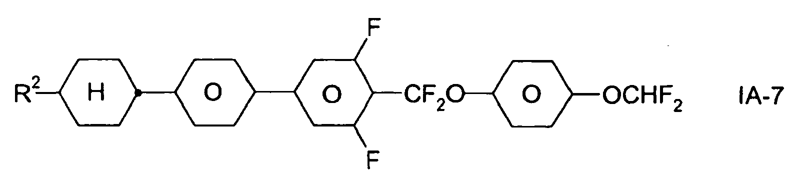 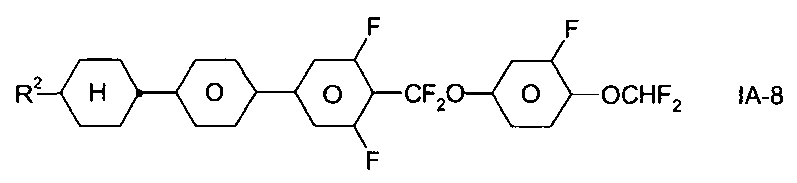 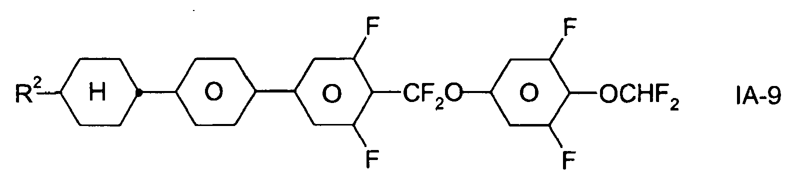 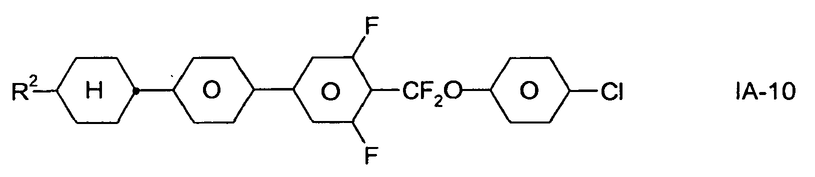 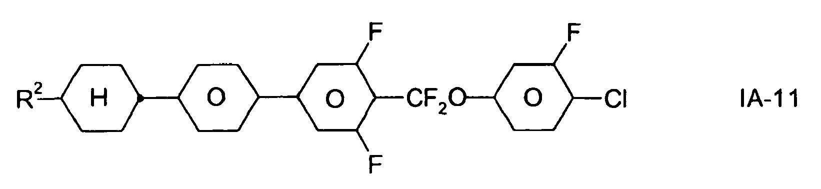 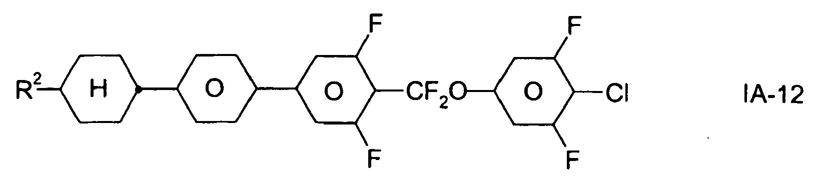 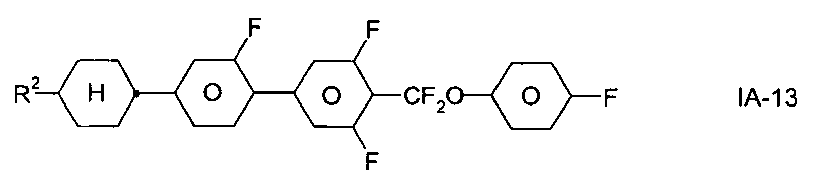 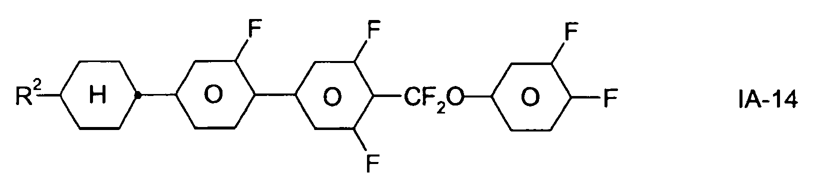 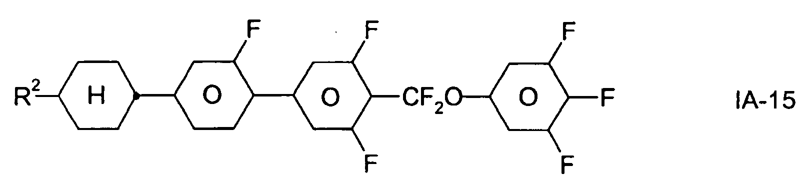 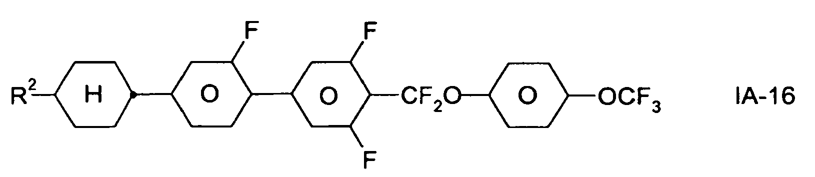 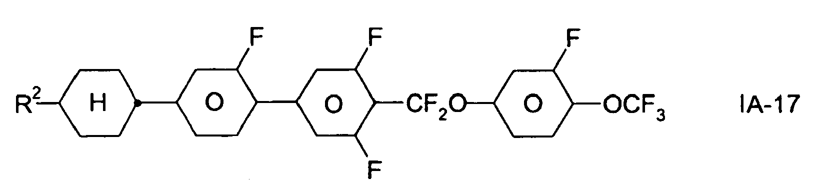 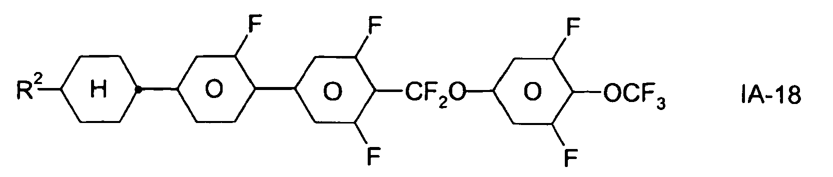 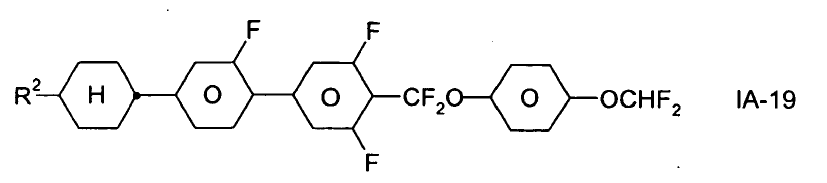 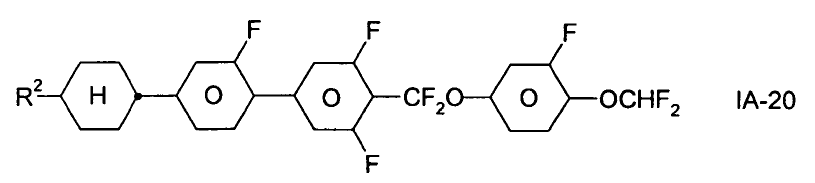 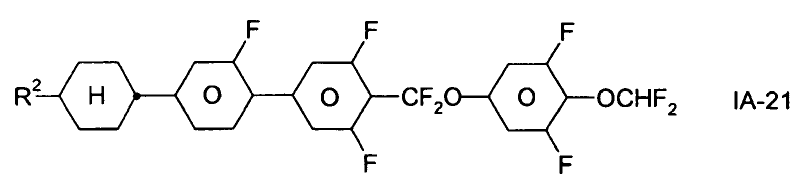 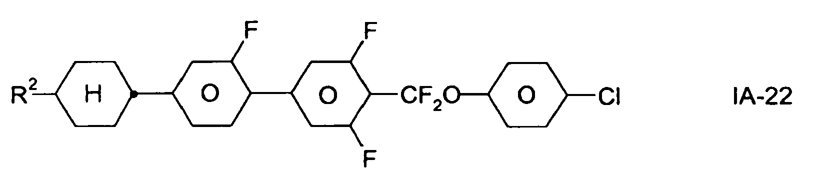 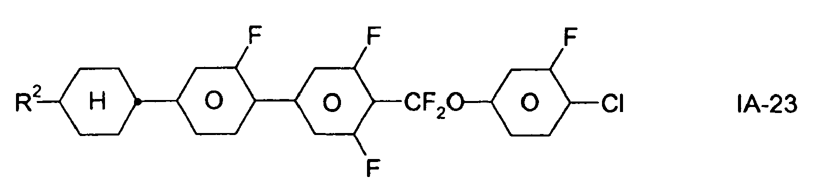 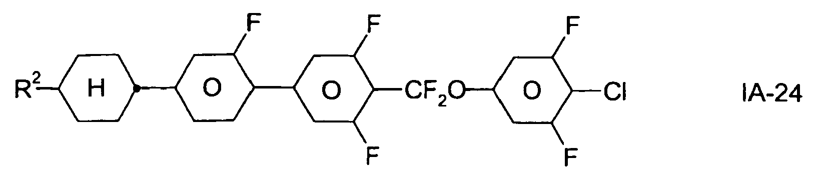 worin R² die in Anspruch 1 angegebene Bedeutung hat,
enthält.

3. Flüssigkristallines Medium nach Anspruch 1 oder 2, **dadurch gekennzeichnet, dass** es eine oder mehrere Verbindungen der Formeln I-1 bis I-15, 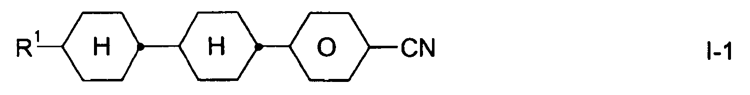 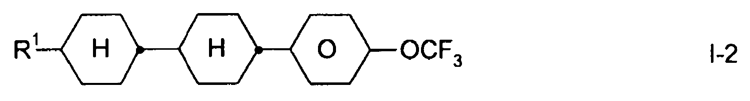 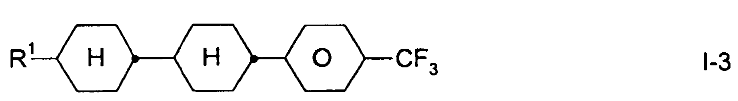 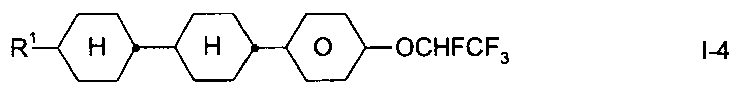 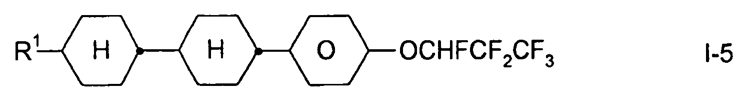 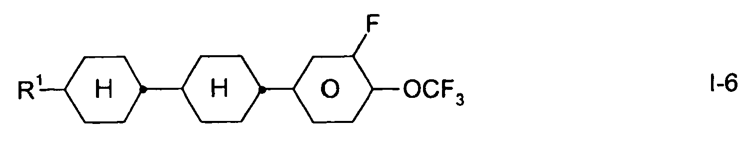 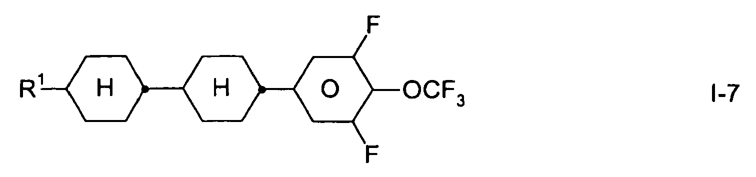 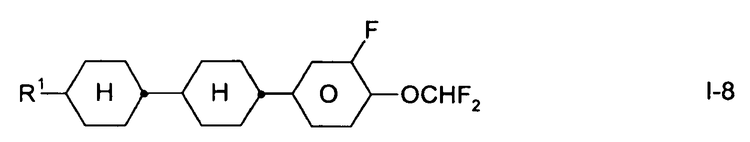 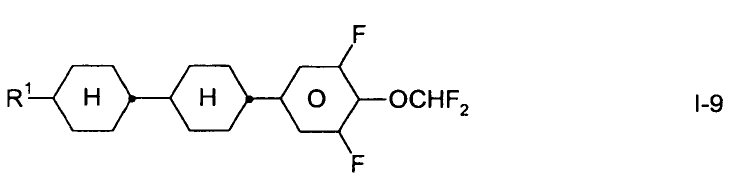 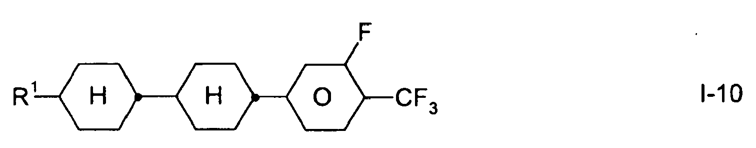 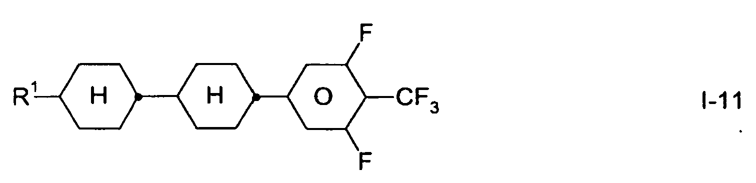 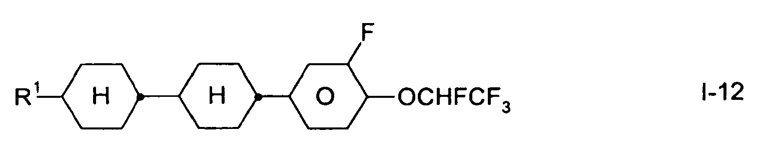 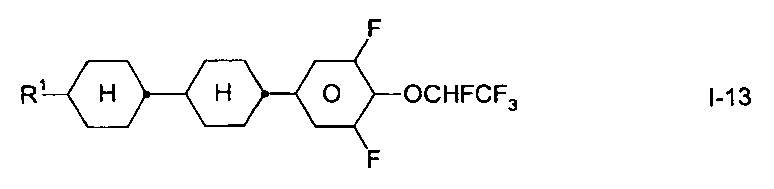 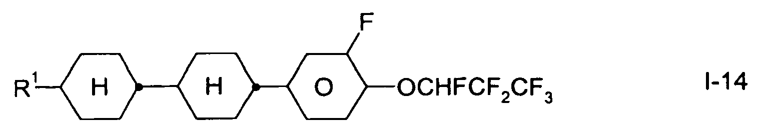 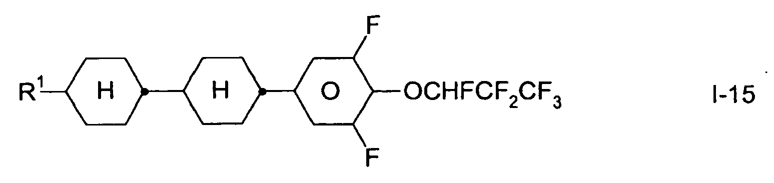 worin R¹ die in Anspruch 1 angegebenen Bedeutungen hat,
enthält.

4. Flüssigkristallines Medium nach einem der Ansprüche 1 bis 3, **dadurch gekennzeichnet, dass** es zusätzlich eine oder mehrere Verbindungen der Formeln Ea bis Ee, 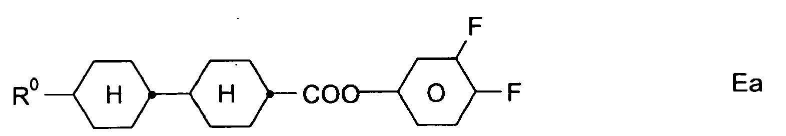 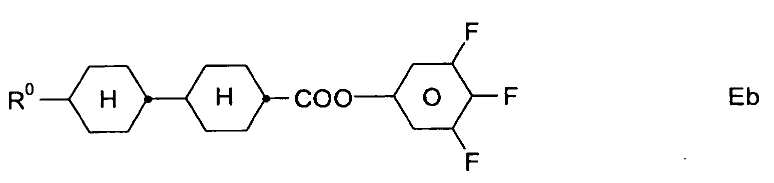 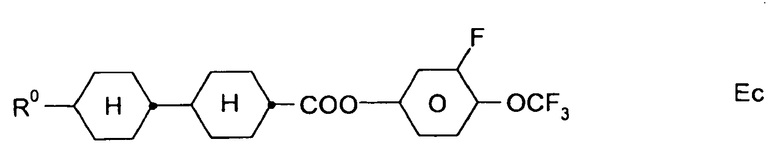 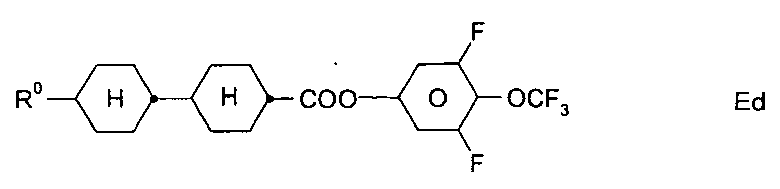 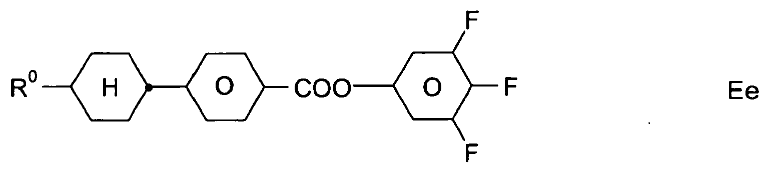 worin R⁰ die in Anspruch 1 angegebene Bedeutung hat,
enthält.

5. Flüssigkristallines Medium nach einem der Ansprüche 1 bis 4, **dadurch gekennzeichnet, dass** es eine oder mehrere Verbindungen der Formeln IIa bis IIg, 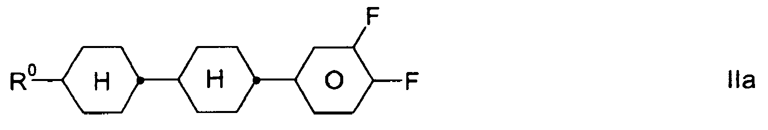 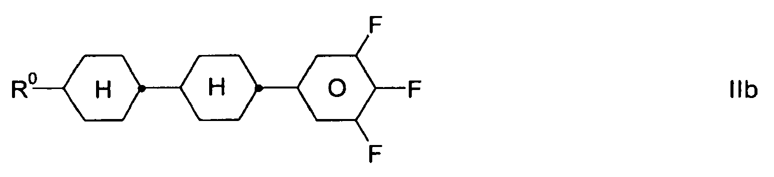 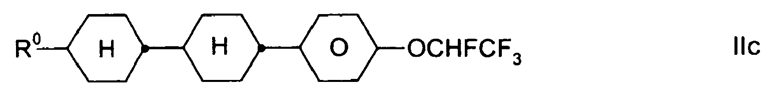 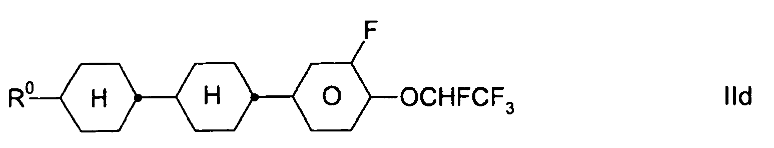 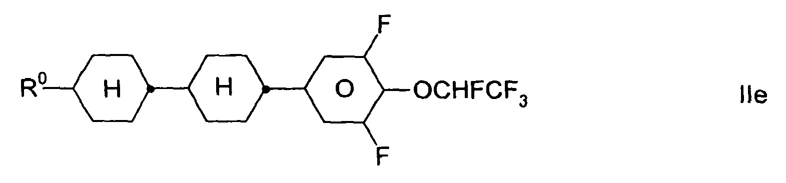 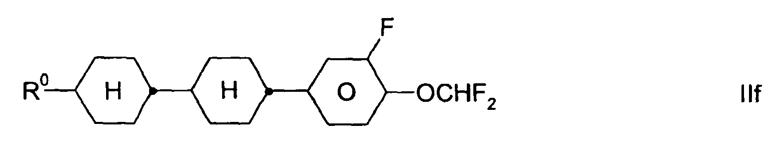 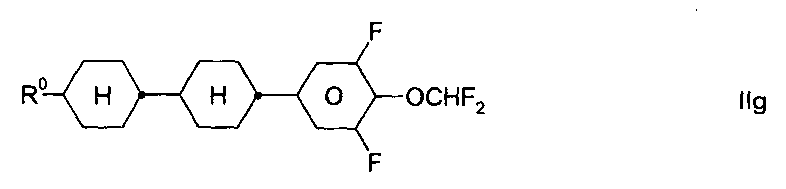 worin R⁰ die in Anspruch 1 angegebene Bedeutung hat,
enthält,
mit der Maßgabe, dass die Verbindungen der Formel II nicht identisch sind mit den Verbindungen der Formel I.

6. Flüssigkristallines Medium nach einem der Ansprüche 1 bis 5, **dadurch gekennzeichnet, dass** es eine oder mehrere Verbindungen der folgenden Formeln, 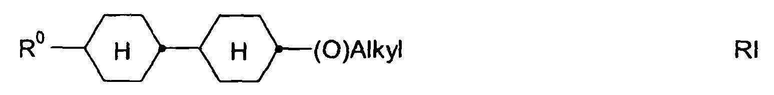 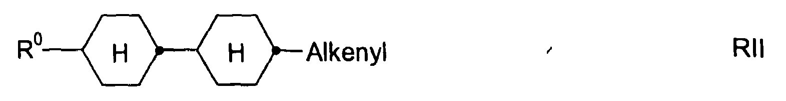 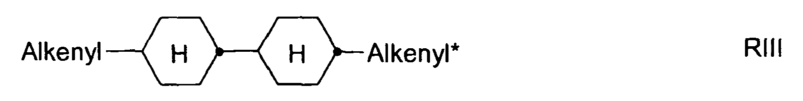 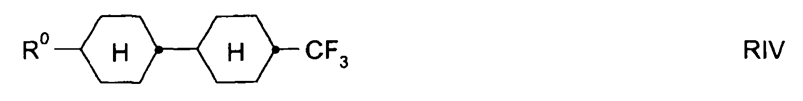 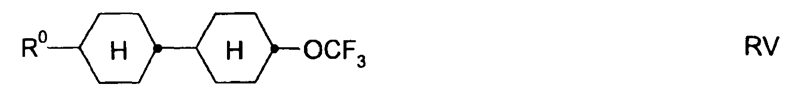 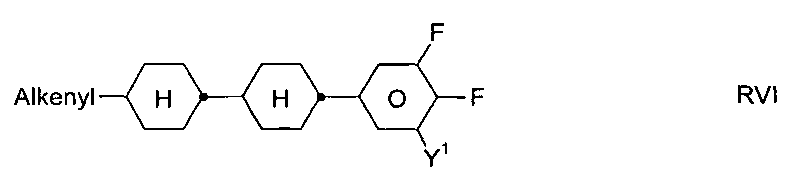 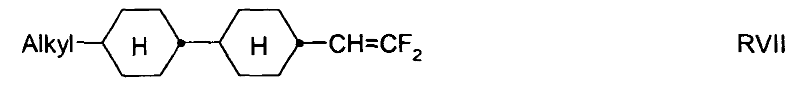 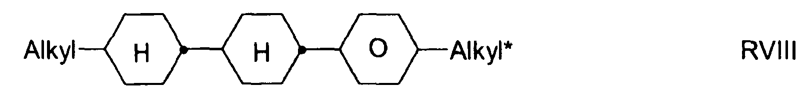 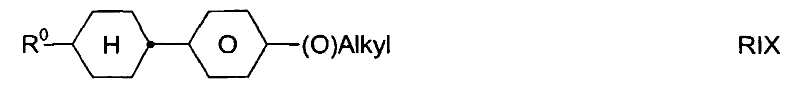 worin
R⁰ n-Alkyl, Alkoxy, Oxaalkyl, Fluoralkyl, Alkenyloxy oder Alkenyl mit jeweils bis zu 9 C-Atomen,
Y¹ H oder F,
Alkyl oder Alkyl* jeweils unabhängig voneinander ein geradkettiger oder verzweigter Alkylrest mit 1-9 C-Atomen,
Alkenyl oder Alkenyl* jeweils unabhängig voneinander einen geradkettigen oder verzweigten Alkenylrest mit bis zu 9 C-Atomen
bedeuten,
enthält.

7. Flüssigkristallines Medium nach einem der Ansprüche 1 bis 6, **dadurch gekennzeichnet, dass** es zusätzlich eine oder mehrere Verbindungen ausgewählt aus der Gruppe bestehend aus den allgemeinen Formeln VII bis XIII, 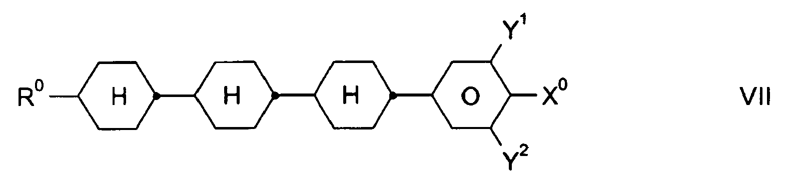 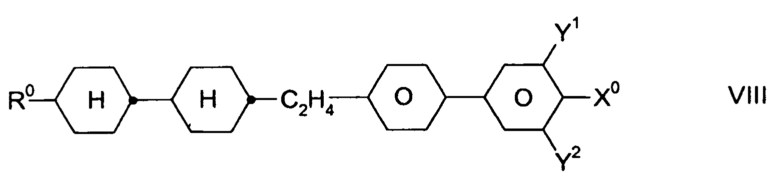 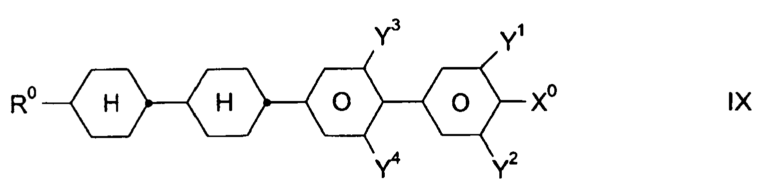 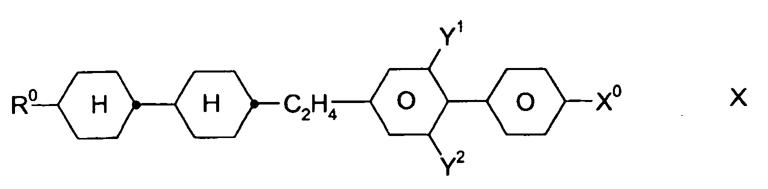 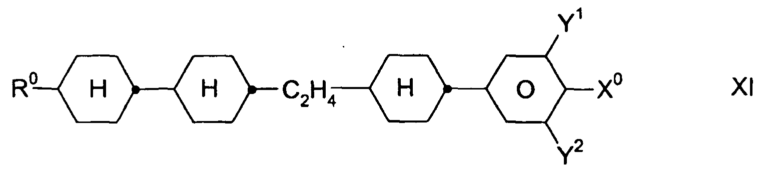 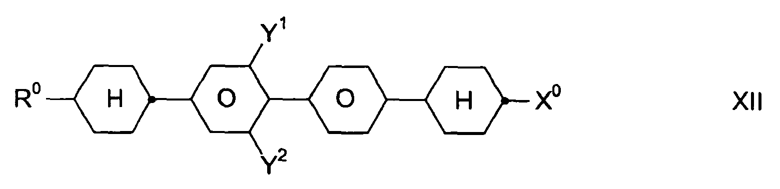 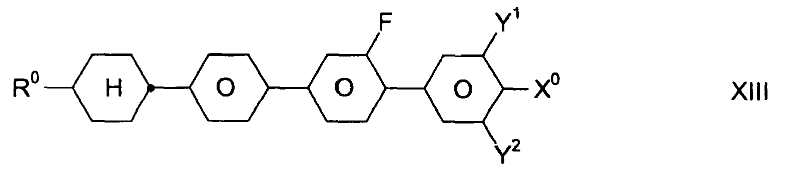 worin
R⁰, X⁰, Y¹ und Y² jeweils unabhängig voneinander eine der in Anspruch 1 angegebenen Bedeutung haben, und
Y³ und Y⁴ jeweils unabhängig voreinander H oder F bedeuten,
enthält.

8. Flüssigkristallines Medium nach einem der Ansprüche 1 bis 7, **dadurch gekennzeichnet, dass** es zwei oder drei, ferner vier, Homologe der Verbindungen ausgewählt aus der Gruppe H1 bis H19, 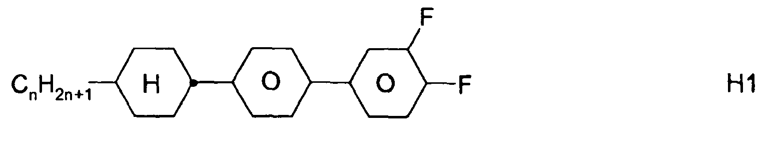 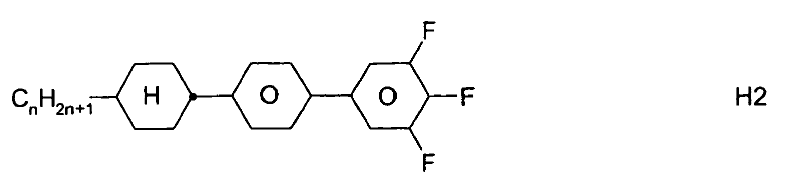 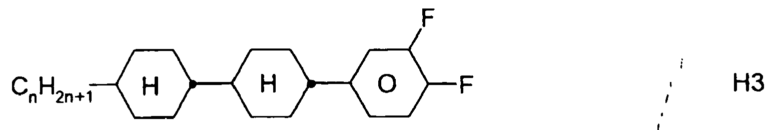 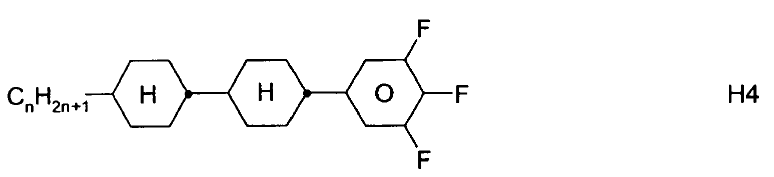 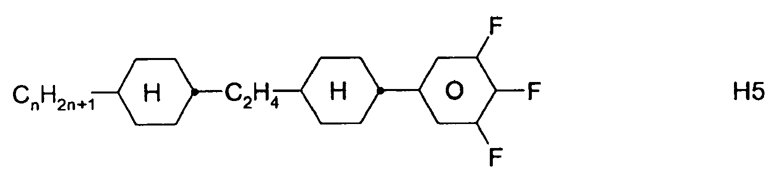 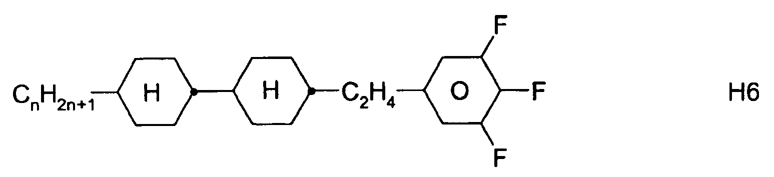 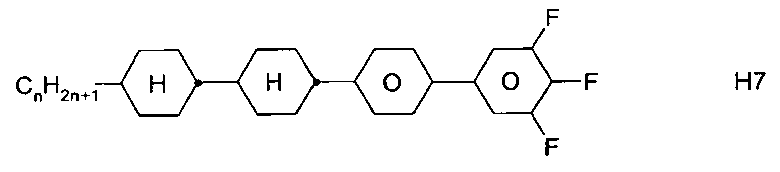 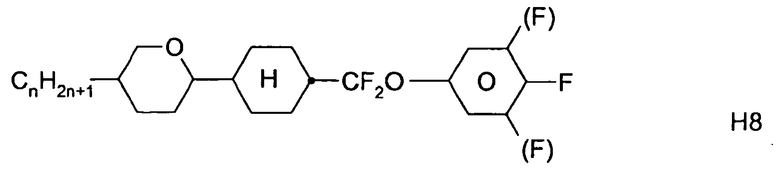 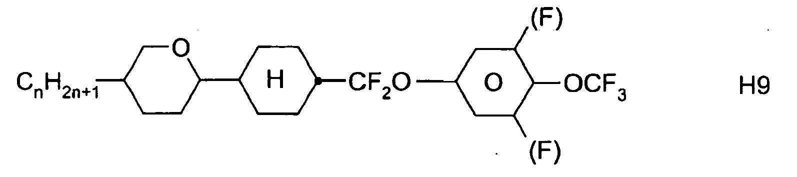 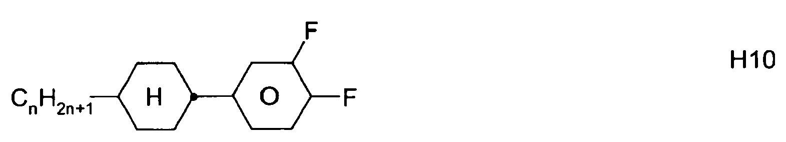 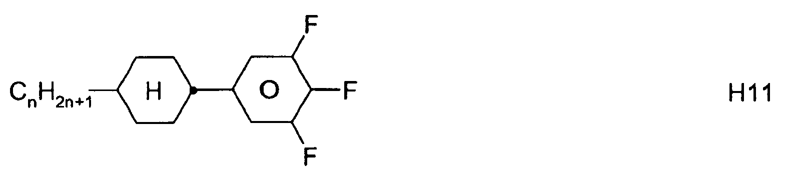 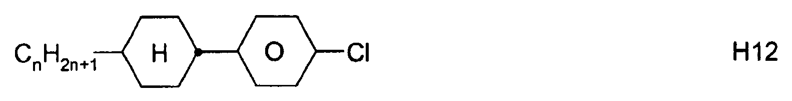 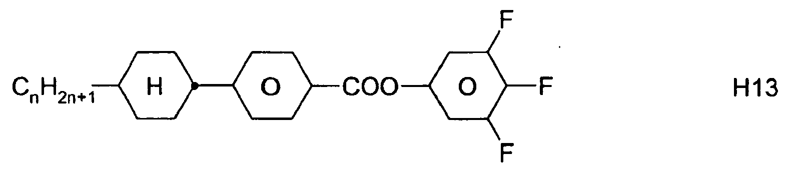 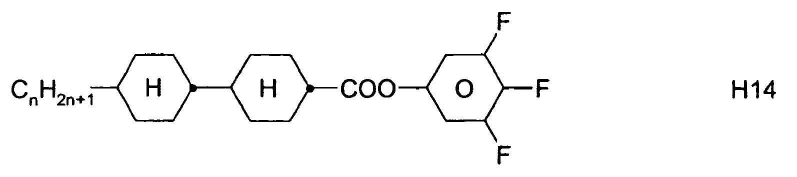 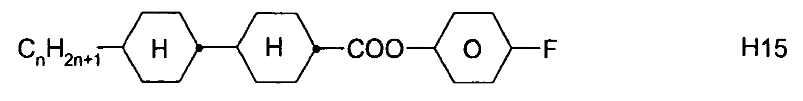 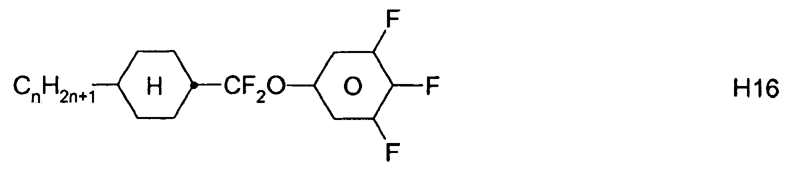 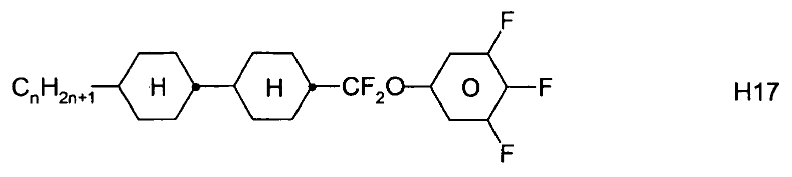 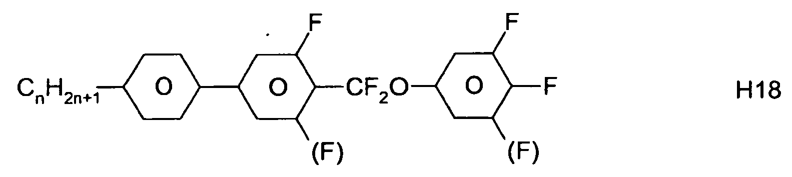 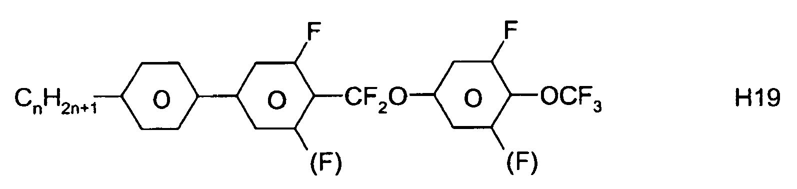 worin n 1 - 12 bedeutet,
enthält.

9. Flüssigkristallines Medium nach einem der Ansprüche 1 bis 8, **dadurch gekennzeichnet, dass** es Verbindungen ausgewählt aus der folgenden Gruppe bestehend aus den allgemeinen Formeln XIV bis XVII, 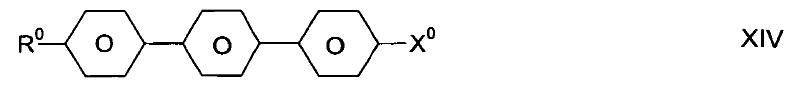 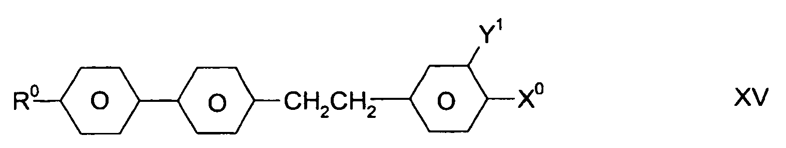 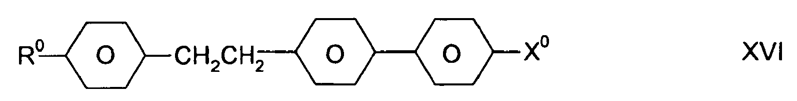 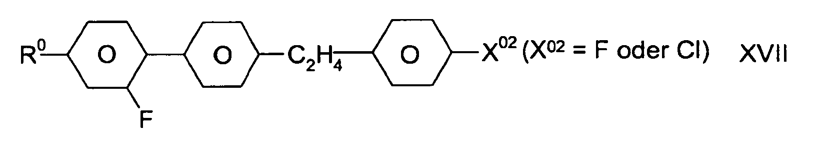 worin R⁰ und X⁰ die in Anspruch 1 angegebenen Bedeutungen haben,
enthält.

10. Flüssigkristallines Medium nach einem der Ansprüche 1 bis 9, **dadurch gekennzeichnet, dass** das Medium zusätzlich eine oder mehrere Verbindungen der Formeln XVIII und/oder XIX, 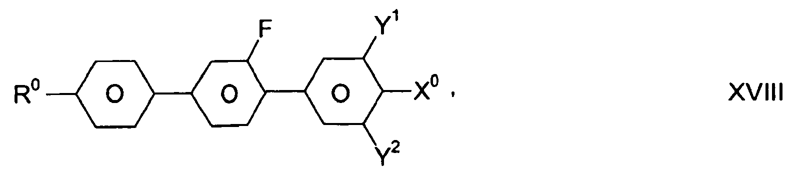 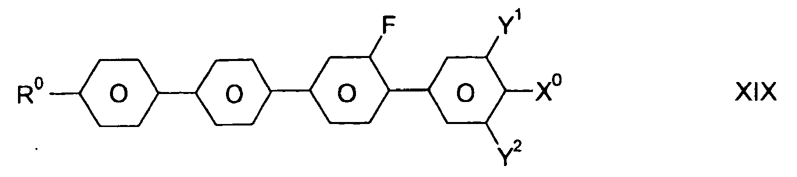 worin R⁰, X⁰, Y¹, Y² die in Anspruch 1 angegebenen Bedeutungen haben,
enthält.

11. Flüssigkristallines Medium nach einem der Ansprüche 1 bis 10, **dadurch gekennzeichnet, dass** der Anteil an Verbindungen der Formel IA im Gesamtgemisch 5 bis 40 Gew.-% beträgt.

12. Verwendung des flüssigkristallinen Mediums nach einem der Ansprüche 1 bis 11 für elektrooptische Zwecke.

13. Elektrooptische Flüssigkristallanzeige enthaltend ein flüssigkristallines Medium nach einem der Ansprüche 1 bis 11.

## Claims

1. Liquid-crystalline medium based on a mixture of polar compounds of positive dielectric anisotropy, **characterised in that** it comprises one or more compounds of the formula I 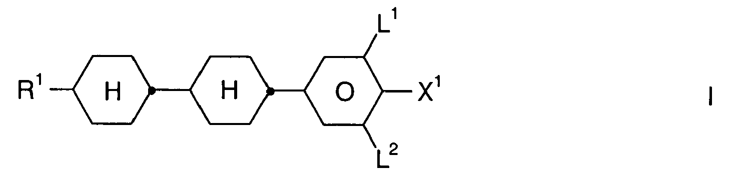 one or more compounds of the formula IA 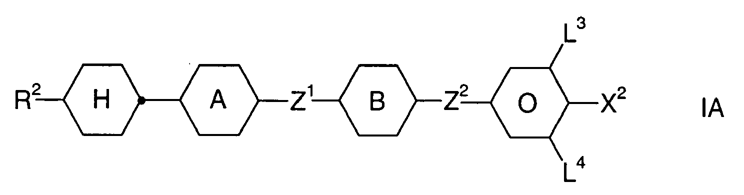 in which the individual radicals have the following meanings:
R¹ and R² each, independently of one another, denote H, a halogenated or unsubstituted alkyl radical having 1 to 15 C atoms, where one or more CH₂ groups in these radicals may also be replaced, in each case independently of one another, by -C≡C-, -CH=CH-, -O-, 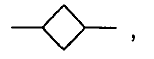 -CO-O- or -O-CO- in such a way that O atoms are not linked directly to one another,
X¹ in each case, independently of one another, denotes CN, SF₅, SCN, NCS, OCN, a halogenated alkyl radical, a halogenated alkenyl radical, a halogenated alkoxy radical or a halogenated alkenyloxy radical, each having up to 6 C atoms,
X² in each case, independently of one another, denotes F, CI, CN, SF₅, SCN, OCN, NCS, a halogenated alkyl radical, a halogenated alkenyl radical, a halogenated alkoxy radical or a halogenated alkenyloxy radical, each having up to 6 C atoms,
Z¹ and Z² each, independently of one another, denote -CF₂O-, -OCF₂- or a single bond, where Z¹ ≠ Z², 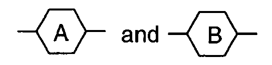 each, independently of one another, denote 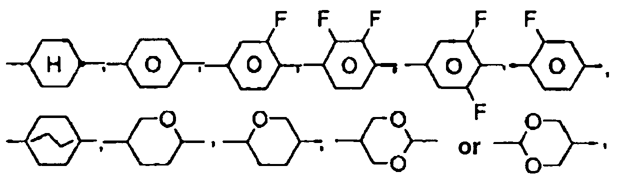
L¹⁻⁴ each, independently of one another, denote H or F,
and
one or more compounds selected from the group consisting of the general formulae II, III, IV, V and VI 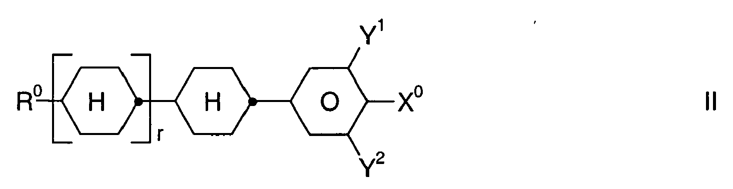 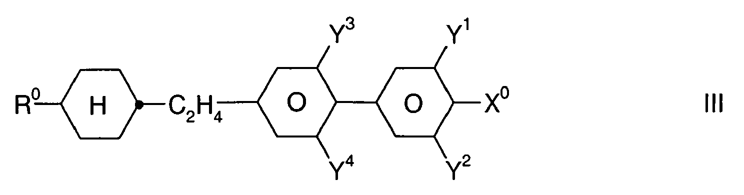 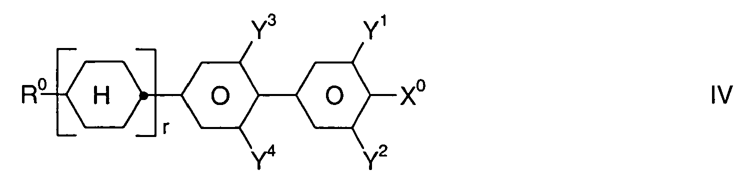 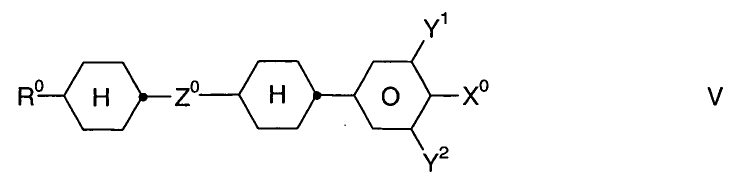 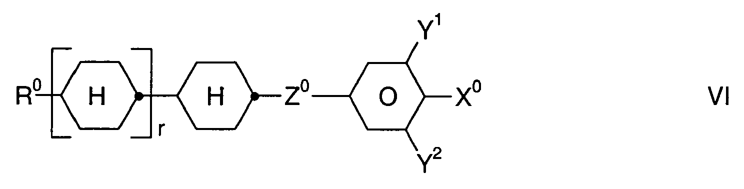 in which the individual radicals have the following meanings:
R⁰ denotes H, n-alkyl, alkoxy, oxaalkyl, fluoroalkyl or alkenyl, each having up to 9 C atoms,
X⁰ denotes F, Cl, halogenated alkyl, alkenyl or alkoxy having up to 6 C atoms,
Z° denotes -C₂F₄-, -CF=CF-, -CH=CF-, -CF=CH-, -C₂H₄-, -(CH₂)₄-, -CF₂O-, -OCF₂-, -OCH₂- or -CH₂O-,
Y¹ and Y² each, independently of one another, denote H or F,
r denotes 0 or 1, and
the compound of the formula II is not identical with the compound of the formula I, and
**in that** the proportion of compounds of the formulae IA and I to VI together in the mixture as a whole is at least 50% by weight.

2. Liquid-crystalline medium according to Claim 1, **characterised in that** it comprises one, two or more compounds of the formulae IA1-IA24 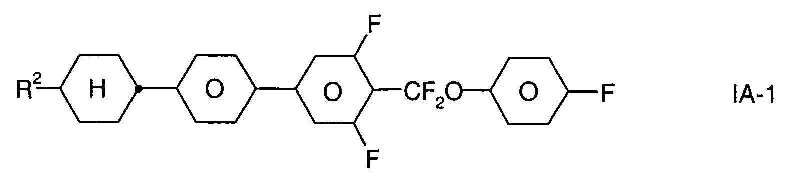 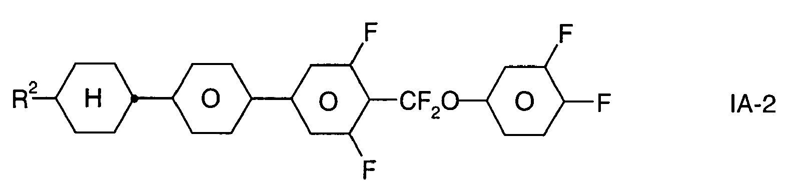 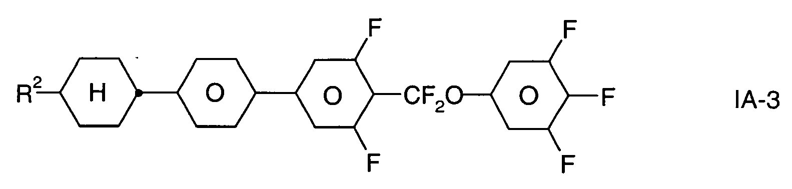 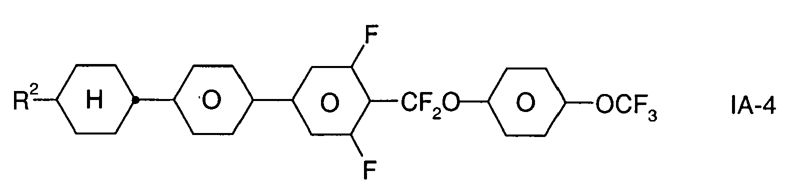 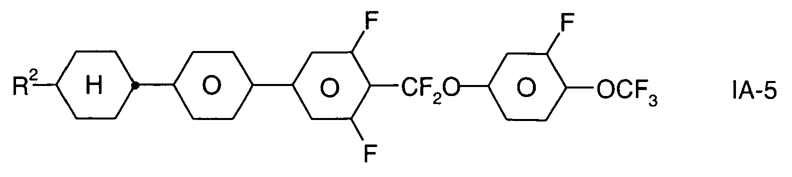 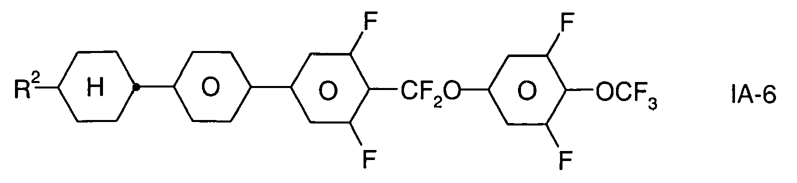 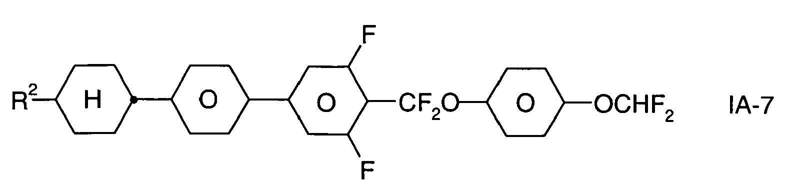 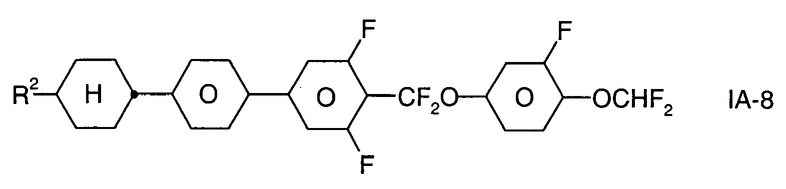 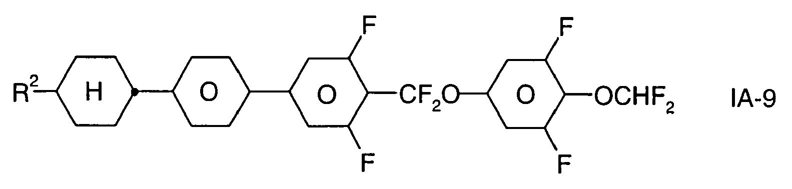 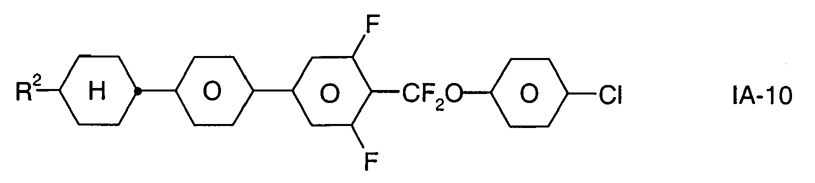 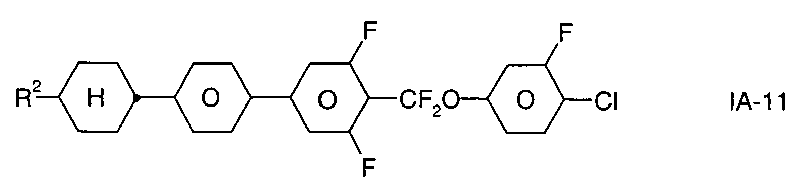 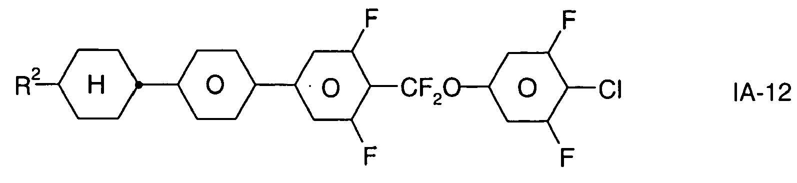 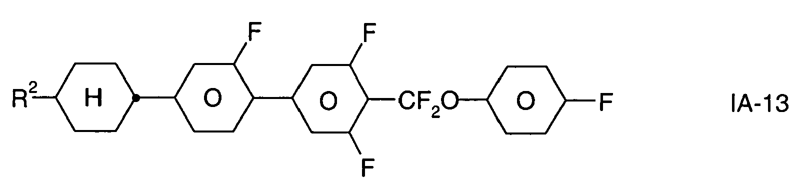 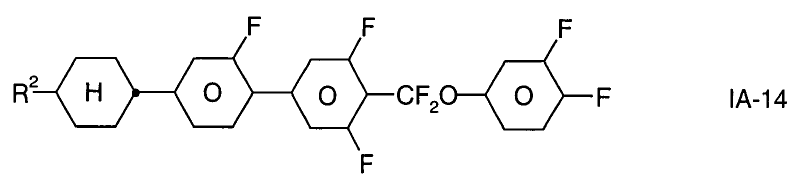 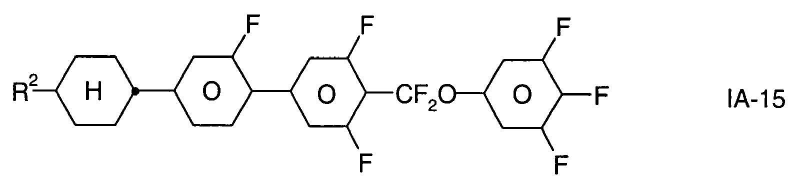 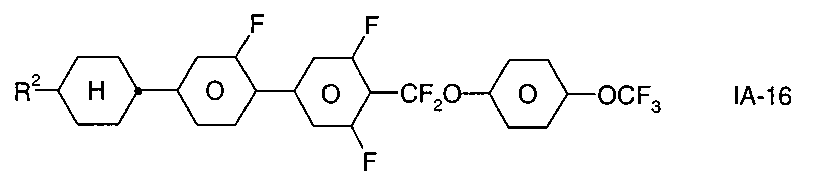 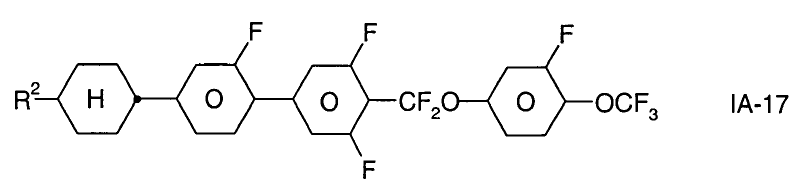 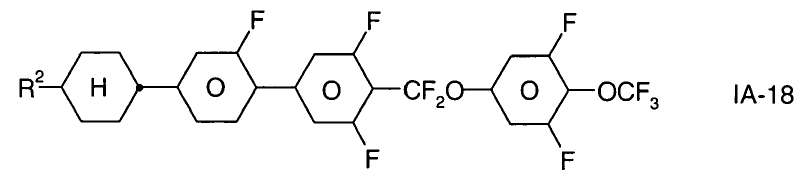 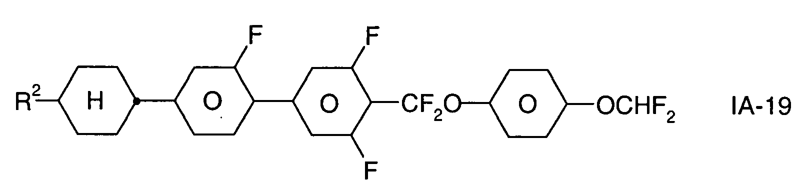 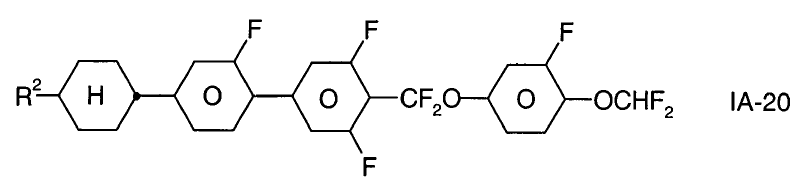 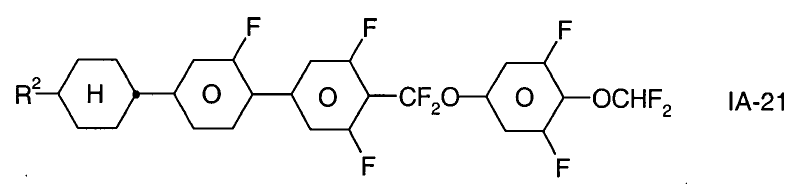 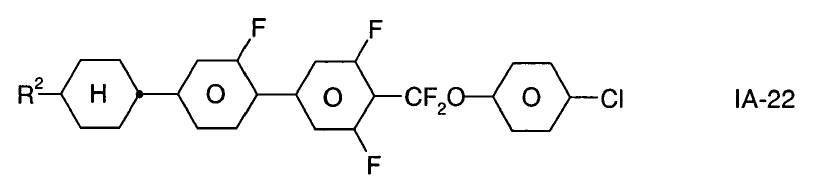 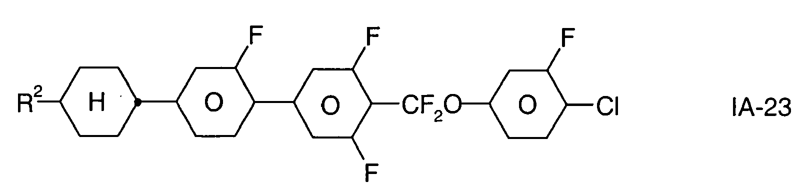 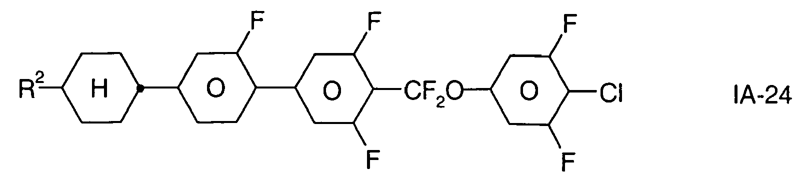 in which R² has the meaning indicated in Claim 1.

3. Liquid-crystalline medium according to Claim 1 or 2, **characterised in that** it comprises one or more compounds of the formulae I-1 to I-15 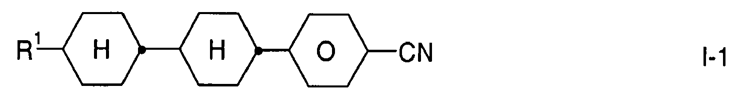 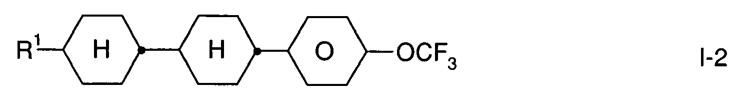 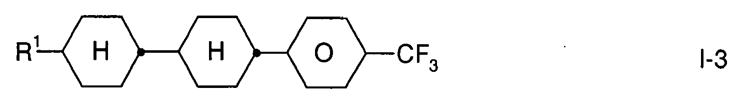 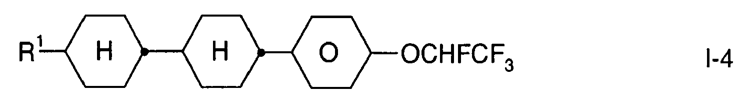 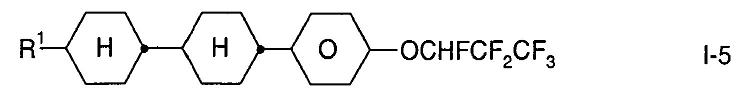 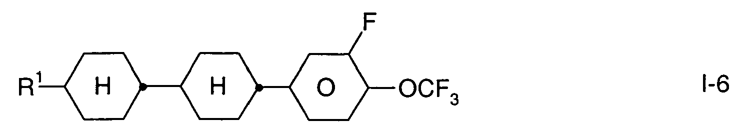 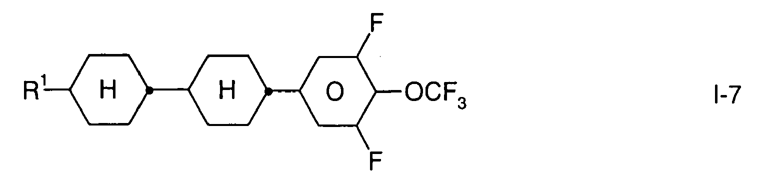 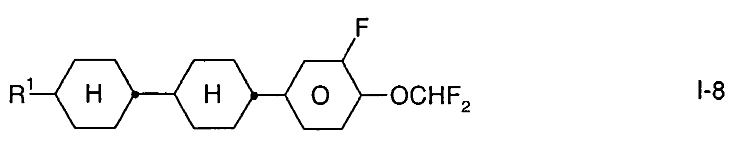 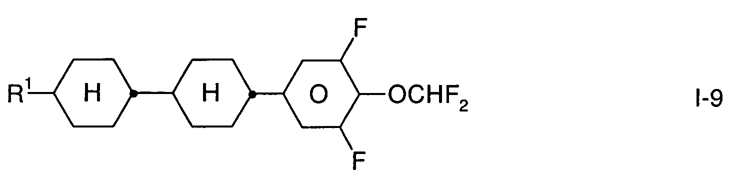 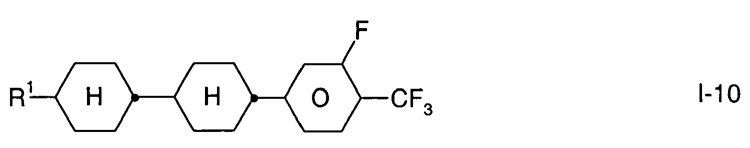 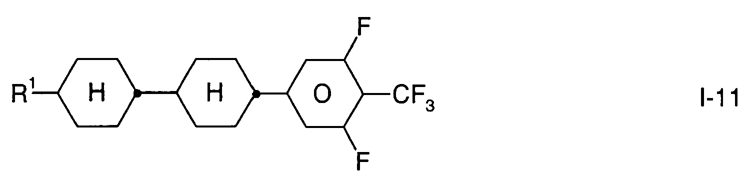 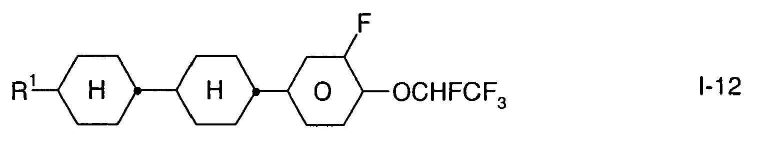 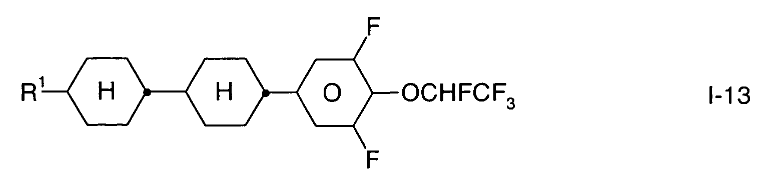 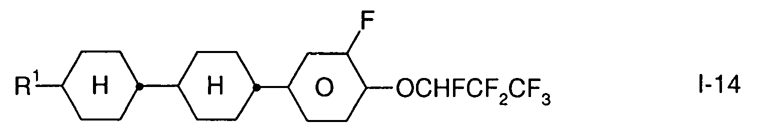 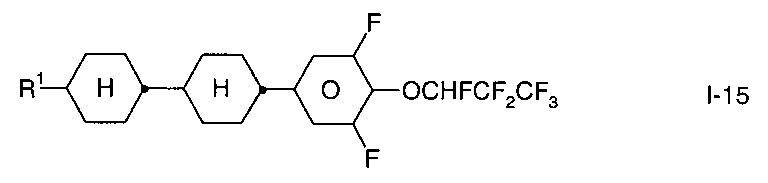 in which R¹ has the meanings indicated in Claim 1.

4. Liquid-crystalline medium according to one of Claims 1 to 3, **characterised in that** it additionally comprises one or more compounds of the formulae Ea to Ee 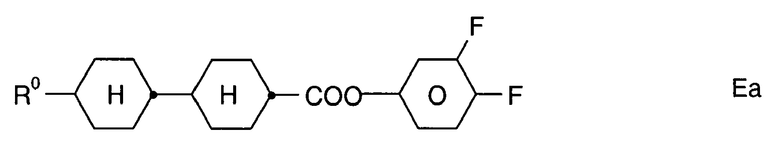 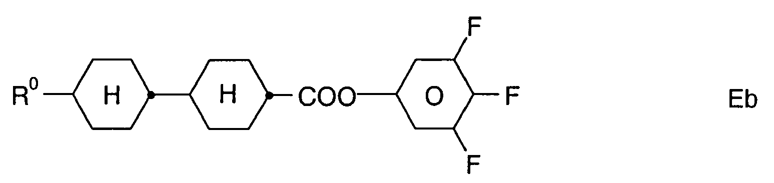 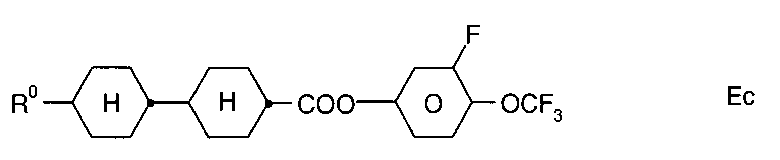 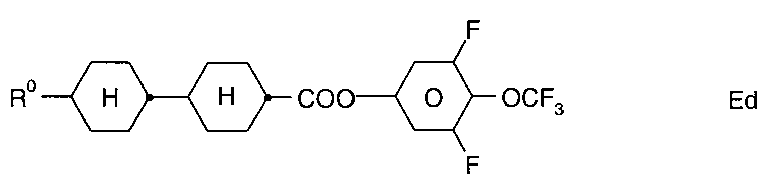 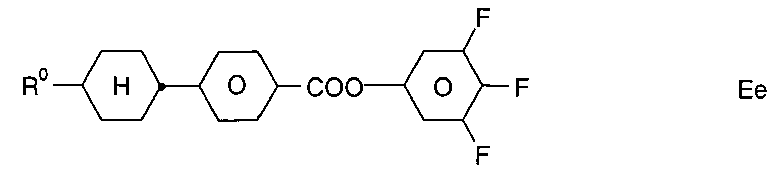 in which R⁰ has the meaning indicated in Claim 1.

5. Liquid-crystalline medium according to one of Claims 1 to 4, **characterised in that** it comprises one or more compounds of the formulae IIa to IIg 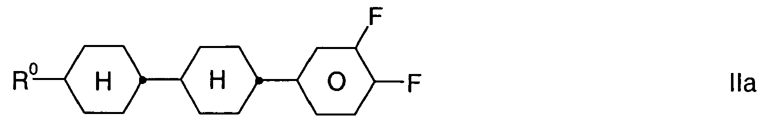 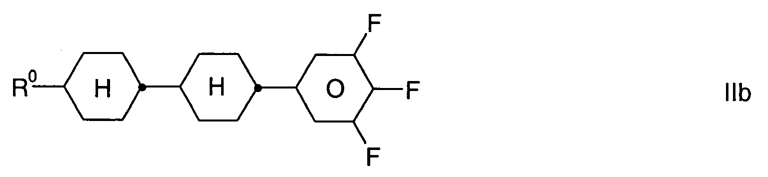 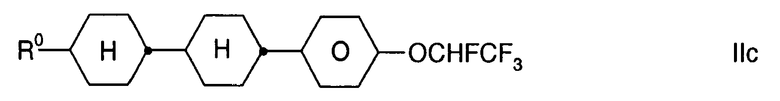 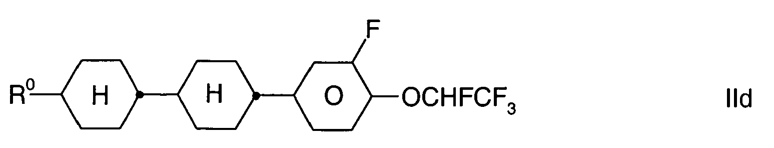 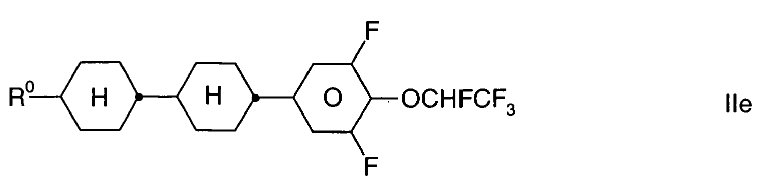 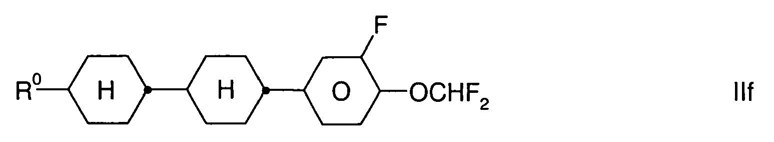 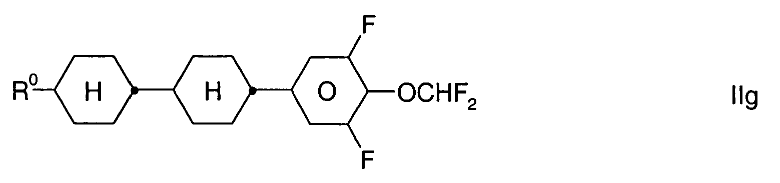 in which R⁰ has the meaning indicated in Claim 1,
with the proviso that the compounds of the formula II are not identical with the compounds of the formula I.

6. Liquid-crystalline medium according to one of Claims 1 to 5, **characterised in that** it comprises one or more compounds of the following formulae 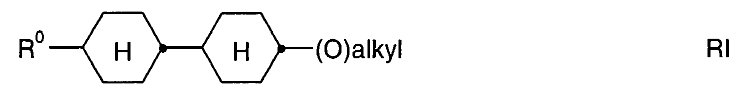 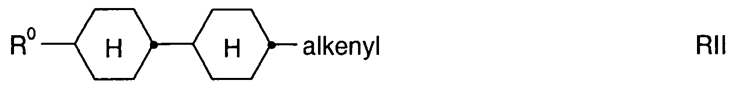 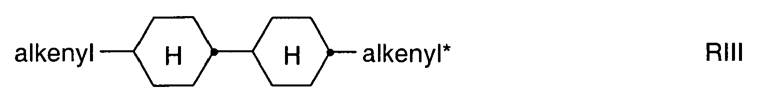 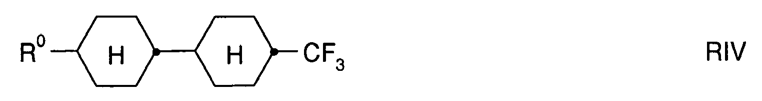 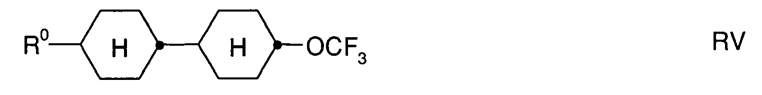 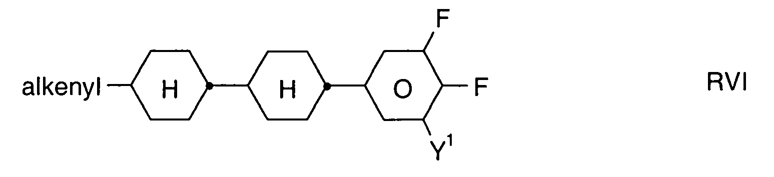 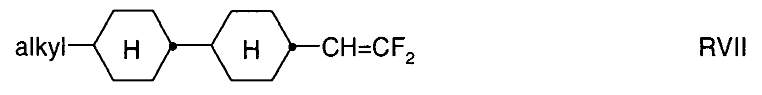 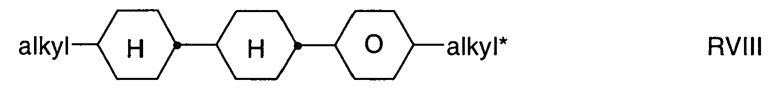 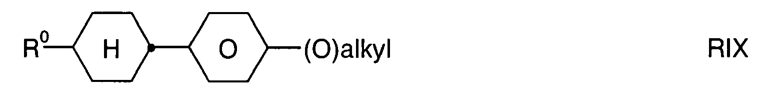 in which
R⁰ denotes n-alkyl, alkoxy, oxaalkyl, fluoroalkyl, alkenyloxy or alkenyl, each having up to 9 C atoms,
Y¹ denotes H or F,
alkyl or alkyl* in each case, independently of one another, denotes a straight-chain or branched alkyl radical having 1-9 C atoms,
alkenyl or alkenyl* in each case, independently of one another, denotes a straight-chain or branched alkenyl radical having up to 9 C atoms.

7. Liquid-crystalline medium according to one of Claims 1 to 6, **characterised in that** it additionally comprises one or more compounds selected from the group consisting of the general formulae VII to XIII 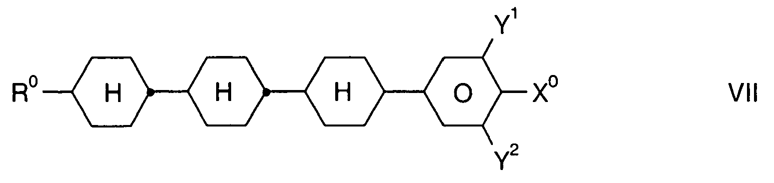 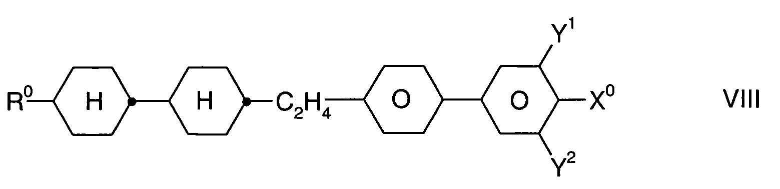 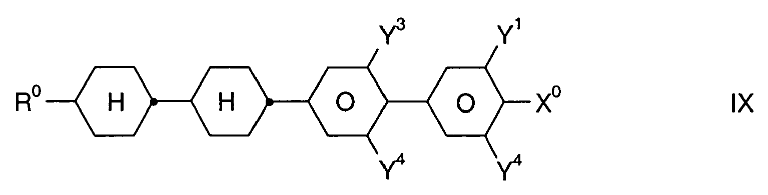 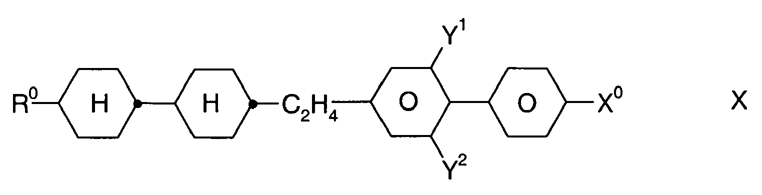 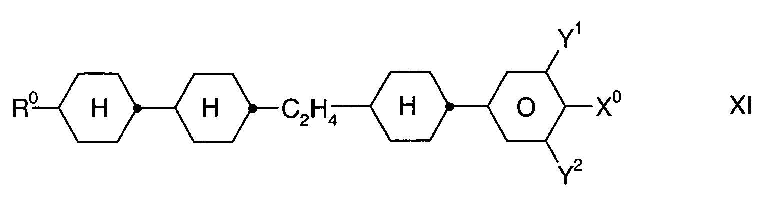 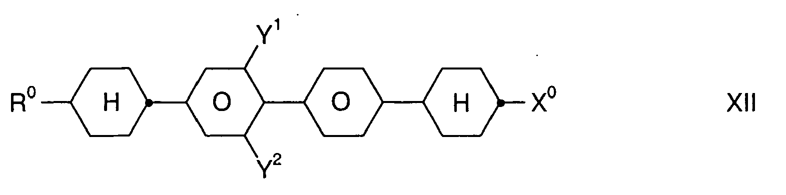 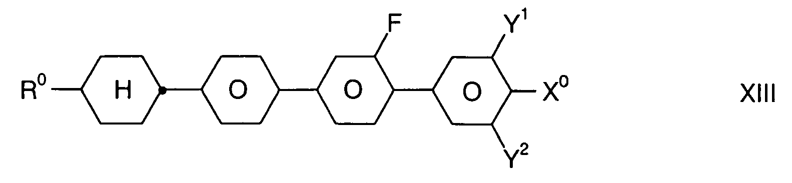 in which
R⁰, X⁰, Y¹ and Y² each, independently of one another, have one of the meanings indicated in Claim 1, and
Y³ and Y⁴ each, independently of one another, denote H or F.

8. Liquid-crystalline medium according to one of Claims 1 to 7, **characterised in that** it comprises two or three, furthermore four, homologues of the compounds selected from the group H1 to H19 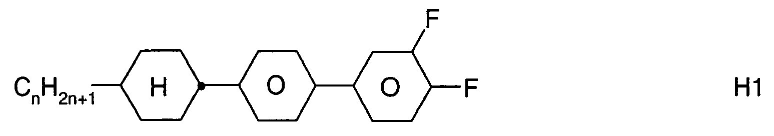 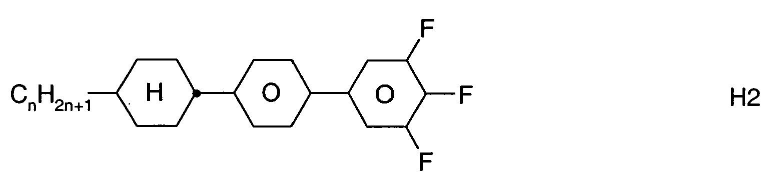 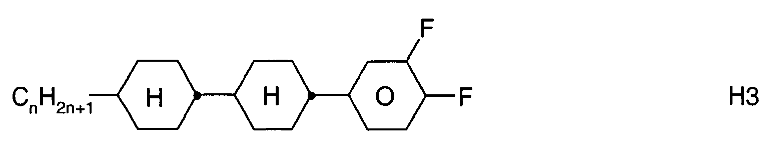 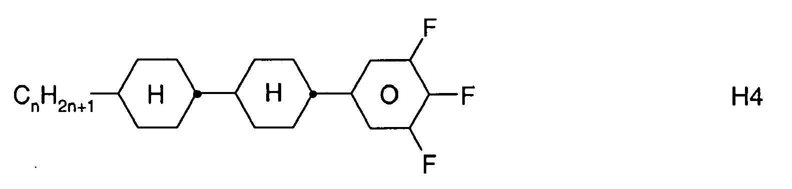 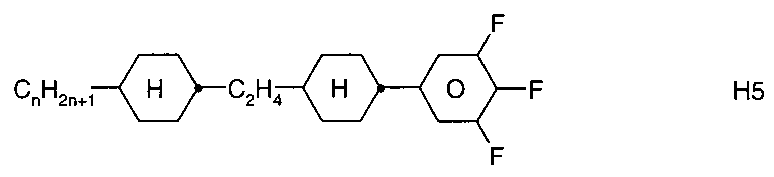 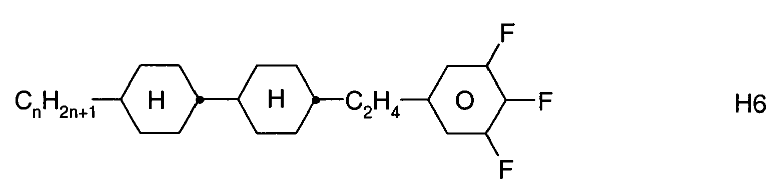 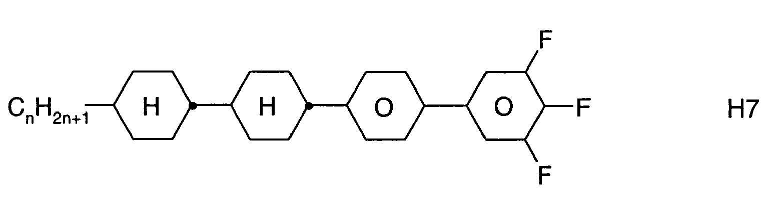 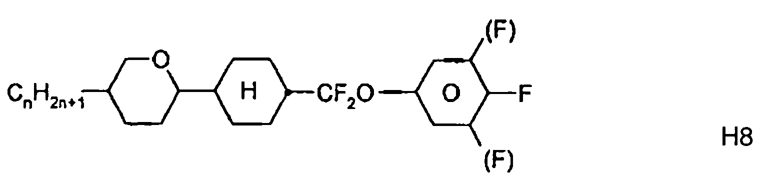 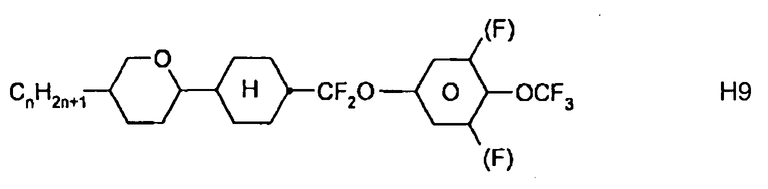 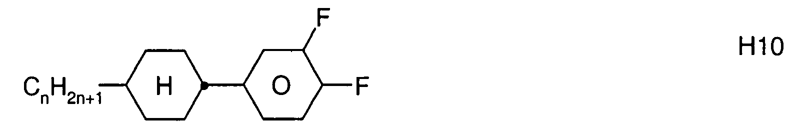 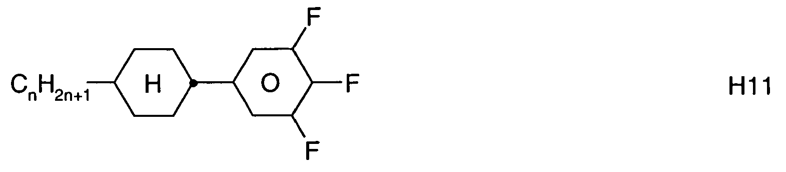 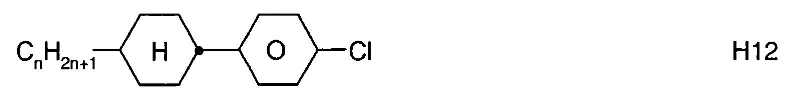 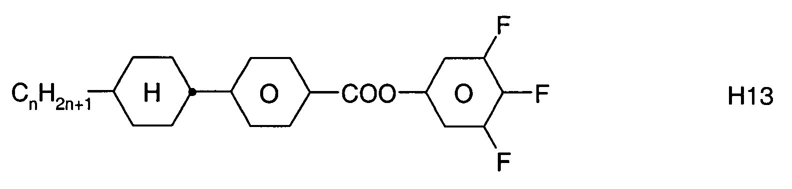 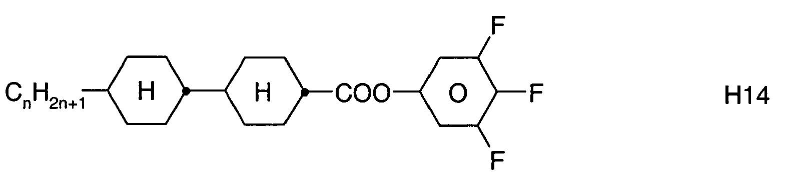 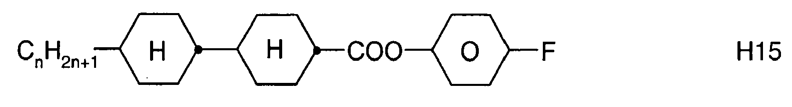 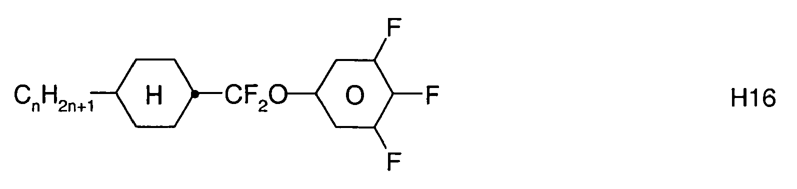 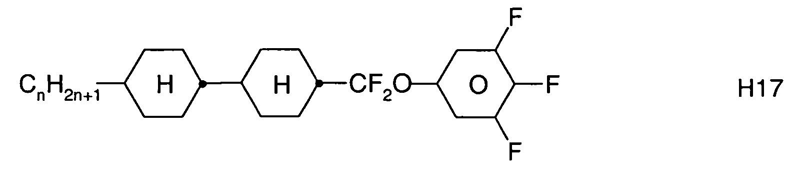 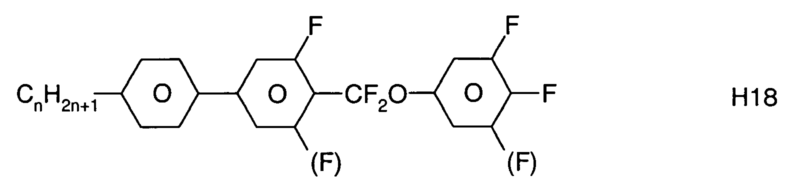 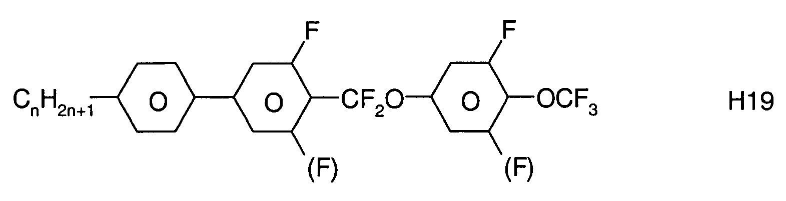 in which n denotes 1-12.

9. Liquid-crystalline medium according to one of Claims 1 to 8, **characterised in that** it comprises compounds selected from the following group consisting of the general formulae XIV to XVII 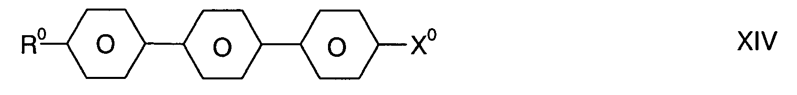 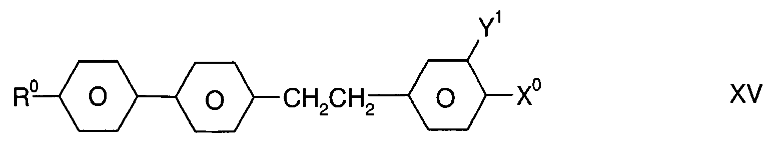 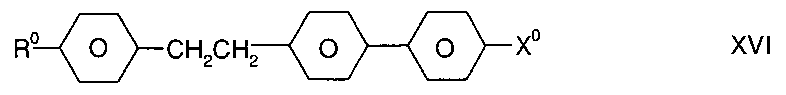 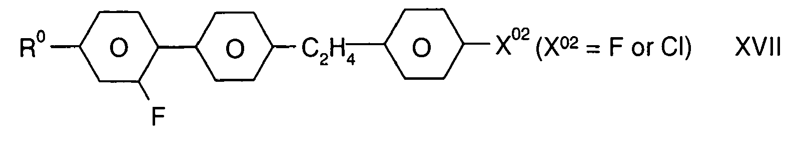 in which R⁰ and X⁰ have the meanings indicated in Claim 1.

10. Liquid-crystalline medium according to one of Claims 1 to 9, **characterised in that** the medium additionally comprises one or more compounds of the formulae XVIII and/or XIX 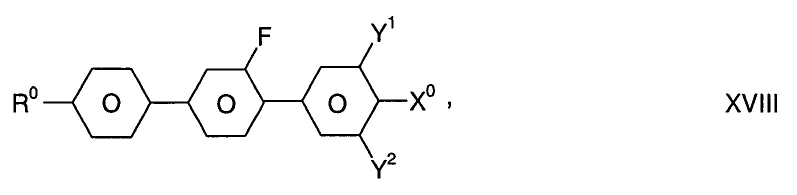 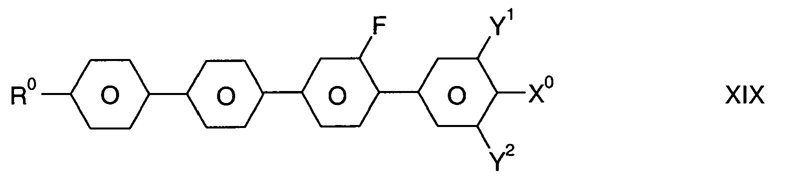 in which R⁰, X⁰, Y¹, Y² have the meanings indicated in Claim 1.

11. Liquid-crystalline medium according to one of Claims 1 to 10, **characterised in that** the proportion of compounds of the formula IA in the mixture as a whole is 5 to 40% by weight.

12. Use of the liquid-crystalline medium according to one of Claims 1 to 11 for electro-optical purposes.

13. Electro-optical liquid-crystal display containing a liquid-crystalline medium according to one of Claims 1 to 11.

## Revendications

1. Milieu cristallin liquide basé sur un mélange de composés polaires d'une anisotropie diélectrique positive, **caractérisé en ce qu'**il comprend un ou plusieurs composés de la formule I 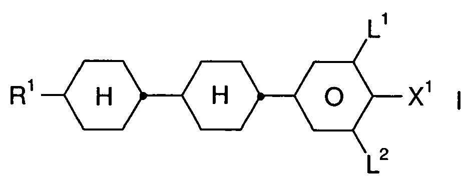 un ou plusieurs composés de la formule IA 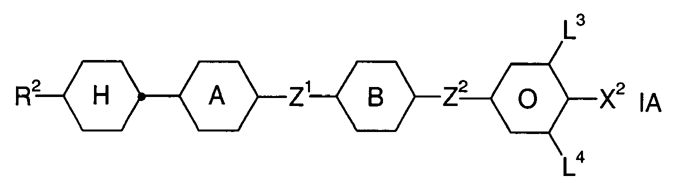 dans lesquelles les radicaux individuels présentent les significations qui suivent :
R¹ et R² chacun indépendamment l'un de l'autre, représentent H, un radical alkyle halogéné ou non substitué comportant de 1 à 15 atomes de C, où un ou plusieurs groupes CH₂ dans ces radicaux peuvent également être remplacés, dans chaque cas indépendamment les uns des autres, par -C≡C-, -CH=CH-, -O-, 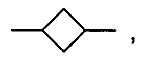 -CO-O- ou -O-CO- de telle sorte que des atomes de O ne soient pas liés directement les uns aux autres,
X¹ dans chaque cas indépendamment les uns des autres, représente CN, SF₅, SCN, NCS, OCN, un radical alkyle halogéné, un radical alkényle halogéné, un radical alkoxy halogéné ou un radical alkényloxy halogéné dont chacun comporte jusqu'à 6 atomes de C,
X² dans chaque cas indépendamment les uns des autres, représente F, Cl, CN, SF₅, SCN, OCN, NCS, un radical alkyle halogéné, un radical alkényle halogéné, un radical alkoxy halogéné ou un radical alkényloxy halogéné dont chacun comporte jusqu'à 6 atomes de C,
Z¹ et Z² chacun indépendamment l'un de l'autre, représentent -CF₂O-, -OCF₂- ou une liaison simple, où Z¹ ≠ Z², 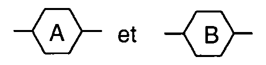 chacun indépendamment l'un de la'utre, représente 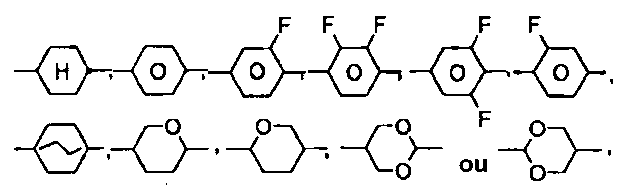
L¹⁻⁴ chacun indépendamment les uns des autres, représentent H ou F,
et
un ou plusieurs composés choisis parmi le groupe constitué par les formules générales II, III, IV, V et VI 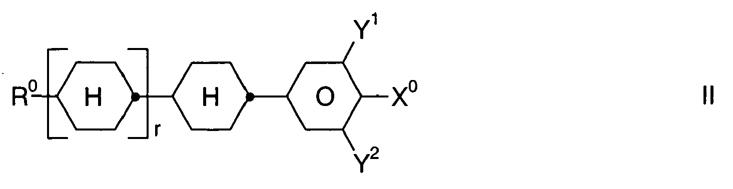 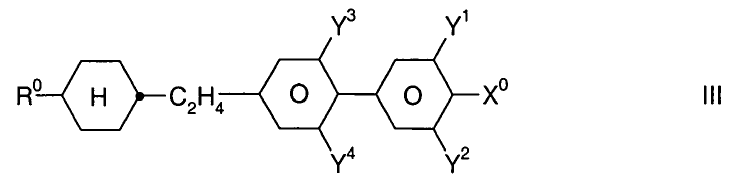 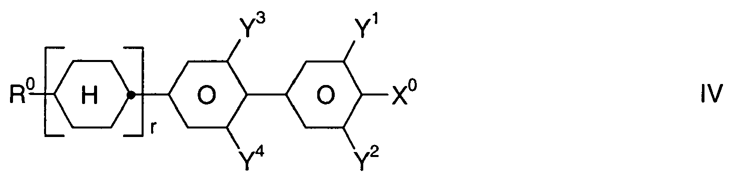 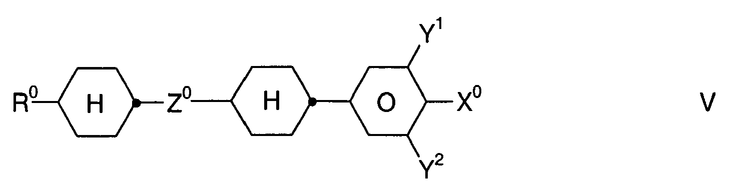 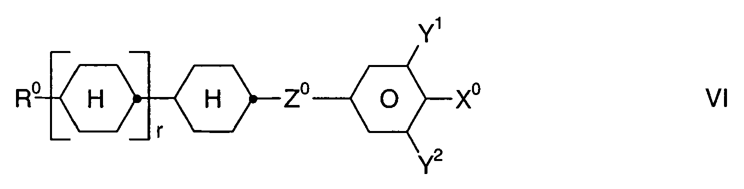 dans lesquelles les radicaux individuels présentent les significations qui suivent :
R⁰ représente H, n-alkyle, alkoxy, oxaalkyle, fluoroalkyle ou alkényle dont chacun comporte jusqu'à 9 atomes de C,
X⁰ représente F, Cl, alkyle halogéné, alkényle ou alkoxy comportant jusqu'à 6 atomes de C,
Z⁰ représente -C₂F₄-, -CF=CF-, -CH=CF-, -CF=CH-, -C₂H₄-, -(CH₂)₄-, -CF₂O-, -OCF₂-, -OCH₂- ou -CH₂O-,
Y¹ et Y² chacun indépendamment l'un de l'autre, représentent H ou F,
r représente 0 ou 1, et
le composé de la formule Il n'est pas identique au composé de la formule I, et
**en ce que** la proportion de composés des formules IA et I à VI ensemble dans le mélange pris dans sa globalité est d'au moins 50% en poids.

2. Milieu cristallin liquide selon la revendication 1, **caractérisé en ce qu'**il comprend un ou deux composés ou plus des formules IA1-IA24 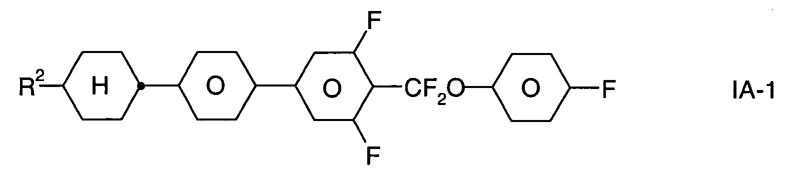 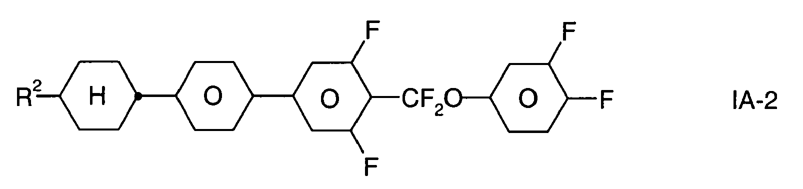 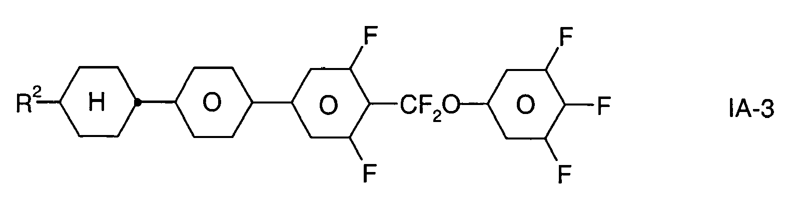 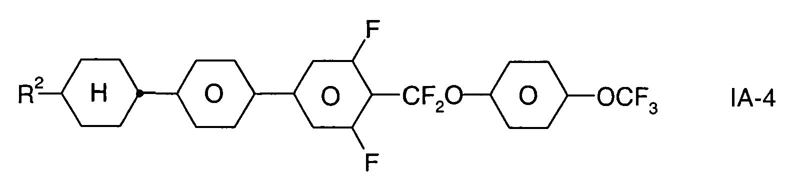 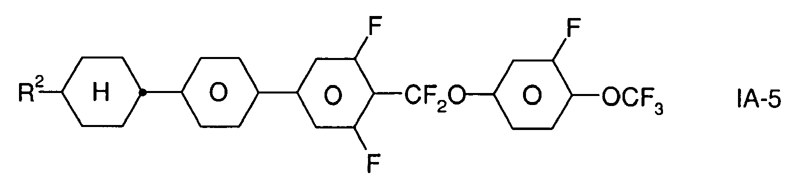 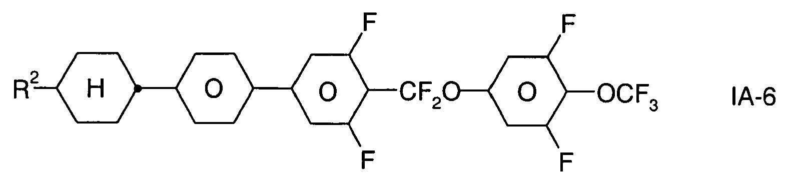 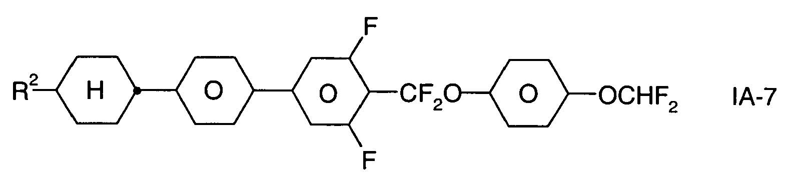 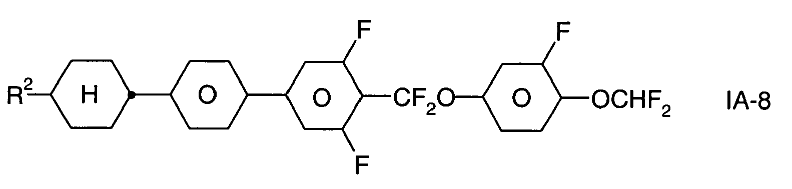 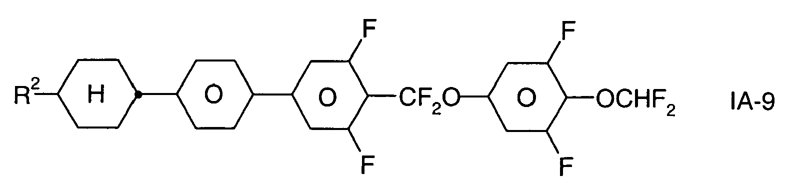 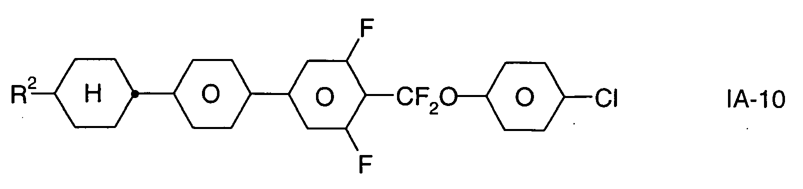 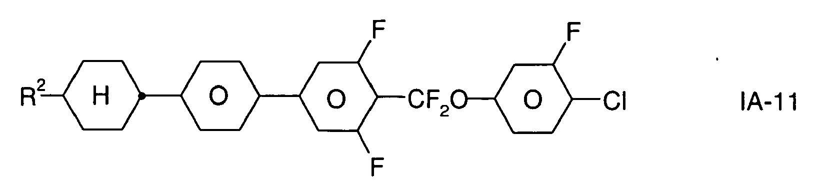 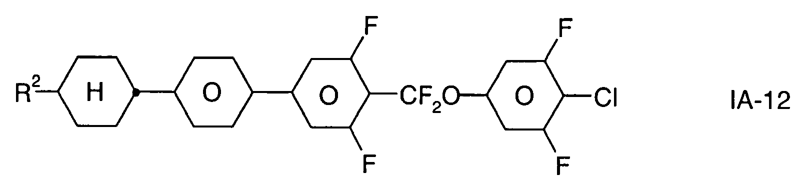 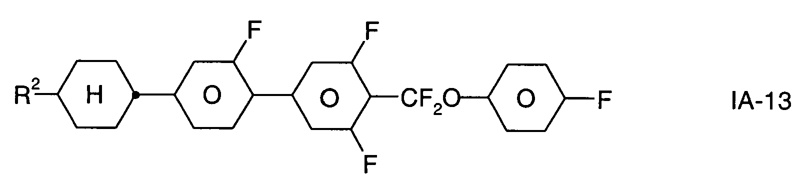 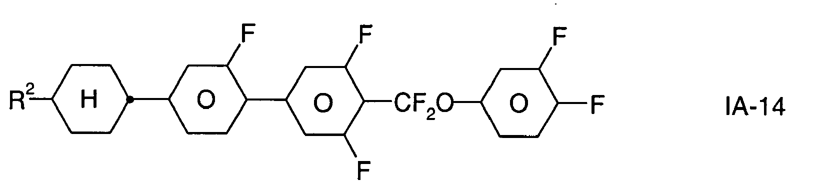 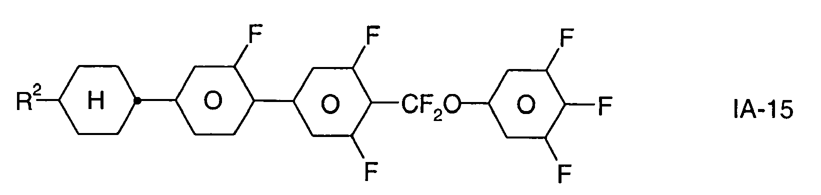 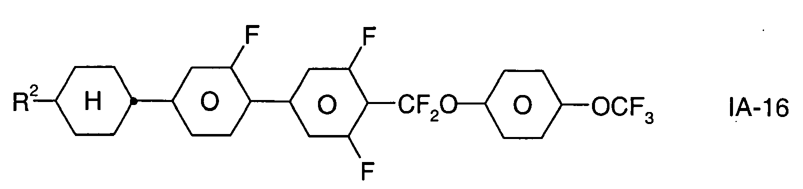 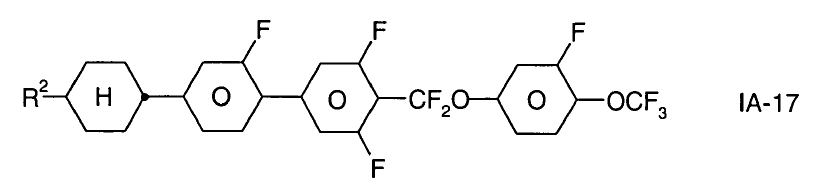 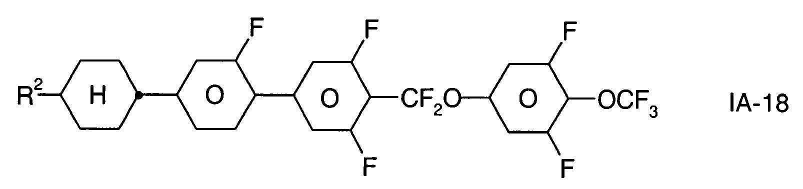 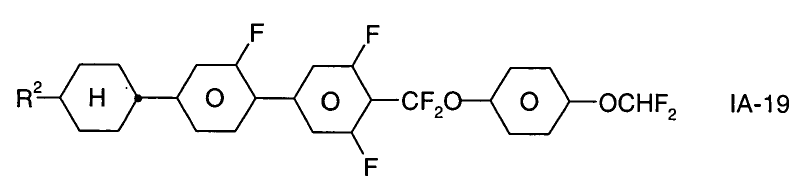 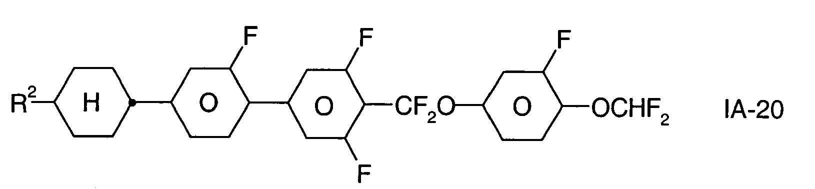 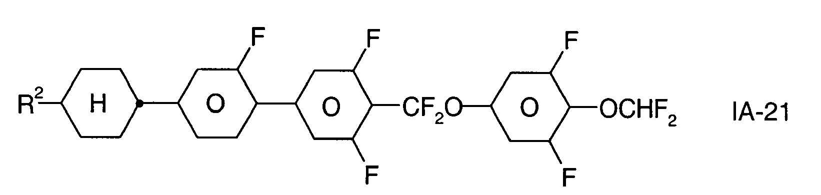 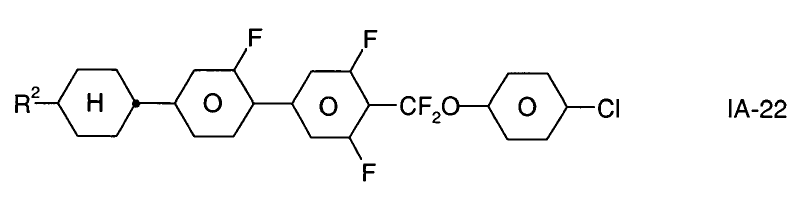 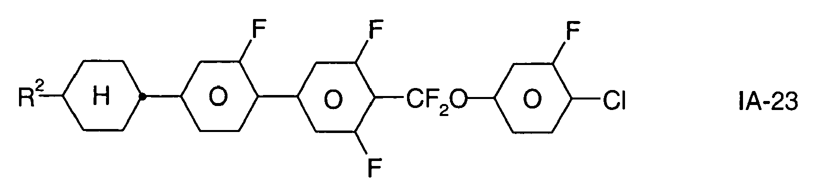 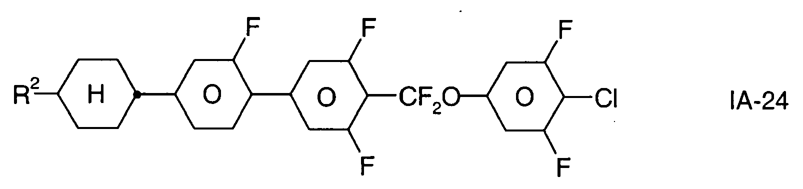 dans lesquelles R² présente la signification indiquée selon la revendication 1.

3. Milieu de cristal liquide selon la revendication 1 ou 2, **caractérisé en ce qu'**il comprend un ou plusieurs composés des formules I-1 à I-15 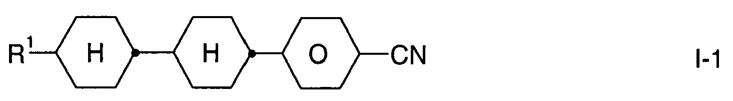 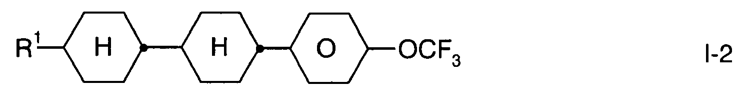 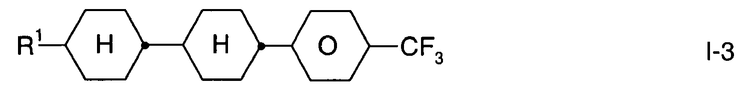 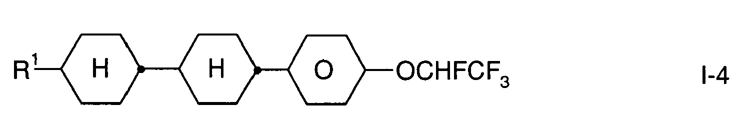 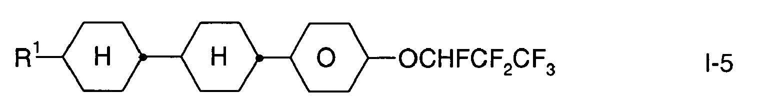 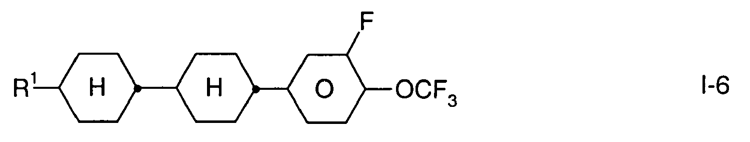 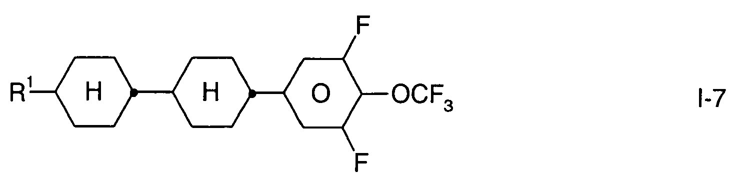 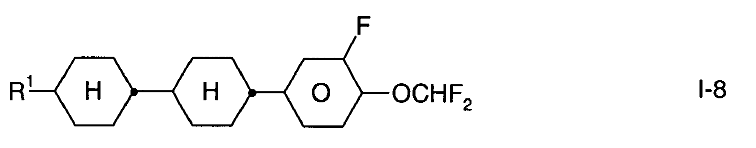 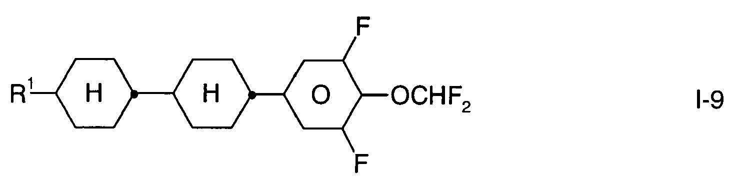 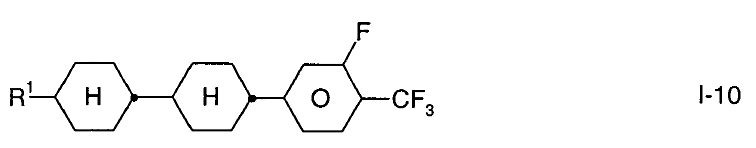 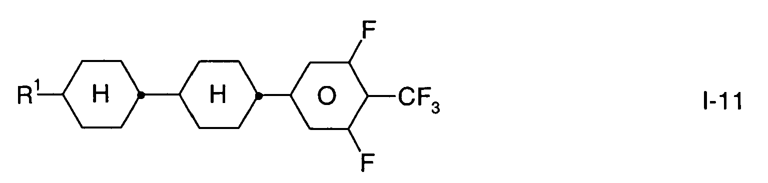 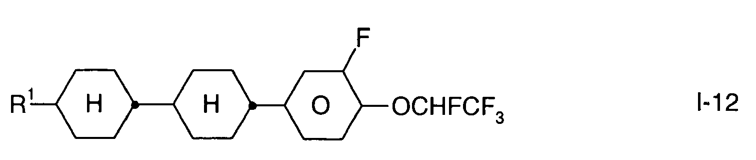 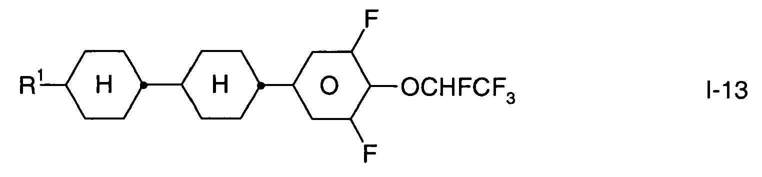 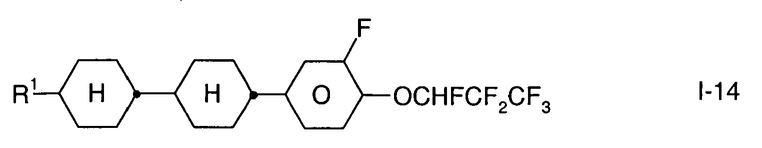 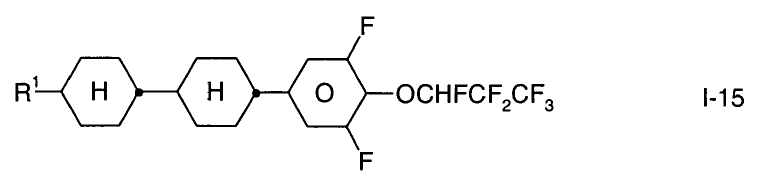 dans lesquelles R¹ présente les significations indiquées selon la revendication 1.

4. Milieu de cristal liquide selon l'une des revendications 1 à 3, **caractérisé en ce qu'**il comprend de façon additionnelle un ou plusieurs composés des formules Ea à Ee 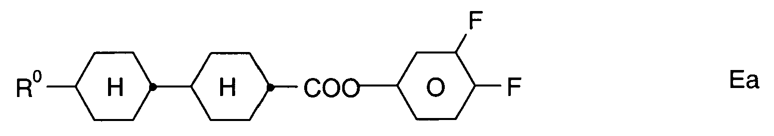 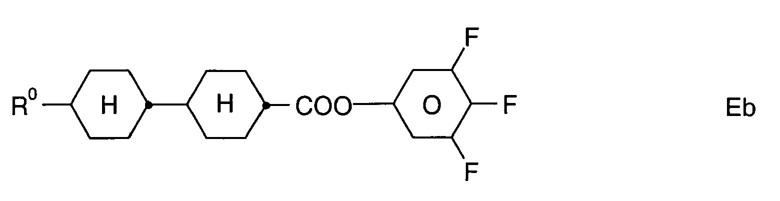 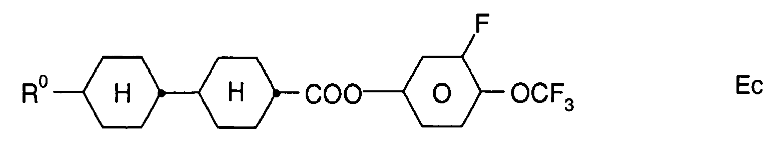 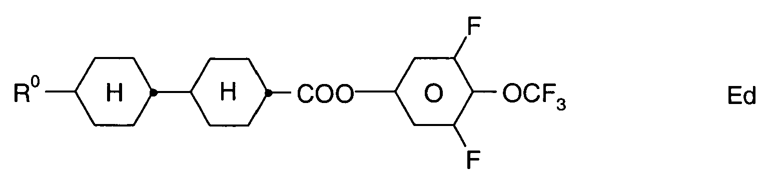 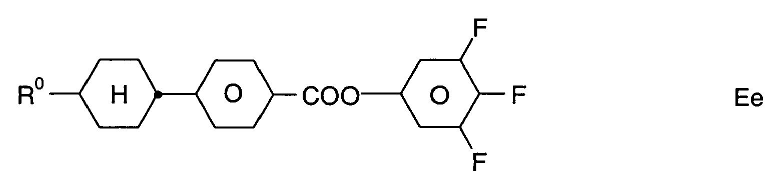 dans lesquelles R⁰ présente la signification indiquée selon la revendication 1.

5. Milieu de cristal liquide selon l'une des revendications 1 à 4, **caractérisé en ce qu'**il comprend un ou plusieurs composés des formules IIa à IIg 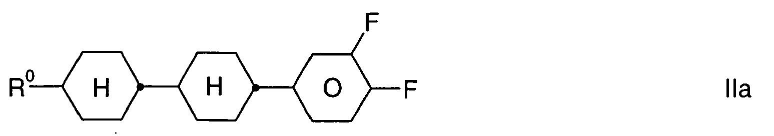 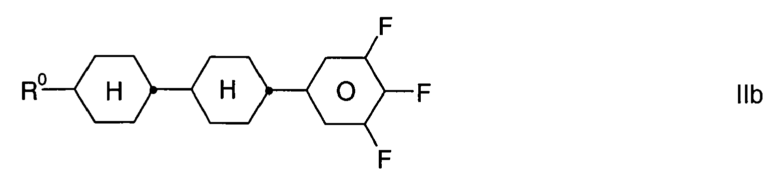 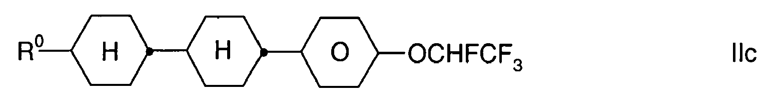 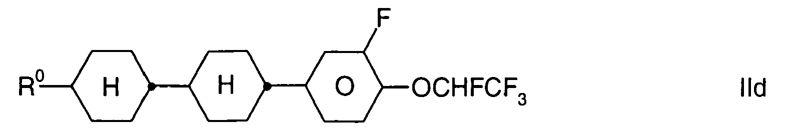 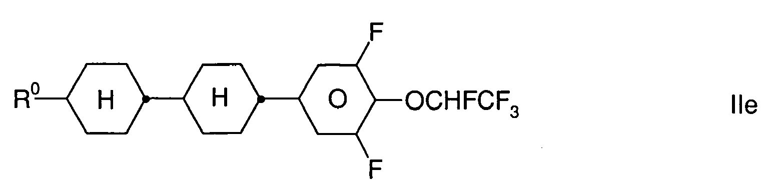 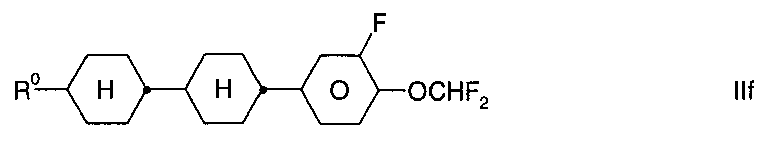 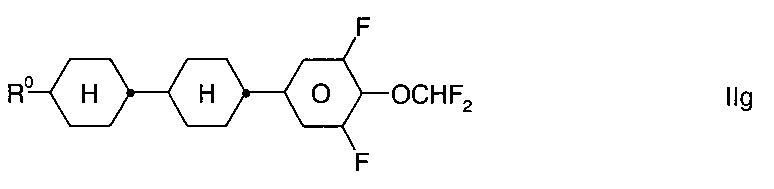 dans lesquelles R⁰ présente la signification indiquée selon la revendication 1,
étant entendu que les composés de la formule Il ne sont pas identiques aux composés de la formule I.

6. Milieu de cristal liquide selon l'une des revendications 1 à 5, **caractérisé en ce qu'**il comprend un ou plusieurs composés des formules qui suivent 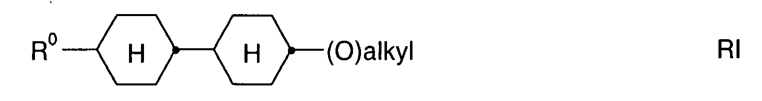 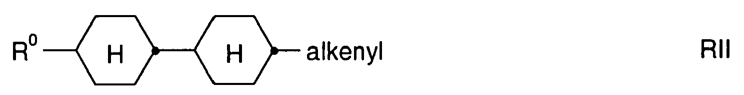 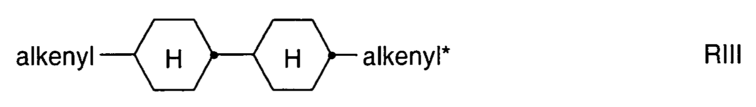 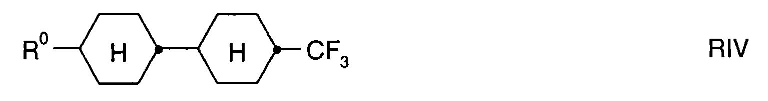 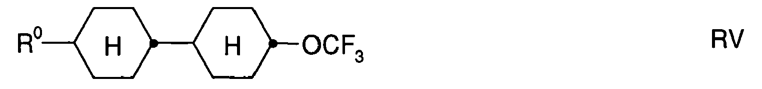 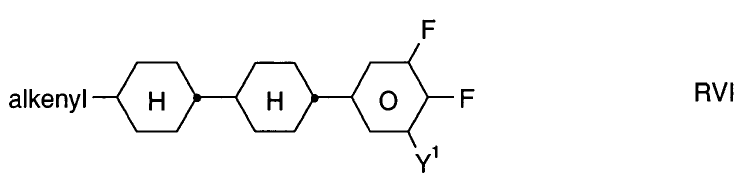 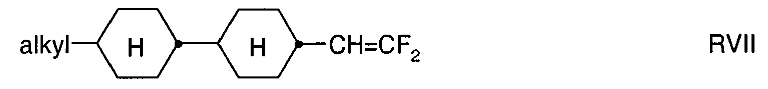 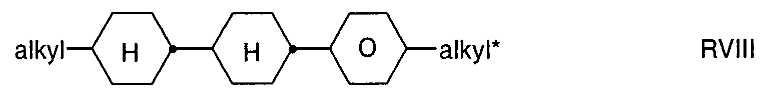 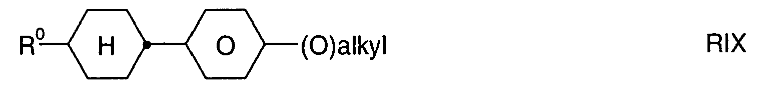 dans lesquelles
R⁰ représente n-alkyle, alkoxy, oxaalkyle, fluroroalkyle, alkényloxy ou alkényle dont chacun comporte jusqu'à 9 atomes de C,
Y¹ représente H ou F,
alkyl ou alkyl* dans chaque cas indépendamment l'un de l'autre, représentent un radical alkyle en chaîne droite ou ramifié comportant de 1 à 9 atomes de C,
alkenyl ou alkenyl* dans chaque cas indépendamment l'un de l'autre, représentent un radical alkényle en chaîne droite ou ramifié comportant jusqu'à 9 atomes de C.

7. Milieu de cristal liquide selon l'une des revendications 1 à 6, **caractérisé en ce qu'**il comprend de façon additionnelle un ou plusieurs composés choisis parmi le groupe constitué par les formules générales VII à XIII 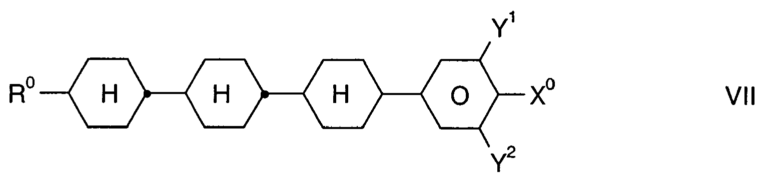 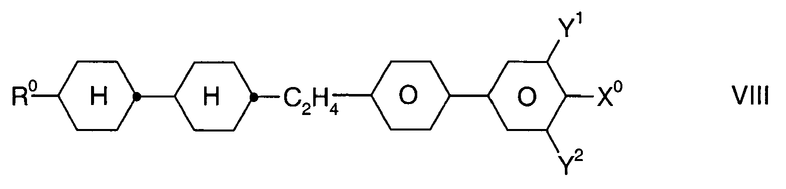 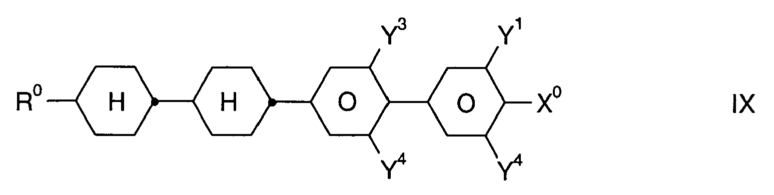 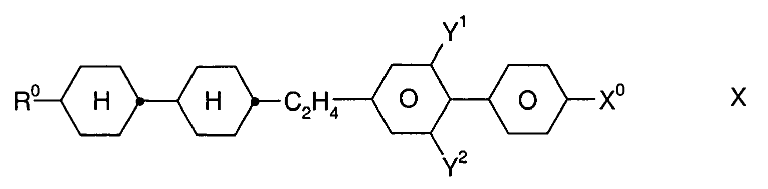 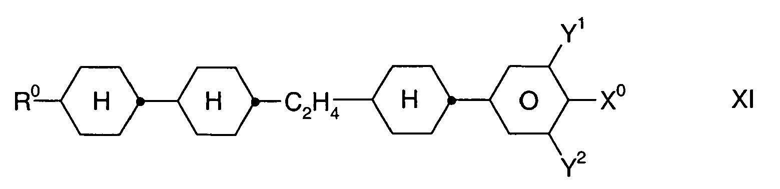 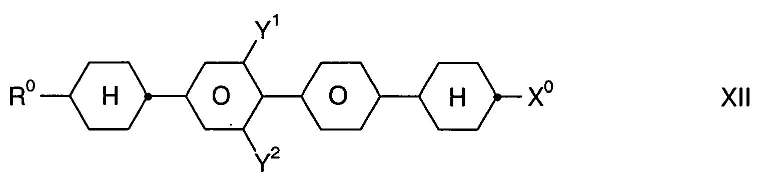 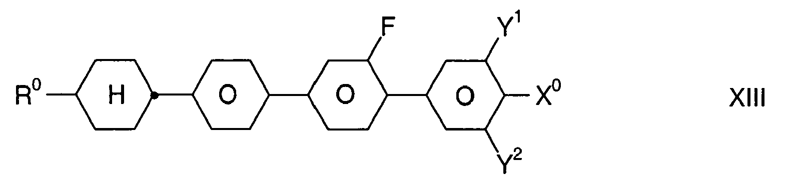 dans lesquelles
R⁰, X⁰, Y¹ et Y² chacun indépendamment les uns des autres, présentent l'une des significations indiquées selon la revendication 1 ; et
Y³ et Y⁴ chacun indépendamment de l'autre, représentent H ou F.

8. Milieu cristallin liquide selon l'une des revendications 1 à 7, **caractérisé en ce qu'**il comprend deux ou trois, en outre quatre homologues des composés choisis parmi les groupes H1 à H19 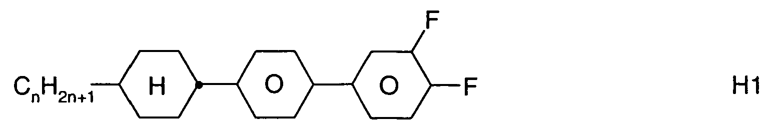 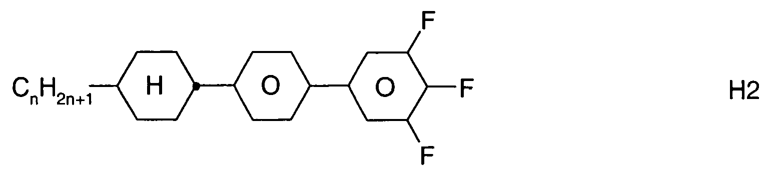 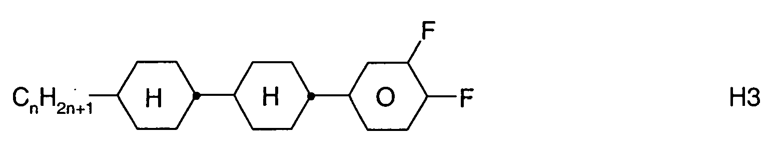 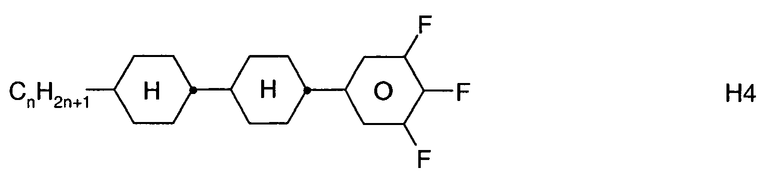 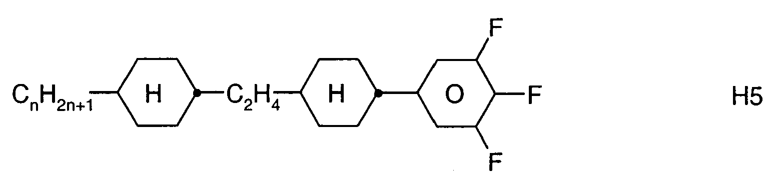 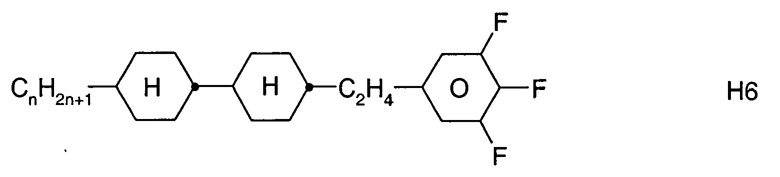 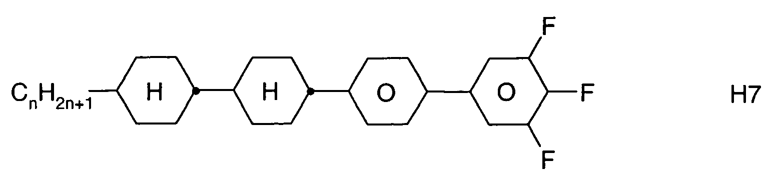 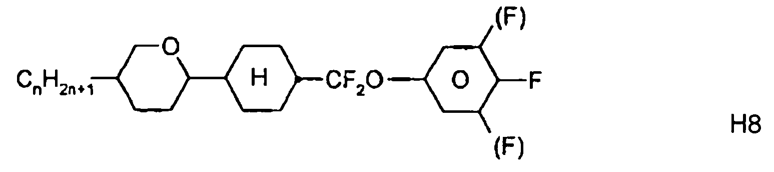 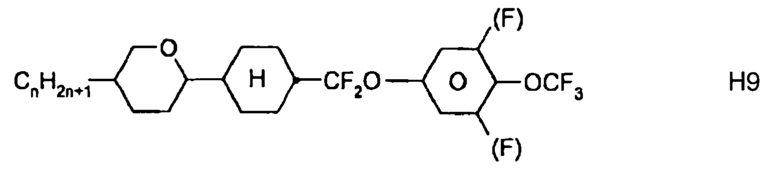 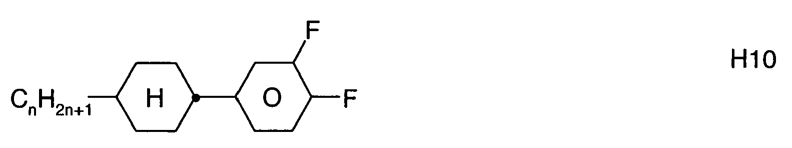 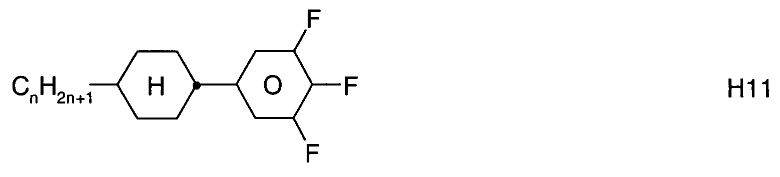 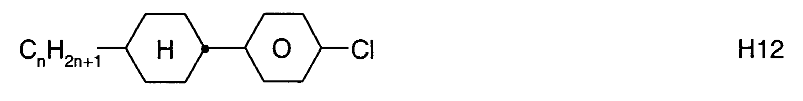 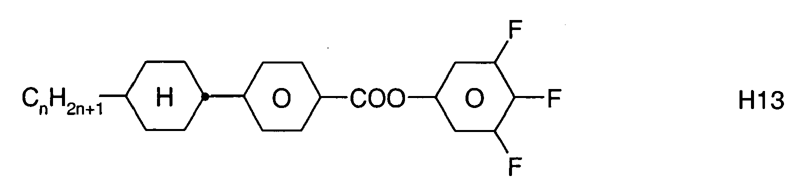 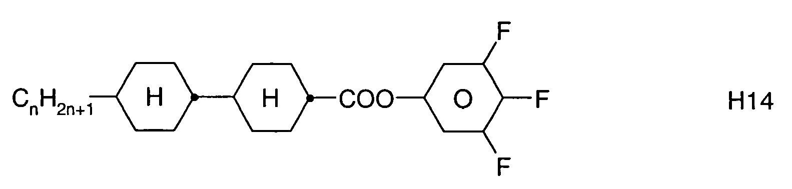 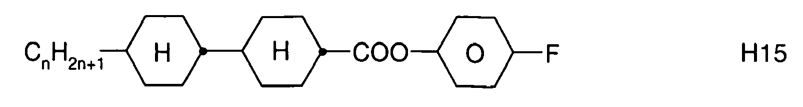 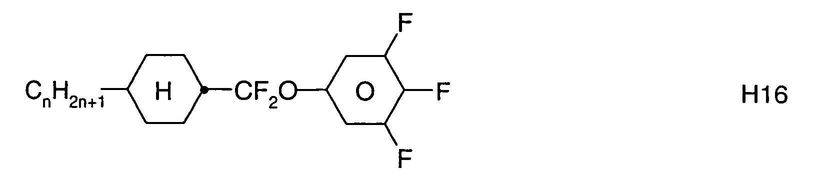 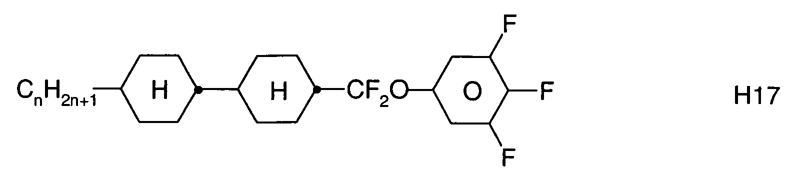 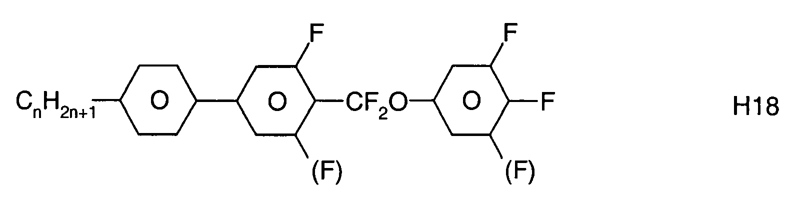 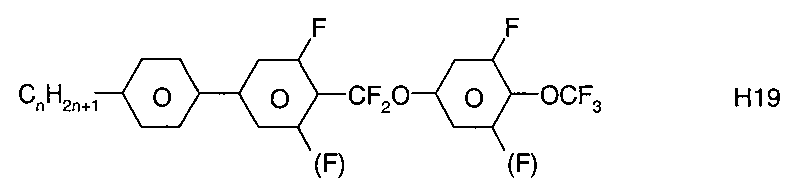 dans lesquels n représente 1-12.

9. Milieu cristallin liquide selon l'une des revendications 1 à 8, **caractérisé en ce qu'**il comprend des composés choisis parmi le groupe qui suit qui est constitué par les formules générales XIV à XVII 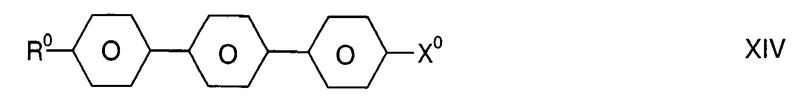 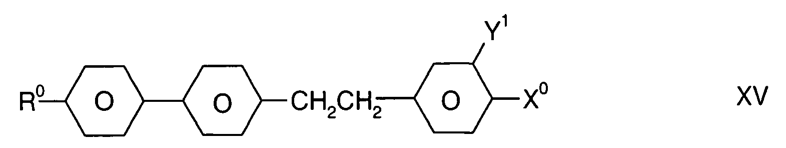 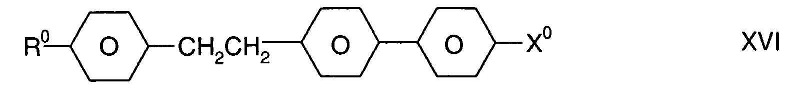 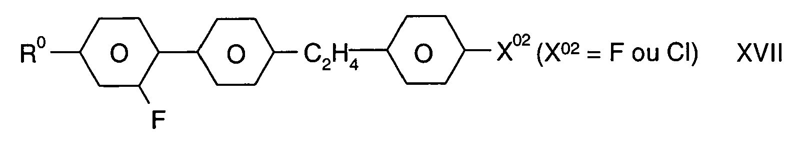 dans lesquelles R⁰ et X⁰ présentent les significations indiquées selon la revendication 1.

10. Milieu cristallin liquide selon l'une des revendications 1 à 9, **caractérisé en ce que** le milieu comprend additionnellement un ou plusieurs composés des formules XVIII et/ou XIX 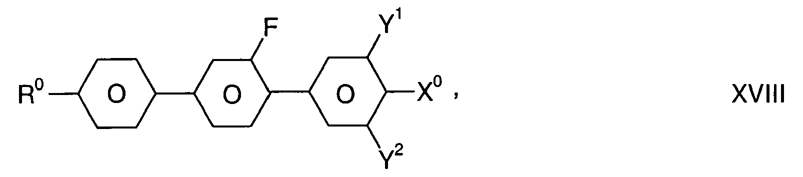 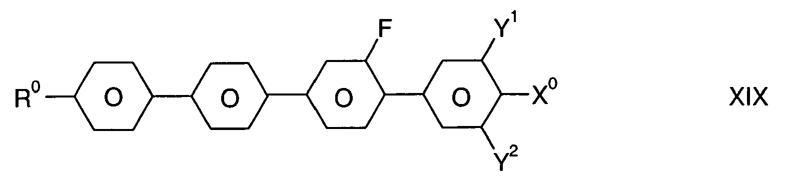 dans lesquelles R⁰, X⁰, Y¹, Y² présentent les significations indiquées selon la revendication 1.

11. Milieu cristallin liquide selon l'une des revendications 1 à 10, **caractérisé en ce que** la proportion de composés de la formule IA dans le mélange dans sa globalité est de 5 à 40% en poids.

12. Utilisation du milieu cristallin liquide selon l'une des revendications 1 à 11 à des fins électro-optiques.

13. Affichage à cristaux liquides électro-optique contenant un milieu cristallin liquide selon l'une des revendications 1 à 11.
